# EUROPÄISCHE PATENTSCHRIFT

(11) **EP 3 870 410 B1**
(45) Veröffentlichungstag und Bekanntmachung des Hinweises auf die Patenterteilung: **03.09.2025**
(21) Anmeldenummer: 19794540.5
(22) Anmeldetag: 25.10.2019
(51) Int. Cl.: B25J 11/00, B25J 9/16, B25J 19/00, B25J 15/00, B60S 5/02, B60L 53/16, B60L 53/35, B25J 19/06, H01R 13/639, B60L 53/37

(54) **VORRICHTUNG ZUM AUTOMATISIERTEN LADEN EINES FAHRZEUGS, INSBESONDERE ELEKTROFAHRZEUGS**
DEVICE FOR AUTOMATICALLY CHARGING A VEHICLE, IN PARTICULAR AN ELECTRIC VEHICLE
DISPOSITIF DE CHARGE AUTOMATIQUE D'UN VÉHICULE, NOTAMMENT D'UN VÉHICULE ÉLECTRIQUE

(30) Priorität: 26.10.2018 DE 202018004968 U; 13.02.2019 DE 202019000698 U; 02.04.2019 DE 202019001497 U
(43) Veröffentlichungstag der Anmeldung: 01.09.2021
(73) Patentinhaber: KUKA Deutschland GmbH, 86165 Augsburg (DE)
(72) Erfinder: HOENE, Albrecht, 86165 Augsburg (DE); NITZ, Gernot, 86368 Gersthofen (DE); SETTELE, Norbert, 86574 Petersdorf-Wilprechtszell (DE); SCHULZE, Günther, 86157 Augsburg (DE)
(74) Vertreter: Oelke, Jochen
(86) Internationale Anmeldenummer: PCT/EP2019/079160
(87) Internationale Veröffentlichungsnummer: WO 2020/084111

(56) Entgegenhaltungen:
- WO-A1-2017/216458
- WO-A2-2012/013181
- CN-A- 108 155 700
- CN-A- 108 232 794
- CN-A- 108 473 068
- DE-A1- 102016 014 463
- US-A1- 2009 079 388
- US-A1- 2019 232 809
- US-A1- 2019 312 381

## Beschreibung

Die Erfindung betrifft eine Vorrichtung zum automatisierten Laden eines Fahrzeugs, insbesondere Elektrofahrzeugs sowie einen zugehörigen Ladestecker eines Fahrzeugs, insbesondere Elektrofahrzeugs.

Übliche Kraftfahrzeuge verfügen im Allgemeinen über einen Verbrennungsmotor oder Brennstoffzellen als Antrieb. Deren Verbrennungsmotoren bzw. Brennstoffzellen verbrauchen generell flüssige oder gasförmige Brennstoffe d.h. Treibstoffe, die in einen Tank des Fahrzeugs nachgefüllt werden können. Ein solches Nachfüllen erfolgt durch Tanken an einer Zapfsäule einer Tankstelle. Die Zapfsäule bildet insoweit eine Vorrichtung zum Laden d.h. zum Auftanken des Kraftfahrzeugs mit dem flüssigen oder gasförmigen Treibstoff.

Neuere Fahrzeugarten, wie Elektrofahrzeuge verfügen über einen elektrischen Hauptantrieb oder einem elektrischen Hilfsantrieb im Falle von Hybridmotoren, und einen elektrischen Speicher, wie einen Akkumulator oder eine Batterie, die aufgeladen werden muss. Ein solches elektrisches Laden erfolgt im Allgemeinen in einer Weise analog zum Betanken eines Kraftfahrzeugs mit Verbrennungsmotor. Insoweit wird der Begriff "Tanken" und "Laden" oft synonym verwendet.

Batteriegetriebene Elektrofahrzeuge können mittels eines Ladesteckers einer Ladevorrichtung mit elektrischer Energie "betankt" werden. Das Stecken des Ladesteckers, der insoweit wie eine Zapfpistole an einer Tanksäule funktioniert, kann automatisiert durch einen Roboter erfolgen, beispielsweise in einem Parkhaus. Von einem Roboter geht potentiell jedoch eine Gefährdung von im Umfeld befindlichen Personen aus. Zum sicheren Betrieb einer automatisierten Ladestation für Elektrofahrzeuge muss diese Gefährdung ausgeschlossen sein. Bisherige robotische Ladestationen weisen hierzu eine vielfältige Sicherheitstechnik auf, wie z.B. eine Überwachung des Arbeitsraumes des Roboters mit Kameras oder anderen Sensoren. Sicherheitsüberwachungen sind auf sichere Steuerungen angewiesen, auf sichere Kommunikation, auf eine sichere Drehmoment-Abschaltung (Safe Torque Off) oder auch eine sichere Steuerung von Bremsen (Safe Brake Control). Dies ist jedoch mit entsprechend hohen Kosten verbunden.

In der Robotik kann man auch inhärent sichere Systeme, die sich von nicht inhärent sicheren Systemen darin unterscheiden, dass inhärent sichere Roboter, derart ausgelegt sind, beispielsweise bezüglich der aufbringbaren Kräfte, dass sie in keinem Fall einen Menschen verletzen können. Nicht inhärent sichere Roboter müssen mit den oben genannten Sicherheitsfunktionen, insbesondere aufgrund DIN EN ISO 10218-1:2012-01 beispielsweise mit einem Performance Level d und Kategorie 3 gemäß ISO 13849-1:2006, 4.5.1 ausgeführt werden. Jedoch können inhärent sichere Roboter kaum Kraft aufbringen, weshalb ihre Einsatzmöglichkeiten sehr beschränkt sind, brauchen aber vorteilhafterweise keine zertifizierten Sicherheitsfunktionen. Die Druckschrift CN 108 473 068 A1 offenbart eine automatische Ladestation, die der Erfindung am nächsten kommt.

Aufgabe der Erfindung ist es, einen Roboter zum Laden oder Betanken eines Fahrzeugs bereitzustellen, welcher technisch einfach ausgeführt, kostengünstig und materialsparend herstellbar sowie inhärent sicher ausgeführt ist, so dass Menschen durch das Betreiben des Roboters nicht gefährdet sind.

Die Aufgabe wird durch einen Roboter mit den Merkmalen des unabhängigen Anspruchs 1 gelöst. Weitere vorteilhafte Ausführungsformen sind in den abhängigen Ansprüchen definiert.

Ein Aspekt der Erfindung betrifft einen Roboter zum automatischen Laden oder Betanken eines Fahrzeugs, aufweisend:
- einen Roboterarm;
- einen an dem Roboterarm angeordneten Endeffektor und
- einen am Endeffektor angeordneten Verbinder,
   wobei der Roboterarm mehrere Glieder aufweist, die miteinander über ein oder mehrere Positioniergelenke und zugeordnete Positionierantriebe relativ zueinander verstellbar sind, um den Endeffektor unter Aufbringung einer maximalen Positionierkraft im Raum zu positionieren,

wobei der Roboterarm ein oder mehrere Schubgelenke, und insbesondere zugeordnete Schubantriebe, aufweist,
wobei der Verbinder zumindest bereichsweise in einen komplementären Verbinder eines Fahrzeugs unter Aufbringung einer maximalen Steckkraft steckbar ist, wobei die maximale Steckkraft größer ist als die maximale Positionierkraft,
wobei die Glieder miteinander über ein oder mehrere Positioniergelenke und zugeordnete Positionierantriebe relativ zueinander verstellbar sind,
wobei einer des zumindest einen Schubantriebs von demjenigen Motor des Roboterarms gebildet wird, der das am distalen Ende des Roboterarms letzte Gelenk bewegt,
wobei der Roboter ausgelegt und konfiguriert ist, den Roboterarm mittels der Positionierantriebe von einer Parkposition in eine Steckvorposition zu verfahren und den Roboterarm mittels des Schubantriebs (304) oder der Schubantriebe von der Steckvorposition in eine Steckendposition zu verfahren.
wobei ein den Verbinder verstellbar tragender Halter mit dem am distalen Ende vorletzten Glied des Roboterarms verbunden ist und mittels des Schubantriebs der am Halter angeordnete Verbinder aus der Steckvorposition in die Steckendposition bewegbar ist

Vorteilhafterweise können die Positionierung und das Stecken des Verbinders voneinander getrennt erfolgten. Dabei kann das Positionieren, welches eine größere räumliche Bewegung des am Roboterarm angeordneten Endeffektor mit höheren Geschwindigkeiten umfasst, mit einer geringeren maximalen Positionierkraft erfolgen, als der Steckvorgang, bei dem eine größere maximale Steckkraft aufgewendet werden kann und bei dem relativ zu Positionierung des Endeffektors eine kleinere räumliche Verlagerung bevorzugt mit geringeren Geschwindigkeiten erfolgt. Daher kann die Positionierung inhärent sicher ausgelegt werden.

Der Roboter weist einen Roboterarm mit mehreren Gliedern auf. Diese Glieder können im Wesentlichen starr ausgebildet sein, beispielsweise aus Aluminium, aus Kunststoff oder einem anderen Material. Die Positioniergelenke, welche diese Glieder verbinden, können Drehgelenke oder Schubgelenke sein. Dementsprechend sind die Glieder mittels der Positioniergelenke verstellbar, also relativ zueinander verlagert bzw. bewegt, wobei das Verstellen sowohl ein Rotieren bzw. Drehen um eine Rotationsachse als auch ein Verschieben entlang einer Schubachse umfassen kann.

Der Roboter kann ortsfest montiert sein, wobei der Roboterarm ein proximales Glied, welches auch als Basis ausgebildet bzw. bezeichnet werden kann oder mit einer Basis verbunden ist, und ein distales Glied aufweist, welches am von der Basis entgegengesetzten, bevorzugt freien, Ende des Roboterarms angeordnet ist.

Am Roboterarm bevorzugt am distalen Glied oder als distales Glied, ist ein Endeffektor angeordnet. Der Endeffektor kann einen Verbinder aufweisen bzw. als Verbinder ausgebildet sein. Der Endeffektor muss zum Laden bzw. Betanken des Fahrzeugs im Raum positioniert werden, zum Beispiel von einer Parkposition, in welches der Roboter platzsparend zwischen zwei Lade- bzw. Betankungsvorgängen verharrt, in eine Lade- bzw. Betankungsposition, in welcher der Verbinder des Endeffektors mit dem komplementären Verbinder des Fahrzeugs verbunden ist. Die Bewegung des Roboterarms während des Positionierens kann Menschen, die sich in Reichweite des Roboters aufhalten, gefährden, beispielsweise durch Kollision des Roboterarms mit dem Körper des Menschen.

Dagegen sind in Abhängigkeit vom verwendeten Verbinder Steckkräfte zum Verbinden notwendig, die über ein für den Menschen gefährdungsfreies Maß hinausgehen. Vorteilhafterweise ist die maximale Kraft, welche bei einer Kollision mit einem Menschen während der Positionierung des Roboterarms auftreten kann (die maximale Positionierkraft) kleiner als die beim Stecken des Verbinders aufbringbare maximalen Steckkraft, wodurch in einfacher Weise eine inhärente Sicherheit des Roboters gegenüber Gefährdungen von Menschen während der Positionierung geschaffen wird.

Beispielsweise können die Positionierantriebe, welche die Positioniergelenke verstellen, derart ausgelegt sein, dass ein oder mehrere Positionierantriebe bei Erreichen der maximalen Positionierkraft (beispielsweise bei einer Kollision) zerstörungsfrei oder nicht zerstörungsfrei versagen. Die Positionierantriebe können Einheiten aus Motor und Getriebe mit oder ohne Rutschkupplung sein. Der Motor kann entsprechend leistungsschwach ausgeführt ist, um unter einem vorbestimmten Drehmoment und damit resultierenden maximalen Positionierkraft zu bleiben. Alternativ oder zusätzlich kann das Material und/oder die Konstruktion des Getriebes so schwach ausgebildet sein, dass beispielsweise kämmende Zähne des Getriebes durchrutschen oder wegbrechen, wenn die maximalen Positionierkraft überschritten wird. Insbesondere können ein oder mehrere Getriebe der Positionierantriebe im Wesentlichen aus Kunststoff ausgebildet sein. Vorteilshafterweise ist die inhärente Sicherheit dadurch in einfacher Weise und kostengünstig realisierbar, wobei optional je nach Konstruktion ein irreparabler Schaden am Roboter entstehen kann.

Vorzugsweise ist die maximale Positionierkraft kleiner als 210 N, bevorzugt kleiner als 180 N oder 160 N, weiter bevorzugt kleiner als 140 N oder 110 N und insbesondere kleiner als 65 N oder 60 N. Durch eine maximale Positionierkraft kleiner als 210 N können Kollisionen des Endeffektors bzw. des Roboterarms mit dem Rücken und der Schulter eines Menschen im Wesentlichen gefahrlos erfolgen. Für geringere maximale Positionierkräfte zwischen etwa 110 N und etwa 180 N ist auch eine Kollision mit Händen, Armen, Beinen und dem Brustkorb im Wesentlichen ohne Gefahr. Für maximale Positionierkräfte kleiner als etwa 65 N oder etwa 60 N können alle Körperregionen eines Menschen im Wesentlichen gefährdungsfrei mit dem Roboterarm kollidieren.

Vorzugsweise sind der Verbinder und der komplementäre Verbinder elektrische Verbinder. Insbesondere kann der Verbinder eine Buchse bzw. Ladebuchse bzw. Connector sein, während der komplementäre Verbinder ein Stecker bzw. Ladestecker bzw. ein Inlet des Fahrzeugs sein kann. Je nach Ausführung des Verbinders bzw. des komplementären Verbinders ist eine maximale Steckkraft von mehr als etwa 60 N oder etwa 65 N, teilweise auch mehr als 75 N , mehr als 100 N, mehr als 125 N oder mehr als 150 N nötig, um Verbinder und komplementären Verbinder zusammen zu stecken bzw. wieder auseinander zu ziehen.

Vorzugsweise ist die maximale Steckkraft größer als die maximale Positionierkraft mal einem Faktor 1,1 oder 1,25 oder 1,5, bevorzugt mal einem Faktor 2,0, weiterbevorzugt mal einem Faktor 4,0 und insbesondere mal einem Faktor 8,0, um ein sicheres Stecken und Ziehen des Verbinders zu ermöglichen. Insbesondere beträgt die maximale Steckkraft mehr als etwa 60 N oder etwa 65 N, bevorzugt mehr als 75 N, besonders bevorzugt mehr als 100 N oder mehr als 125 N und insbesondere mehr als 150 N.

Vorteilhafterweise kann der Laderoboter mit schwächeren Antrieben und einer weniger steifen und damit leichteren Mechanik ausgebildet sein, was Material und Herstellungskosten reduziert. Weiter vorteilhafterweise kann eine Gefährdung von Personen durch den Laderoboter durch seinen Aufbau ausgeschlossen werden und zwar vorteilhafterweise ohne weitere Sicherheitseinrichtungen.

Eine, mehrere oder alle Achsen d.h. die von den Motoren angetriebenen Positioniergelenke des Roboterarms können inhärent sicher ausgebildet sein. Die Positioniergelenke des Roboterarms können beispielsweise dadurch inhärent sicher ausgebildet sein, indem die Glieder des Roboterarms, der insbesondere ein Kickarmroboter, ein Sechsachs- oder Siebenachs-Kickarmroboter oder ein SCARA-Roboter sein kann oder eine Kombination auch Linearachse und Knickarm aufweisen kann, aus weichelastischen Werkstoffen bestehen oder zumindest mit weichelastischen Werkstoffen verkleidet bzw. gekapselt sind. Die Positioniergelenke des Roboterarms können alternativ oder zusätzlich inhärent sicher ausgebildet sein, indem die Motoren, insbesondere elektrische Motoren des Roboterarms konstruktiv über eine derart geringe maximale Stromaufnahme verfügen, d.h. die bauartbedingte maximale Leistung/Kraft der Motoren derart gering ist, dass die Glieder des Roboterarms trotz maximaler Leistung der Motoren nur mit Geschwindigkeiten und/oder Beschleunigungen/Kräften bewegt werden können, bei denen sichergestellt ist, dass bei einer Kollision die maximale Positionierkraft nicht überschritten wird. Die Positioniergelenke des Roboterarms können alternativ oder zusätzlich inhärent sicher ausgebildet sein, indem die den Positioniergelenken zugeordneten Getriebe bauartbedingt keine höheren Momente übertragen können, die einzeln oder in Summe zu größeren Kollisionskräften an den Gliedern des Roboterarms führen können als die maximale Positionierkraft. Die Positioniergelenke des Roboterarms können alternativ oder zusätzlich inhärent sicher ausgebildet sein, indem die den Positioniergelenke zugeordneten Getriebe Kupplungen zugeordnet sind, die bei Überschreiten eines Momentes, das einzeln oder in Summe mit anderen Positioniergelenken bzw. Gliedern zu größeren Kollisionskräften als die maximale Positionierkraft an den Gliedern des Roboterarms führen könnten, ausrücken d.h. ein Übertragen von Drehmomenten durch das zugeordnete Getriebe unterbrechen. Die Positioniergelenke des Roboterarms können alternativ oder zusätzlich inhärent sicher ausgebildet sein, indem der Roboterarm vorzugsweise in der konstruktiven Ausgestaltung als ein SCARA-Roboter ausgebildet ist, so dass der SCARA-Roboter überwiegend oder ausschließlich über Drehachsen verfügt, die stets vertikal ausgerichtet sind. In einer solchen Ausgestaltung mit stets vertikal ausgerichteten Drehachsen müssen zur Kompensation der Gewichtskräfte der Glieder des Roboterarms nicht die Motoren des Roboterarms herangezogen werden, sondern die Gewichtskräfte der Glieder des Roboterarms können über mechanische Lagerstellen übertragen und abgefangen werden. Dies heißt, dass zur Beibehaltung der jeweiligen momentanen Höhenlage der Glieder des Roboterarms keine Antriebskräfte der Motoren benötigt werden. Folglich können die Motoren mit einer entsprechend geringeren Leistung ausgelegt werden, d.h. es können "kleinere", "schwächere" Motoren verwendet werden.

Weiter vorzugsweise kann der Verbinder als Rohrendstück, insbesondere einer Zapfpistole, und der komplementäre Verbinder als Tankverbinder ausgebildet sein, wenn das Fahrzeug mit flüssigen Treib- und Betriebsstoffen wie beispielsweise Benzin, Diesel, Öl, Wasser und Ammoniaklösung versorgt werden soll.

Vorzugsweise weise zumindest ein Schubgelenk einen zugeordneten Schubantrieb auf. Besonders bevorzugt ist der Schubantrieb als Aktor im oder am Verbinder des Roboters ausgebildet. Dadurch kann das Schubgelenk einfach ausgebildet werden und der Aktor des Verbinders kann diesen entlang des durch das Schubgelenk bereitgestellten Freiheitsgrad verlagern. Alternativ oder zusätzlich weist zumindest ein Schubgelenk einen zugeordneten komplementären Aktor im oder am Verbinder des Roboters auf, der ausgebildet ist durch einen Aktor des komplementären Verbinders betätigt zu werden. Vorteilhafterweise kann der Roboter in dieser Ausführung einfacher aufgebaut sein, da nicht der Roboter, sondern der komplementäre Verbinder und damit insbesondere das zu ladende Fahrzeug die Kraft zum Erreichen der Steckendposition aufbringen kann. Es versteht sich, dass das zumindest eine Schubgelenk alternativ oder zusätzlich mit einem Antrieb bzw. Linearantrieb ausgebildet sein kann, insbesondere um mittels des Schubgelenks den Verbinder des Roboters entlang einer Richtung S zu verlagern.

Vorzugsweise weist der Roboter weiter auf:
- eine Robotersteuervorrichtung, welche ausgelegt ist den oder die Positionierantrieb(e) und/oder den oder die Schubantrieb(e) automatisch zu steuern bzw. regeln, dass der Verbinder mit dem komplementären Verbinder automatisch kontaktierbar ist.

Der Begriff "Kontakt" bedeutet in diesem Zusammenhang einen elektrischen Kontakt, falls es sich um einen elektrischen Verbinder handelt, insbesondere damit das Fahrzeug elektrisch geladen werden kann, oder einen fluidischen Kontakt, falls es sich um ein Rohrendstück handelt, damit das Fahrzeug betankt bzw. befüllt werden kann. Zusätzlich kann auch noch ein mechanischer Kontakt in Sinne eines Reibschlusses oder eines Eingreifens auftreten.

Der Roboter ist ausgelegt und konfiguriert, den Roboterarm mittels der Positionierantriebe von einer Parkposition in eine Steckvorposition zu verfahren und den Roboterarm mittels des Schubantriebs oder der Schubantriebe von der Steckvorposition in eine Steckposition zu verfahren.

Vorteilhafterweise sind die Aufgaben der Antriebe somit getrennt, wodurch wie weiter oben beschrieben schwache Antriebe (nur) für die Positionierung aktiviert werden, während ein starker Antrieb oder mehrere starke Antriebe (nur) für das Stecken aktiviert wird/werden.

Aus der oben definierten Parkposition wird zum Verbinden des Verbinders mit dem komplementären Verbinder bevorzugt die Steckvorposition eingenommen. Die Steckvorposition beschreibt eine Pose des Roboterarms und/oder eine Position bzw. Orientierung des Endeffektors bzw. des Verbinders, insbesondere relativ zum komplementären Verbinder, bei welcher folgende Eigenschaften zutreffen: a) Verbinder und komplementärer Verbinder befinden sich nicht in einem Kontakt, der ein Laden oder Betanken ermöglicht; b) der Abstand zwischen Verbinder und komplementären Verbinder ist derart gering, dass keine Gefährdung durch Einklemmen von Körperteilen (beispielsweise Fingern) besteht. Zusätzlich kann auch noch gelten: c) die Verlagerung von der Steckvorposition in die Steckendposition erfolgt im Wesentlichen durch eine lineare Verlagerung bzw. ein Schieben bzw. Stecken des Verbinders in Richtung des komplementären Verbinders. In der Steckvorposition können Verbinder und komplementärer Verbinder durchaus miteinander mechanisch kontaktieren oder der Abstand zwischen beiden ist kleiner als 10mm, bevorzugt kleiner als 5mm oder insbesondere kleiner als 1mm, wodurch vorteilhafterweise die Wahrscheinlichkeit eines Klemmens zwischen Verbinder und komplementären Verbinder geringer wird, je kleiner der Spalt zwischen beiden ist.

Vorzugsweise weist der Roboter eine Robotersteuervorrichtung auf, welche ausgelegt ist den oder die Positionierantrieb(e) und/oder den oder die Schubantrieb(e) automatisch zu steuern bzw. regeln, dass der Verbinder mit dem komplementären Verbinder automatisch kontaktierbar ist. Bevorzugt erfolgt die Steuerung bzw. Regelung der Antriebe durch elektrische Signale oder Ströme, wozu die Antriebe zweckmäßigerweise mittelbar oder unmittelbar mit der Robotersteuerung elektrisch verbunden sind.

Der Roboter ist ausgelegt und konfiguriert, den Roboterarm mittels der Positionierantriebe von einer Parkposition in eine Steckvorposition zu verfahren und den Roboterarm mittels des Schubantriebs oder der Schubantriebe von der Steckvorposition in eine Steckendposition zu verfahren.

Der Schubantrieb oder sind die Schubantriebe ist in einer Kopplungsvorrichtung angeordnet oder integriert, die den Verbinder trägt und die am distalen Ende des Roboterarms angeordnet ist.

Bevorzugt kann das distale Ende des Roboterarms als Flansch ausgebildet sein, wodurch vorteilhafterweise ein Auswechseln des Endeffektors bzw. Verbinders in einfacher Weise möglich ist. Die Kopplungsvorrichtung kann dann an diesem Flansch befestigt sein. Insbesondere kann zwischen dem distalen Ende des Roboterarms bzw. dem Flansch und dem Verbinder bzw. dem Endeffektor eine Sollbruchstelle angeordnet sein, die eine Beschädigung des Roboterarmes verhindert, wenn es zu Kollisionen mit dem Verbinder bzw. Endeffektors kommt oder eine Überlast bei der Verlagerung von der Steckvorposition in die Steckendposition auftritt.

Die Kopplungsvorrichtung kann durch Ansteuern der Motoren des Roboterarms mittels der Robotersteuervorrichtung aufgrund der Bewegung des Roboterarms in eine Stellung gebracht werden, in der sich der von der Kopplungsvorrichtung getragene Verbinder in der Steckvorposition befindet und durch Ansteuern des Schubantriebs in der Kopplungsvorrichtung kann die Kopplungsvorrichtung den Verbinder von seiner Steckvorposition in die Steckendposition bewegen.

Vorzugsweise weist wird einer des zumindest einen Schubantriebs von demjenigen Motor des Roboterarms gebildet, der das am distalen Ende des Roboterarms letzte Gelenk bewegt.

Vorzugsweise weist der Roboter einen den Verbinder verstellbar tragenden Halter auf, der mit dem am distalen Ende vorletzten Glied des Roboterarms verbunden ist, wobei mittels des Schubantriebs der am Halter angeordnete Verbinder aus der Steckvorposition in die Steckendposition bewegbar ist.

Bevorzugt weist der Roboterarm an seinem distalen Ende einen Flansch auf, wobei der Flansch des Roboterarms an ein Stellglied gekoppelt ist, das ausgebildet ist, bei einer angetriebenen Bewegung des Flansches durch einen weiteren Antrieb, den am Halter gelagerten Verbinder aus seiner Steckvorposition in die Steckendposition zu bewegen, nachdem durch Ansteuern der anderen Motoren des Roboterarms mittels der Robotersteuervorrichtung aufgrund der Bewegung des Roboterarms der Verbinder in die Steckvorposition gebracht wurde.

Weiter bevorzugt kann der Halter bereichsweise als Griff ausgebildet sein, wobei besonders bevorzugt Halter und Verbinder einstückig ausgebildet sind und einen auch manuell handhabbaren Verbinder bzw. Ladebuchse ausbilden.

Vorzugsweise ist die Robotersteuervorrichtung ausgebildet und eingerichtet, während einer durch den zumindest einen Schubantrieb ausgeführten Verlagerung des Verbinders aus der Steckvorposition in die Steckendposition die Positioniergelenke gegen Verstellen zu sperren.

Weiter vorzugsweise weist zumindest eines der Positioniergelenke des Roboterarms eine zugeordnete Bremse auf, die in einer geschlossenen Stellung ein Verstellen des zugeordneten Positioniergelenks bremst, wobei jede Bremse mittels der Robotersteuervorrichtung ansteuerbar ist, um einer geöffneten Stellung in die geschlossene Stellung zu schalten oder aus der geschlossenen Stellung in die geöffnete Stellung zu schalten.

Weiter vorzugsweise weist zumindest eines der Positioniergelenke des Roboterarms eine zugeordnete Sperre auf, die in einer geschlossenen Stellung ein Verstellen des zugeordneten Positioniergelenks sperrt, wobei jede Sperre mittels der Robotersteuervorrichtung ansteuerbar ist, um einer geöffneten Stellung in die geschlossene Stellung zu schalten oder aus der geschlossenen Stellung in die geöffnete Stellung zu schalten.

Vorzugsweise erfolgt das Bremsen oder das Sperren gegen Verstellen an einem Abtriebsglied eines das jeweilige Positioniergelenk bewegende Gelenkgetriebes.

Vorzugsweise ist zumindest einer der von der Robotersteuerung angesteuerten Bremsen oder Sperren ein Sicherheitsrelais zugeordnet, das eingerichtet ist, die Bremse oder Sperre in ihrem in die geschlossene Stellung angesteuerten Zustand in sicherer Technik in ihrer geschlossenen Stellung zu halten.

**In** einer bevorzugten Anordnung kann der Verbinder ein Verbindergehäuse aufweisen und die korrespondierende Aufnahme am Fahrzeug bzw. der komplementäre Verbinder (die Begriffe "korrespondierende Aufnahme" und "komplementärer Verbinder" werden im folgenden Synonym verwendet) ein Aufnahmegehäuse aufweisen, wobei das Verbindergehäuse des Verbinders und das Aufnahmegehäuse der zu dem Verbinder korrespondierenden Aufnahme am Fahrzeug ausgebildet sind, in der Steckvorposition des Verbinders einen maximalen Spalt von höchstens 5 Millimeter zu bilden, insbesondere das Verbindergehäuse und/oder das Aufnahmegehäuse eine Schürze aufweist, die einen in der Steckvorposition des Verbinders verbleibenden Spalt zwischen dem Verbinder und der Aufnahme am Fahrzeug gegen Eingreifen oder Hineingreifen überdeckt, wenn der Verbinder sich in der Steckvorposition befindet.

Je nach dem kann die Vorrichtung zum automatischen Laden oder Betanken eines Fahrzeugs, bzw. der Roboter, der die Robotersteuervorrichtung umfasst, auch als Tankroboter oder Laderoboter bezeichnet werden.

Vorzugsweise kann die Bewegung des Laderoboters in zwei Abschnitte unterteilt werden. Erstens in eine Positionierfahrt, welche nur geringe Kräfte bedarf, da nur der Laderoboter und die Ladebuchse einschließlich des Ladekabels bewegt werden. Die Positionierfahrt kann mit Positionierantrieben bzw. Getriebe bzw. Positioniergelenken erfolgen, die intrinsisch sicher sind, das heißt vorzugsweise mit Antrieben und/oder Gelenken, die derart mechanisch schwach ausgebildet sind, dass ein Zusammenstoß mit einem Menschen zu einem mechanischen Nachgeben von Antrieb bzw. Gelenk bzw. Getrieben führt, bevor Verletzungsgefahr besteht. Bevorzugt können rücktreibbare Getriebe und/oder Direktantriebe verwendet werden, so dass sich vorteilhafterweise ein Benutzer, der eingeklemmt ist, jederzeit befreien kann. Die Möglichkeit der Selbstbefreiung bietet eine hohe intrinsische Sicherheit, welche insbesondere bei der Verwendung von rücktreibbaren Getrieben bzw. (Direkt-)Antrieben zerstörungsfrei ist.

Unter einer mechanisch schwachen Ausbildung können solche konstruktive Gestaltungen von Motoren, Antrieben, Getrieben und Gelenken verstanden werden, die unter den in der Schmerzschwellentabelle aus Anhang A der Norm DIN ISO TS 15066 genannt sind. In dieser Schmerzschwellentabelle wird der niedrigste Wert für das empfindliche Gesicht eines Menschen angegeben und auf 65 Newton Kraft festgelegt. Es ist also mitunter vorteilhaft und bevorzugt, einen Roboter zum automatischen Laden oder Betanken eines Fahrzeugs zu schaffen, bei der keine Gefahr für Personen besteht und mit einfachen technischen Mitteln sichergestellt ist, dass die konstruktiv maximal mögliche Kraft, welche die Vorrichtung erzeugen kann stets unter einer maximalen Positionierkraft liegt, wie weiter oben definiert.

Der Roboterarm kann insbesondere ein Knickarmroboter, ein Sechsachs- oder Siebenachs-Kickarmroboter oder ein SCARA-Roboter sein. Dabei kann beispielsweise die Anordnung der zweiten Achse und der dritten Achse bevorzugt derart erfolgen, dass sie nicht gegen die Schwerkraft arbeiten. Generell werden die Achsen in einer numerischen Reihenfolge beginnend bei dem proximalen Ende des Roboterarms, also beispielsweise einem Grundgestell hin zu einem distalen Ende des Roboterarms, insbesondere dem Flansch des Roboterarms gezählt.

Der zweite Teil der Bewegung ist der Steckvorgang von einer Steckvorposition in eine Steckendposition, welcher Steckvorgang bevorzugt eine im Wesentlichen lineare Bewegung umfasst, die höhere Kräfte bedarf, die nicht intrinsisch sicher sind bzw. durch intrinsisch sichere Schubantriebe bzw. Schubgelenke bzw. Getriebe realisiert werden kann, also Kräfte erzeugen kann bzw. erzeugen muss, die gegebenenfalls größer sind als die maximale Positionierkraft.

Die Positionierfahrt des Roboters kann bevorzugt mit den ersten vier Achsen (optional ggf. auch mit der weiteren fünften Achse und sechsten Achse, insbesondere falls diese vorhanden sind, ohne die siebte Achse oder die fünfte Achse, falls die fünfte Achse und sechste Achsen nicht existieren, durchführbar sein. Weiter bevorzugt ist der Steckvorgang lediglich mit der siebten Achse, also im Falle eines Siebenachs-Kickarmroboters der letzten Achse bzw. der distalen Achse durchzuführen bzw. mit der fünften Achse bei einem 5-Achsladeroboter durchzuführen. Bevorzugt wird vermieden, dass die Reaktionskräfte der siebten Achse (distale Endachse) durch die Positionierantriebe der Achsen eins bis sechs abgestützt werden müssen, da diese dann in der Regel nicht mehr intrinsisch sicher ausbildbar wären. In einer Alternative kann dies durch eine nicht rücktreibbare Schnecke am Motor erreicht werden. Die Schnecke befindet sich im Eingriff mit einem Getriebe. Die Reaktionskräfte beispielsweise von einem Kunststoffgetriebe, welche bevorzugt an der zweiten Achse und/oder an der vierten Achse angeordnet ist, können unter Umständen nicht aufgenommen werden, wodurch diese durchrutschen und die Zähne im Getriebe zerstört werden können. Eine Verbesserung ist möglich, indem der Antriebsmotor über ein Zahnrad in das Kunststoffgetriebe eingreift, dass wiederum seinerseits in eine abgangsseitige angeordnete Schnecke eingreift. Der Selbsthemmmechanismus erfolgt dann nach dem Getriebe und nicht davor, wodurch vorteilhafterweise das Getriebe vor zu hohen Reaktionsmomenten geschützt ist. Alternativ oder zusätzlich können die zweite bis sechste Achse nach der Positionierfahrt durch eine ansteuerbare Feststellbremse feststellbar ausgebildet sein. Dadurch können die Reaktionskräfte dann durch die Feststellbremse abgestützt werden. Die Feststellbremse hält bevorzugt nur in einem bestromten Zustand (also abweichend von eine bei anderen Robotern verwendeten Federspeicherbremse, die im unbestromten Fall zufällt), so dass bei Stromausfall auch eine einfache Selbstbefreiungsmöglichkeit für Menschen gegeben ist. Vorteilhafterweise entfällt weiter die Notwendigkeit eines zusätzlichen Entriegelungsmechanismus, weil der Roboter im Fehlerfall einfach durch Muskelkraft rücktreibbar ist. Hierdurch wird maßgeblich vielen Sicherheitsanforderungen Rechnung getragen. Die Funktionsfähigkeit der Bremse kann dadurch überprüft werden, indem durch die Positionssensoren der festgestellten Achsen auf Veränderung der Gelenkwinkel überwacht werden. Weiterhin kann ein Abgleich über die Bildverarbeitung erfolgen.

Vorteilhafterweise ist ein insbesondere durch eine Kombination der sicheren Erkennung der Steckvorposition mit einer Verwendung inhärent sicherer Komponenten für die Achsen eins bis sechs (also aller Achsen außer der distalen Endachse) möglich in materialsparender und kostengünstiger Weise ein für die Kooperation mit Menschen hinreichend sicheren Laderoboter bereitzustellen, der trotzdem über eine ausreichende Steckkraft verfügt, um das Laden eines elektrisch betriebenen Fahrzeugs zuverlässig durchzuführen.

Konkrete bevorzugte Aspekte sind in der nachfolgenden allgemeinen Beschreibung in den folgenden Abschnitten untergliedert und darin separat näher erläutert. Allerdings können die einzelnen bevorzugten Aspekte in beliebigen Variation kombiniert realisiert werden und demgemäß auch erfinderisch zusammenwirken, um besonders bevorzugte Ausführungen zu bilden.

Vorzugsweise ist ein weiterer Antrieb bzw. einer der Schubantriebe Teil einer Stellvorrichtung , die zum elektrischen Ankoppeln des Verbinders an die Aufnahme des Fahrzeugs bzw. an den komplementären Verbinder ausgebildet ist.

Die Stellvorrichtung zum elektrischen Ankoppeln des Verbinders an die Aufnahme des Fahrzeugs kann in einer ersten Ausführung durch eine ausgewählte Achse des Roboterarms gebildet werden, der den Verbinder automatisch in die Steckvorposition bewegt. Die Stellvorrichtung zum elektrischen Ankoppeln des Verbinders an die Aufnahme des Fahrzeugs kann in einer zweiten Ausführung durch denjenigen Motor des Roboterarms gebildet werden, der das am distalen Ende des Roboterarms letzte Gelenke bewegt, wobei ein den Verbinder verstellbar tragender Halter mit dem am distalen Ende vorletzten Glied des Roboterarms verbunden ist und der Flansch des Roboterarms an ein Stellglied gekoppelt ist, das ausgebildet ist, bei einer angetriebenen Bewegung des Flansches durch den weiteren Antrieb, den am Halter gelagerten Verbinder aus seiner Steckvorposition in die Steckendposition zu bewegen, nachdem durch Ansteuern der an-deren Motoren des Roboterarms mittels der Robotersteuervorrichtung aufgrund der Bewegung des Roboterarms der Verbinder in die Steckvorposition gebracht wurde.

Die Stellvorrichtung zum elektrischen Ankoppeln des Verbinders an die Aufnahme des Fahrzeugs kann in einer dritten Ausführung durch einen vom Roboterarm separaten Antrieb gebildet werden, der in eine verstellbare Plattform integriert ist, die den Roboterarm trägt, wobei der Verbinder an dem Flansch des Roboterarms befestigt ist und durch Ansteuern der Motoren des Roboterarms mittels der Robotersteuervorrichtung aufgrund der Bewegung des Roboterarms der Verbinder in eine Stellung gebracht werden kann, in der sich der Verbinder in der Steckvorposition befindet und der Verbinder von seiner Steckvorposition in die Steckendposition bewegt wird, indem der weitere Antrieb die verstellbare Plattform bewegt, so dass der Roboterarm zusammen mit dem Verbinder in die Steckendposition für den Verbinder bewegt wird.

Die Stellvorrichtung zum elektrischen Ankoppeln des Verbinders an die Aufnahme des Fahrzeugs kann in einer vierten Ausführung durch die Robotersteuervorrichtung ergänzt werden, die eingerichtet ist, während einer durch die Stellvorrichtung, insbesondere den weiteren Antrieb ausgeführten Bewegung des Verbinders aus der Steckvorposition in die Steckendposition die Gelenke des Roboterarms gegen Verstellen zu sperren.

Die Stellvorrichtung zum elektrischen Ankoppeln des Verbinders an die Aufnahme des Fahrzeugs kann in einer fünften Ausführung durch die Robotersteuervorrichtung ergänzt werden, indem die Robotersteuervorrichtung eingerichtet ist, mittels des Roboterarms den Verbinder in eine Steckvorposition zu bewegen, die bereits derart nahe an die Aufnahme am Fahrzeug herangeführt ist, so dass ein manuelles Eingreifen in einen eventuellen Spalt zwischen dem Verbinder und der Aufnahme des Fahrzeugs nicht möglich ist.

Die Stellvorrichtung zum elektrischen Ankoppeln des Verbinders an die Aufnahme des Fahrzeugs kann in einer sechsten Ausführung eine Schürze umfassen, die beispielsweise an einem Verbindergehäuse des Verbinders und/oder an einem Aufnahmegehäuse der Aufnahme am Fahrzeug angeordnet sein kann und einen in der Steckvorposition des Verbinders gegebenenfalls verbleibenden Spalt zwischen dem Verbinder und der Aufnahme am Fahrzeug gegen Eingreifen oder Hineingreifen überdeckt, wenn der Verbinder sich in der Steckvorposition befindet. Die Schürze kann unter Umständen, beispielsweise bei einer sehr nahe an der Steckendposition gelegenen Steckvorposition bereits durch die normgemäßen Gestalten der Gehäuseteile von Verbinder und Aufnahme am Fahrzeug gebildet werden.

Die Stellvorrichtung zum elektrischen Ankoppeln des Verbinders an die Aufnahme des Fahrzeugs kann in einer siebten Ausführung eine Sensoreinrichtung umfassen, die ausgebildet ist, die Position des Verbinders zu erfassen und die eingerichtet ist, ein die Steckvorposition kennzeichnendes Signal an die Robotersteuervorrichtung zu übermitteln, wenn sich der Verbinder in der Steckvorposition befindet.

Die Stellvorrichtung zum elektrischen Ankoppeln des Verbinders an die Aufnahme des Fahrzeugs kann in einer die siebten Ausführung weiterbildenden achten Ausführung eine Sensoreinrichtung umfassen, die redundant oder diversitär ausgebildet ist, insbesondere mindestens zwei Sensoren umfasst, die insbesondere auf unterschiedlichen physikalischen Prinzipien erfassen. Dabei kann auch die Übermittlung der Sensorwerte bzw. Sensorsignale redundant oder diversitär erfolgen, wahlweise kabelgebunden oder drahtlos.

Die Stellvorrichtung zum elektrischen Ankoppeln des Verbinders an die Aufnahme des Fahrzeugs kann in einer achten Ausführung derart angesteuert werden, insbesondere von der Robotersteuervorrichtung angesteuert werden, dass ein Schließen der Stromkreise durch voreilenden Kontakte der Robotersteuerung als zusätzliches Signal bereitgestellt werden, um die Robotersteuerung zu einer Aktion zu veranlassen, beispielsweise um den/die Antrieb(e) einer oder mehrerer Achsen zu starten und/oder zu stoppen und/oder die den Gelenken des Roboterarms zugeordneten Bremsen in ihre arretierten d.h. geschlossenen Stellungen zu bringen und zu halten, oder zu lösen.

Die Stellvorrichtung zum elektrischen Ankoppeln des Verbinders an die Aufnahme des Fahrzeugs kann in einer neunten Ausführung ein bezüglich des Verbinders verstellbar gelagertes Abstützglied aufweisen, das ausgebildet ist, automatisch angetrieben, in einer Verwahrungsstellung ein Lösen des Verbinders von der Aufnahme am Fahrzeug zuzulassen und in einer aus der Verwahrungsstellung automatisch verstellten Verriegelungsstellung mit der Aufnahme des Fahrzeugs zumindest reibschlüssig, kraftschlüssig oder vorzugsweise formschlüssig sich zu verbinden, derart, dass in der den Verbinder mit der Aufnahme verbundenen Verriegelungsstellung Reaktionskräfte, die durch das automatische Bewegen des Verbinders von der Steckvorposition in die Steckendposition über das Abstützglied abgestützt werden, so dass die für den automatischen Einsteckvorgang notwendigen Abstützreaktionskräfte über die Aufnahme in das Fahrzeug abgeleitet werden und demgemäß nicht in den Roboterarm eingeleitet werden. Die Stellvorrichtung zum elektrischen Ankoppeln des Verbinders an die Aufnahme des Fahrzeugs kann insoweit ein Abstützglied aufweisen, das bereits in einem Zustand in dem sich der Verbinder in der Steckvorposition befindet, sich gegen die Aufnahme am Fahrzeug abstützen kann, um die während der automatischen Bewegung des Verbinders aus der Steckvorposition in die Steckendposition die Reaktionskräfte in das Fahrzeug eingeleitet werden und nicht in den Roboterarm. In einer solchen Ausführung können beispielsweise die Bremsen am Roboterarm zumindest in einer nicht sicheren Technik ausgeführt sein, oder gegebenenfalls sogar ganz entfallen.

Die Stellvorrichtung zum elektrischen Ankoppeln des Verbinders an die Aufnahme des Fahrzeugs kann in einer zehnten Ausführung als ein Aktor d.h. ein aktives Stellglied ausgebildet sein, welches den Verbinder aus seiner Steckvorposition in die Steckendposition automatisch bewegt, wobei der Aktor bzw. das Stellglied durch einen elektrischen Kontaktstift eines als Ladestecker ausgebildeten Verbinders gebildet wird, wobei der elektrische Kontaktstift um seine Steckerlängserstreckung automatisch angetrieben, drehbar im Verbinder bzw. im Ladestecker gelagert ist und entweder ein Außengewinde oder im Falle eines rohrförmigen Kontaktstiftes ein Innengewinde aufweist, das mit einem korrespondierendem Innengewinde oder Außengewinde an der Aufnahme des Fahrzeugs derart zusammenwirkt, dass bei einem automatisch angetriebenen Drehen des Kontaktstiftes der Verbinder bzw. der Ladestecker aus seiner Steckvorposition in die Steckendposition gezogen wird. Ein solcher aktiver, sich drehender Kontaktstift mit Gewinde kann einer der Ladekontakte, einer der Schutzkontakte oder einer der Kommunikationskontakte sein.

Die heutigen Elektrofahrzeuge weisen Ladestecker ("Inlays") auf, die mit Ladebuchsen ("Konnektoren") entweder manuell oder robotisch bzw. automatisch verbunden werden können. Insbesondere soll hier der Fall betrachtet werden, dass ein Laderoboter den Ladestecker der Ladestation mit dem komplementären Ladestecker des Fahrzeugs automatisch elektrisch und mechanisch verbindet. Dazu können insbesondere Sechsachs- oder Siebenachs-Robotermechaniken eingesetzt werden, wobei eine oder mehrere Achsen (Positionierachsen) überwiegend die Positionierung des Verbinders d.h. des Ladesteckers bewirken und eine oder mehrere Achsen (Steckachsen) überwiegend den Steckvorgang, d.h. die Linearbewegung zum Stecken des Verbinders aus seiner Steckvorposition in die Steckendposition, bewirken. Das der Steckvorgang eine vorbestimmte Steckkraft benötigt, die insbesondere größer als die maximalen Positionierkraft oder größer als 60 Newton sein kann, sind die Steckachsen in der Regel stärker auszulegen, insbesondere mit stärkeren Motoren bzw. Antrieben, als die Positionierachsen für das automatische Bewegen des Verbinders in die Steckvorposition. Es versteht sich, das eine oder mehrere Achsen des Roboterarms sowohl die Aufgabe als Steckachse und Positionierachse übernehmen können.

Beim Verbinden des Elektrofahrzeugs mit einer Ladestation werden neben den Stromversorgungsleitern auch Kommunikationsleiter (CC1, CC2) und Schutzleiter (PE) beim Steckvorgang über zugeordnete Steckkontakte mit dem Fahrzeug über zugeordnete komplementäre Steckkontakte des Fahrzeugs verbunden. Die mit dem Kommunikationsleiter bzw. Schutzleiter verbundenen Kontakte sind voreilend, d.h. sie kontaktieren elektrisch früher als andere Kontakte. Sie kontaktieren während eines Einsteckvorgangs insbesondere in der Reihenfolge Schutzleiter, erster Kommunikationsleiter, zweiter Kommunikationsleiter (PE->CC2->CC1). Fahrzeugseitig können die komplementären Steckkontakte jeweils über einen Widerstand mit einer Spannungsquelle verbunden sein. Auf diese Weise werden beim Steckvorgang sukzessive Stromkreise bestromt, so dass die Ladestation den Steckerfolg messtechnisch ermitteln kann. Das Schließen der Stromkreise durch die voreilenden Kontakte kann der Robotersteuerung als zusätzliches Signal bereitgestellt werden, um die Robotersteuerung zu einer Aktion zu veranlassen, beispielsweise um den/die Antrieb(e) einer oder mehrerer Achsen zu starten und/oder zu stoppen.

Vorzugsweise weist der Ladestecker eines oder mehrere der folgenden Merkmale auf:
zumindest einen Aktor, welcher im bzw. am Ladestecker des Fahrzeugs angeordnet sein kann, und welcher angeordnet und ausgelegt ist, mit einem Ladestecker einer Ladevorrichtung (robotisch oder manuell) in Eingriff bzw. Reibschluss zu gelangen, um eine Steckkraft aufzubringen, um die beiden Ladestecker in eine Steckendposition zu bewegen, in der beide Ladestecker miteinander verriegelt sein können, bevorzugt mittels des Aktors.

Vorteilhafterweise kann so die durch den Roboterarm aufzubringende Steckkraft verringert werden, wodurch sich auch geringere Reaktionskräfte ergeben, die auf den Roboterarm wirken, so dass dieser im Sinne einer verbesserten Lösung der zugrundeliegenden Aufgabe konstruktiv schwächer und damit sicherer ausgelegt werden kann.

Vorzugsweise wird ein System mit einer Vorrichtung zum automatischen Laden eines Fahrzeugs bereitgestellt, aufweisend einen Roboter, der eine Robotersteuervorrichtung und einen von der Robotersteuervorrichtung automatisch ansteuerbaren Roboterarm umfasst, wobei der Roboterarm mehrere über Gelenke miteinander verstellbar verbundene Glieder aufweist und den Gelenken Motoren des Roboterarms zugeordnet sind, derart, dass durch eine Ansteuern der Motoren mittels der Robotersteuervorrichtung die Gelenke automatisch verstellbar sind, um die Glieder des Roboterarms gegeneinander zu verstellen, so dass ein an einem Flansch des Roboterarms angeordneter Verbinder der Vorrichtung im Raum bewegt wird, um den Verbinder automatisch in eine zu dem Verbinder korrespondierende Aufnahme am Fahrzeug anzustecken, so dass in einem an die Aufnahme des Fahrzeugs angesteckten Zustand des Verbinders elektrische Energie oder ein Betriebsstoff bzw. Fluid dem Fahrzeug zuführbar ist, wobei die Glieder, die Gelenke und die Motoren zum Antreiben der Gelenke konstruktiv ausgelegt sind, in allen Bewegungsmöglichkeiten des Roboterarms im Falle einer Kollision stets weniger als die maximalen Positionierkraft, bevorzugt weniger als 120 N und besonders bevorzugt weniger als etwa 60 N Kraft auf den Kollisionskörper zu übertragen, und das System einen weiteren Antrieb umfasst, der ausgebildet ist, den Verbinder aus einer durch Bewegen des Roboterarms angefahrenen Steckvorposition des Verbinders, in der sich der Verbinder eingriffsgeschützt vor der Aufnahme des Fahrzeugs befindet, in eine Steckendposition zu bewegen, in welcher Steckendposition der Verbinder in der Aufnahme des Fahrzeugs ordnungsgemäße angesteckt ist, so dass elektrische Energie und/oder Treibstoff dem Fahrzeug in der Steckendposition des Verbinders zuführbar ist, und wobei der weitere Antrieb des Systems Teil einer in die Aufnahme des Fahrzeugs integrierten Stellvorrichtung ist, die zum elektrischen Ankoppeln des Verbinders an die Aufnahme des Fahrzeug ausgebildet ist.

Die Stellvorrichtung zum elektrischen Ankoppeln des Verbinders an die Aufnahme des Fahrzeugs kann in einer ersten Ausführung durch einen Motor, Aktor oder Antrieb gebildet werden, der fahrzeugseitig angeordnet ist, d.h. eine Komponente des Fahrzeugs ist und die ausgebildet ist, den vom Fahrzeug verschiedenen Verbinder automatisch aus seiner Steckvorposition in die Steckendposition heranzuziehen.

Die Stellvorrichtung zum elektrischen Ankoppeln des Verbinders an die Aufnahme des Fahrzeugs kann in einer zweiten Ausführung durch einen Motor gebildet werden, der in die Aufnahme am Fahrzeug integriert ist, wobei dem Motor ein Stellglied zugeordnet sein kann, dass verstellbar an der Aufnahme gelagert ist und das ausgebildet ist, von der Aufnahme ausgehend nach dem Verbinder zu greifen, wenn sich dieser in der Steckvorposition befindet und durch ein wieder Hereinziehen des Stellglieds in die Aufnahme der an das Stellglied angekoppelte Verbinder in die Aufnahme hereingezogen wird.

Dies erfolgt, nachdem durch Ansteuern der Motoren des Roboterarms mittels der Robotersteuervorrichtung aufgrund der Bewegung des Roboterarms der Verbinder zuvor in die Steckvorposition gebracht wurde.

Die Stellvorrichtung zum elektrischen Ankoppeln des Verbinders an die Aufnahme des Fahrzeugs kann in einer dritten Ausführung ein Stellglied am Fahrzeug, insbesondere an der Aufnahme des Fahrzeugs aufweisen, das ausgebildet ist, entweder in Zusammenwirken mit einem Spannmittel am Verbinder, lediglich den Verbinder an die Aufnahme des Fahrzeugs heranzuziehen, ohne dass die sonstigen, insbesondere "schwachen" Glieder des Roboterarms verstellt werden, oder in Zusammenwirken mit einem Roboterarm, der durch die Robotersteuerung in einer Nachgiebigkeitsregelung betrieben ist, den Verbinder an die Aufnahme des Fahrzeugs heranzuziehen, wobei aufgrund der Nachgiebigkeitsreglung des Roboterarms die sonstigen, insbesondere "schwachen" Glieder des Roboterarms passiv verstellt d.h. mitbewegt werden.

Die Stellvorrichtung zum elektrischen Ankoppeln des Verbinders an die Aufnahme des Fahrzeugs kann in einer abgewandelten vierten Ausführung durch die Robotersteuervorrichtung ergänzt werden, die eingerichtet ist, während einer durch die Stellvorrichtung des Fahrzeugs, insbesondere den weiteren Antrieb im Fahrzeug ausgeführten Bewegung des Verbinders aus der Steckvorposition in die Steckendposition die Gelenke des Roboterarms gegen Verstellen zu sperren.

Die Stellvorrichtung zum elektrischen Ankoppeln des Verbinders an die Aufnahme des Fahrzeugs kann in einer fünften Ausführung durch die Robotersteuervorrichtung ergänzt werden, indem die Robotersteuervorrichtung eingerichtet ist, mittels des Roboterarms den Verbinder in eine Steckvorposition zu bewegen, die bereits derart nahe an die Aufnahme am Fahrzeug herangeführt ist, so dass ein manuelles Eingreifen in einen eventuellen Spalt zwischen dem Verbinder und der Aufnahme des Fahrzeugs während eines Hereinziehens des Verbinders in die Aufnahme durch das aufnahmeseitige Stellglied, nicht möglich ist.

Die Stellvorrichtung zum elektrischen Ankoppeln des Verbinders an die Aufnahme des Fahrzeugs kann in einer sechsten Ausführung eine Schürze umfassen, die an einem Aufnahmegehäuse der Aufnahme am Fahrzeug angeordnet ist und einen in der Steckvorposition des Verbinders gegebenenfalls verbleibenden Spalt zwischen dem Verbinder und der Aufnahme am Fahrzeug gegen Eingreifen oder Hineingreifen überdeckt, wenn der Verbinder sich in der Steckvorposition befindet. Die Schürze kann unter Umständen, beispielsweise bei einer sehr nahe an der Steckendposition gelegenen Steckvorposition bereits durch die normgemäßen Gestalten der Gehäuseteile von Verbinder und Aufnahme am Fahrzeug gebildet werden.

Die Stellvorrichtung zum elektrischen Ankoppeln des Verbinders an die Aufnahme des Fahrzeugs kann in einer siebten Ausführung eine fahrzeugseitige Sensoreinrichtung umfassen, die ausgebildet ist, die Position des Verbinders vom Fahrzeug aus zu erfassen und die eingerichtet ist, ein die Steckvorposition kennzeichnendes Signal, beispielsweise über eine noch später beschriebene drahtgebundene (über den Verbinder) Kommunikationsverbindung oder über eine drahtlose (Funk-) Kommunikationsverbindung an die Robotersteuervorrichtung zu übermitteln, wenn sich der Verbinder in der Steckvorposition befindet.

Die Stellvorrichtung zum elektrischen Ankoppeln des Verbinders an die Aufnahme des Fahrzeugs kann in einer die siebten Ausführung weiterbildenden achten Ausführung eine fahrzeugseitige Sensoreinrichtung umfassen, die redundant oder diversitär ausgebildet ist, insbesondere mindestens zwei Sensoren am Fahrzeug umfasst, die insbesondere auf unterschiedlichen physikalischen Prinzipien erfassen. Dabei kann auch die Übermittlung der Sensorwerte bzw. Sensorsignale redundant oder diversitär erfolgen, wahlweise kabelgebunden oder drahtlos.

Die Stellvorrichtung zum elektrischen Ankoppeln des Verbinders an die Aufnahme des Fahrzeugs kann in einer achten Ausführung derart angesteuert werden, insbesondere von der Robotersteuervorrichtung oder einer fahrzeugseitigen Steuervorrichtung angesteuert werden, dass ein Schließen der Stromkreise durch voreilenden Kontakte der Robotersteuerung bzw. der fahrzeugseitigen Steuervorrichtung als zusätzliches Signal bereitgestellt werden, um die Robotersteuerung bzw. die fahrzeugseitigen Steuervorrichtung zu einer Aktion zu veranlassen, beispielsweise um den/die Antrieb(e) einer oder mehrerer Achsen zu starten und/oder zu stoppen und/oder die den Gelenken des Roboterarms zugeordneten Bremsen in ihre arretierten d.h. geschlossenen Stellungen zu bringen und zu halten, oder zu lösen.

Die Stellvorrichtung zum elektrischen Ankoppeln des Verbinders an die Aufnahme des Fahrzeugs kann in einer neunten Ausführung ein bezüglich des Verbinders verstellbar an der Aufnahme des Fahrzeugs gelagertes Abstützglied aufweisen, das ausgebildet ist, automatisch angetrieben, in einer Verwahrungsstellung ein Lösen des Verbinders von der Aufnahme am Fahrzeug zuzulassen und in einer aus der Verwahrungsstellung automatisch verstellten Verriegelungsstellung mit der Aufnahme des Fahrzeugs zumindest reibschlüssig, kraftschlüssig oder vorzugsweise formschlüssig sich zu verbinden, derart, dass in der den Verbinder mit der Aufnahme verbundenen Verriegelungsstellung Reaktionskräfte, die durch das automatische Bewegen des Verbinders von der Steckvorposition in die Steckendposition über das fahrzeugseitige Abstützglied abgestützt werden, so dass die für den automatischen Einsteckvorgang notwendigen Abstützreaktionskräfte über die Aufnahme in das Fahrzeug abgeleitet werden und demgemäß nicht in den Roboterarm eingeleitet werden. Die Stellvorrichtung zum elektrischen Ankoppeln des Verbinders an die Aufnahme des Fahrzeugs kann insoweit ein Abstützglied an der Aufnahme des Fahrzeugs aufweisen, das bereits in einem Zustand in dem sich der Verbinder in der Steckvorposition befindet, sich gegen die Aufnahme am Fahrzeug abstützen kann, um die während der automatischen Bewegung des Verbinders aus der Steckvorposition in die Steckendposition die Reaktionskräfte in das Fahrzeug eingeleitet werden und nicht in den Roboterarm. **In** einer solchen Ausführung können beispielsweise die Bremsen am Roboterarm zumindest in einer nicht sicheren Technik ausgeführt sein, oder gegebenenfalls sogar ganz entfallen.

Die Stellvorrichtung zum elektrischen Ankoppeln des Verbinders an die Aufnahme des Fahrzeugs kann in einer zehnten Ausführung als ein Aktor d.h. ein aktives Stellglied am Fahrzeug, insbesondere an der Aufnahme d.h. dem "Inlet" ausgebildet sein, welches den Verbinder aus seiner Steckvorposition in die Steckendposition automatisch bewegt, wobei der Aktor bzw. das Stellglied durch einen elektrischen Kontaktstift am Ladestecker des Fahrzeugs gebildet wird, wobei der elektrische Kontaktstift um seine Steckerlängserstreckung automatisch angetrieben, drehbar im Ladestecker des Fahrzeugs gelagert ist und entweder ein Außengewinde oder im Falle eines rohrförmigen Kontaktstiftes ein Innengewinde aufweist, das mit einem korrespondierendem Innengewinde oder Außengewinde an dem einzusteckenden Verbinder derart zusammenwirkt, dass bei einem automatisch angetriebenen Drehen des Kontaktstiftes der Verbinder bzw. der vom Roboterarm getragene Ladestecker aus seiner Steckvorposition in die Steckendposition gezogen wird. Ein solcher aktiver, sich drehender Kontaktstift mit Gewinde kann einer der Ladekontakte, einer der Schutzkontakte oder einer der Kommunikationskontakte sein.

Die heutigen Elektrofahrzeuge weisen Ladestecker d.h. "Inlets" auf, die mit Ladebuchsen d.h. "Konnektoren" (des vom Roboterarm getragenen Verbinders) entweder manuell oder robotisch bzw. automatisch verbunden werden können. Insbesondere soll hier der Fall betrachtet werden, dass ein Laderoboter die Ladebuchse (Verbinder) der Ladestation mit dem komplementären Ladestecker (komplementären Verbinder) des Fahrzeugs automatisch elektrisch und mechanisch verbindet. Dazu können insbesondere 6-Achs- oder 7-Achs-Mechaniken eingesetzt werden, wobei eine oder mehrere Achsen (Positionierachsen) überwiegend die Positionierung des Ladesteckers bewirken und eine oder mehrere Achsen (Steckachsen) überwiegend den Steckvorgang, d.h. die Linearbewegung zum Stecken, bewirken. Da der Steckvorgang eine vorbestimmte Steckkraft benötigt, sind die Steckachsen in der Regel stärker ausgelegt, insbesondere mit stärkeren Antrieben, als die Positionierachsen. Es versteht sich, das eine oder mehrere Achsen sowohl die Aufgabe als Steckachse und Positionierachse übernehmen kann.

Beim Verbinden des Elektrofahrzeugs mit einer Ladestation werden neben den Stromversorgungsleitern auch Kommunikationsleiter (CC1, CC2) und Schutzleiter (PE) beim Steckvorgang über zugeordnete Steckkontakte mit dem Fahrzeug über zugeordnete komplementäre Steckkontakte des Fahrzeugs verbunden. Die mit dem Kommunikationsleiter bzw. Schutzleiter verbundenen Kontakte sind voreilend. Sie kontaktieren insbesondere in der Reihenfolge Schutzleiter, erster Kommunikationsleiter, zweiter Kommunikationsleiter (PE->CC2->CC1). Fahrzeugseitig können die komplementären Steckkontakte jeweils über einen Widerstand mit einer Spannungsquelle verbunden sein. Auf diese Weise werden beim Steckvorgang sukzessive Stromkreise bestromt bzw. galvanisch, induktiv und/oder kapazitiv geschlossen, so dass die Ladestation oder die Robotersteuerung den Steckerfolg messtechnisch ermitteln kann. Das Schließen der Stromkreise durch die voreilenden Kontakte kann der Robotersteuerung als zusätzliches Signal bereitgestellt werden, um die Robotersteuerung zu einer Aktion zu veranlassen, beispielsweise um den/die Antrieb(e) einer oder mehrerer Achsen zu starten und/oder zu stoppen.

Dementsprechend kann der Aktor fahrzeugseitig angeordnet sein. Der Kraftschluss des Steckvorganges wird dabei nicht über den Laderoboter aufgebracht, sondern auf ganz kurzem Wege über das Fahrzeug bzw. den Ladestecker der Ladestation. Der Laderoboter bedarf in einer solchen Ausführung vorteilhafterweise keinerlei Sicherheitsfunktionen, da sie dann ja ganz auf Seiten des Fahrzeugs sind. Die Sicherheitsnormen beim Fahrzeug sind jedoch einfacher zu realisieren als die beim Roboter (beispielsweise bereits angewandt beim Schließen der Heckklappe oder dem motorischen Zuziehen der Türen).

Vorzugsweise wird eine Vorrichtung zum automatischen Laden oder Betanken eines Fahrzeugs bereitgestellt, aufweisend einen Roboter, der eine Robotersteuervorrichtung und einen von der Robotersteuervorrichtung automatisch ansteuerbaren Roboterarm umfasst, wobei der Roboterarm mehrere über Gelenke miteinander verstellbar verbundene Glieder aufweist und den Gelenken Motoren des Roboterarms zugeordnet sind, derart, dass durch eine Ansteuerung der Motoren mittels der Robotersteuervorrichtung die Gelenke automatisch verstellbar sind, um die Glieder des Roboterarms gegeneinander zu verstellen, so dass ein an einem Flansch des Roboterarms angeordneter Verbinder der Vorrichtung im Raum bewegt wird, um den Verbinder automatisch in eine zu dem Verbinder korrespondierende Aufnahme am Fahrzeug anzustecken, so dass in einem an die Aufnahme des Fahrzeugs angesteckten Zustand des Verbinders elektrische Energie und/oder Treibstoff dem Fahrzeug zuführbar ist, wobei die Glieder, die Gelenke und die Motoren zum Antreiben der Gelenke konstruktiv ausgelegt sind, in allen Bewegungsmöglichkeiten des Roboterarms im Falle einer Kollision stets weniger als 120 N und besonders bevorzugt weniger als etwa 60 N Kraft auf den Kollisionskörper zu übertragen, und die Vorrichtung einen weiteren Antrieb umfasst, der ausgebildet ist, den Verbinder aus einer durch Bewegen des Roboterarms angefahrenen Steckvorposition des Verbinders, in der sich der Verbinder eingriffsgeschützt vor der Aufnahme des Fahrzeugs befindet, in eine Steckendposition zu bewegen, in welcher Steckendposition der Verbinder in der Aufnahme des Fahrzeugs ordnungsgemäß angesteckt ist, so dass elektrische Energie und/oder Treibstoff dem Fahrzeug in der Steckendposition des Verbinders zuführbar ist, und wobei die Vorrichtung, insbesondere der Roboterarm eine Anfahrhilfsvorrichtung zur Unterstützung des mechanischen Ansteckens des Verbinders an die Aufnahme des Fahrzeugs aufweist.

Die Anfahrhilfsvorrichtung zur Unterstützung des mechanischen Ansteckens des Verbinders an die Aufnahme des Fahrzeugs kann in einer ersten Ausführung wenigstens eine Kamera d.h. wenigstens einen Bildsensor aufweisen, der ausgebildet ist, insbesondere in Zusammenwirken mit einer Bildauswerteeinrichtung die momentane Position / Orientierung und/oder Lage des Verbinders bezüglich der Aufnahme zu erfassen, und insbesondere auszuwerten. Die Erfassung und die Auswertung der momentanen Position und/oder momentanen Lage des Verbinders bezüglich der Aufnahme kann genutzt werden, um ein durch den Roboterarm ausgeführtes, automatisches Heranbewegen des Verbinders in die Steckvorposition oder ein automatisches Anstecken des Verbinders an die Aufnahme des Fahrzeugs während einer Steckbewegung des Verbinders von der Steckvorposition in die Steckendposition zu unterstützen. Die Erfassung und die Auswertung der momentanen Position und/oder momentanen Lage des Verbinders bezüglich der Aufnahme mittels Kamera d.h. wenigstens einem Bildsensor und einer Bildauswerteeinrichtung kann somit ein automatisches Einstecken des Verbinders in die Aufnahme des Fahrzeugs erleichtern.

Die Anfahrhilfsvorrichtung zur Unterstützung des mechanischen Ansteckens des Verbinders an die Aufnahme des Fahrzeugs kann in einer zweiten Ausführung wenigstens eine Kamera d.h. wenigstens einen Bildsensor aufweisen, die (der) an dem Verbinder angeordnet ist, um die Aufnahme des Fahrzeugs optisch, insbesondere bildgebend zu erfassen.

Die Anfahrhilfsvorrichtung zur Unterstützung des mechanischen Ansteckens des Verbinders an die Aufnahme des Fahrzeugs kann in einer dritten Ausführung wenigstens eine Kamera d.h. wenigstens einen Bildsensor aufweisen, die (der) an dem Roboterarm, insbesondere Flansch angeordnet ist, um die Aufnahme des Fahrzeugs, und insbesondere gegebenenfalls auch einen Teil des Verbinders optisch, insbesondere bildgebend zu erfassen.

Die Anfahrhilfsvorrichtung zur Unterstützung des mechanischen Ansteckens des Verbinders an die Aufnahme des Fahrzeugs kann in einer vierten Ausführung wenigstens eine Kamera d.h. wenigstens einen Bildsensor aufweisen, die (der) an der Aufnahme des Fahrzeugs angeordnet ist, um den Verbinder und insbesondere gegebenenfalls auch einen Teil des Roboterarms optisch, insbesondere bildgebend zu erfassen.

Die Anfahrhilfsvorrichtung zur Unterstützung des mechanischen Ansteckens des Verbinders an die Aufnahme des Fahrzeugs kann in einer fünften Ausführung eine Bildauswerteeinrichtung aufweisen, die mit der wenigstens einen Kamera d.h. dem wenigstens einen Bildsensor verbunden ist, so dass von der Kamera oder dem Bildsensor erfasste Bilddaten von der Bildauswerteeinrichtung ausgewertet werden können. Auf Grundlage einer Auswertung der Bilddaten durch die Bildauswerteeinrichtung kann die Robotersteuerung veranlasst werden, den Verbinder genauer an die Aufnahme des Fahrzeugs heranzubewegen und dort in der Steckvorposition zu positionieren. Ein bezüglich der Aufnahme am Fahrzeug genauer positionierter Verbinder kann den automatischen Steckvorgang erleichtern, insbesondere fehlerfreier gestalten.

Die Anfahrhilfsvorrichtung zur Unterstützung des mechanischen Ansteckens des Verbinders an die Aufnahme des Fahrzeugs kann in einer sechsten Ausführung eine Bildauswerteeinrichtung aufweisen, die eingerichtet, während des Anfahrens des Verbinders mittels des Roboterarms, insbesondere eines Anfahrens in die Steckvorposition, Bilder der Aufnahme am Fahrzeug oder des Verbinders aus drei unterschiedlichen Stellungen zu erfassen.

Die Bildauswerteeinrichtung kann generell steuerungstechnisch mit der Robotersteuervorrichtung verbunden sein, so dass auf Grundlage der Bilddaten und der Auswertungen aus der Bildauswerteeinrichtung der Roboterarm entsprechend angesteuert werden kann, um den automatischen Steckvorgang zu verbessern, insbesondere fehlerfreier auszuführen. Die Bildauswerteeinrichtung kann insoweit steuerungstechnisch auch zum Aktivieren des Steckvorgangs herangezogen werden, d.h. ein Steckvorgang wird erst dann erlaubt d.h. freigeschaltet, wenn sich der Verbinder in einer ausreichend genauen Steckvorposition befindet.

Um den Steckvorgang als solches zu verbessern oder zu unterstützen, kann in einer siebten Ausführung der Verbinder mittels eines Ausgleichsgelenks an dem Flansch des Roboterarms gelagert sein, so dass während des Steckvorgangs, bei dem sich der Verbinder von der Steckvorposition in die Steckendposition bewegt, während des Ineinanderfügens von Verbinder und Aufnahme am Fahrzeug, der Verbinder mittels des Ausgleichsgelenks in geringfügigem Maße eine eigenständige, passive Ausgleichsbewegung ausführen kann, um selbsttätig besser in die Aufnahme hineinzufinden.

Um den Steckvorgang als solches zu verbessern oder zu unterstützen kann in einer achten Ausführung die Aufnahme am Fahrzeug eine konisch ausgebildete Zentriereinrichtung aufweisen. Eine solche konische Zentriereinrichtung kann gegebenenfalls mit einer entsprechend korrespondierenden Zentriereinrichtung am Verbinder zusammenwirken.

Um den Steckvorgang als solches zu verbessern oder zu unterstützen kann in einer neunten Ausführung die Aufnahme im Fahrzeug insgesamt elastisch am Fahrzeugkörper gelagert sein. So kann während des Steckvorgangs, bei dem sich der Verbinder von der Steckvorposition in die Steckendposition bewegt, während des Ineinanderfügens von Verbinder und Aufnahme am Fahrzeug, die Aufnahme am Fahrzeug mittels seiner elastischen Lagerung am Fahrzeugkörper in geringfügigem Maße eine eigenständige, passive Ausgleichsbewegung ausführen, um selbsttätig besser mit dem Verbinder zusammenzuwirken.

Um den Steckvorgang als solches zu verbessern oder zu unterstützen kann in einer zehnten Ausführung die Robotersteuervorrichtung eingerichtet sein, eine Fahrstrategie für das Bewegen des Verbinders von der Steckvorposition in die Steckendposition für das Bewegen des Roboterarms zur Verfügung zu stellen. Eine solche Fahrstrategie kann beispielsweise ein schwellendes Einstecken und/oder unterschiedliche Geschwindigkeitsrampen in den Bewegungsprofilen für den Steckvorgang bereitstellen. Eine alternative oder ergänzende Fahrstrategie kann auch ein Hin- und Herbewegen, wahlweise quer zur Steckrichtung oder in Steckrichtung bzw. entgegen der Steckrichtung umfassen. Eine sonstige Fahrstrategie kann auch ein geringfügiges Ändern in der Winkelanstellung des Verbinders relativ zur Aufnahme am Fahrzeug umfassen.

Um den Verbinder sicher in der Aufnahme des Fahrzeugs zu halten, wenn er eingesteckt ist, kann in einer elften Ausführung eine Verriegelung am Verbinder und/oder an der Aufnahme am Fahrzeug vorgesehen sein, die ausgebildet ist, in dem in die Aufnahme eingesteckten Zustand des Verbinders den Verbinder formschlüssig und/oder kraftschlüssig mit der Aufnahme am Fahrzeug zu verbinden, so dass während eines Ladevorgangs ein Entfernen des Verbinders von der Aufnahme zuverlässig verhindert ist.

Am Fahrzeug gibt es in der Regel bereits eine Verriegelungsvorrichtung, welche, sobald der Steckvorgang erfolgreich war, den eingesteckten Ladestecker verriegelt und so ein Herausziehen bzw. einen Diebstahl verhindert. Hierzu gibt es fahrzeugseitig einen Aktuator, der über eine Bohrung den Ladestecker blockiert. Alternativ zu der Verriegelungsvorrichtung kann erfindungsgemäß nun ein Aktor vorgesehen sein, der den Ladestecker, sobald die voreilenden Kontakte kontaktiert haben, den Ladestecker d.h. den Verbinder an das Fahrzeug heranzieht und verriegelt. Diese Lösung erfordert zwar etwas mehr Aufwand im Fahrzeug, würde aber auch das manuelle Handhaben der doch schweren Ladekabel (bis 95 mm² Querschnitt für jedes der beiden Kupferkabel, die den Ladestrom leiten) erleichtern. Insbesondere kann der Laderoboter beim Steckvorgang durch den Aktor unterstützt werden, wobei vorteilhafterweise die bislang stärker ausgelegten Steckachsen schwächer ausgebildet werden können. Zweckmäßigerweise können die Steckachsen analog zu den Positionierachsen ausgebildet sein, wodurch eine inhärente Sicherheit erreicht wird, da von den schwach ausgebildeten Positionierachsen keine Gefährdung für Personen ausgeht. Dieses Konzept kann eine Alternative zu einem Sicherheitsrelais sein.

Vorzugsweise wird ein System mit einer Vorrichtung zum automatischen Laden eines Fahrzeugs bereitgestellt, aufweisend einen Roboter, der eine Robotersteuervorrichtung und einen von der Robotersteuervorrichtung automatisch ansteuerbaren Roboterarm umfasst, wobei der Roboterarm mehrere über Gelenke miteinander verstellbar verbundene Glieder aufweist und den Gelenken Motoren des Roboterarms zugeordnet sind, derart, dass durch eine Ansteuern der Motoren mittels der Robotersteuervorrichtung die Gelenke automatisch verstellbar sind, um die Glieder des Roboterarms gegeneinander zu verstellen, so dass ein an einem Flansch des Roboterarms angeordneter Verbinder der Vorrichtung im Raum bewegt wird, um den Verbinder automatisch in eine zu dem Verbinder korrespondierende Aufnahme am Fahrzeug anzustecken, so dass in einem an die Aufnahme des Fahrzeugs angesteckten Zustand des Verbinders elektrische Energie dem Fahrzeug zuführbar ist, wobei die Glieder, die Gelenke und die Motoren zum Antreiben der Gelenke konstruktiv ausgelegt sind, in allen Bewegungsmöglichkeiten des Roboterarms im Falle einer Kollision stets weniger als 120 N und besonders bevorzugt weniger als etwa 60 N Kraft auf den Kollisionskörper zu übertragen, und das System einen weiteren Antrieb umfasst, der ausgebildet ist, den Verbinder aus einer durch Bewegen des Roboterarms angefahrenen Steckvorposition des Verbinders, in der sich der Verbinder eingriffsgeschützt vor der Aufnahme des Fahrzeugs befindet, in eine Steckendposition zu bewegen, in welcher Steckendposition der Verbinder in der Aufnahme des Fahrzeugs ordnungsgemäß angesteckt ist, so dass elektrische Energie und/oder Treibstoff dem Fahrzeug in der Steckendposition des Verbinders zuführbar ist, und aufweisend eine automatische Prüfvorrichtung, die ausgebildet ist, ein ordnungsgemäßes elektrisches Kontaktieren des Verbinders an die Aufnahme des Fahrzeugs zu überprüfen.

Es ist ausgeführt, wie die Absicherung des Steckerfolges bei einem Tankroboter erfolgen kann und zwar durch die Auswertung voreilender Kontakte beim Stecken des Ladekabels in das Fahrzeug. Hierdurch kann vorteilhafterweise sichergestellt werden, dass ein kräftiges Eindrücken nur bei Erreichen der Steckvorposition erfolgt und nicht, wenn eine gefährliche Klemmsituation vorliegt, beispielsweise in dem Fall dass eine Hand zwischen den Steckverbindern positioniert ist.

Dazu kann die Ladeschaltung derart modifiziert werden, um das Schließen von Kontakten detektieren zu können. Die Modifikation könnte entweder buchsenseitig bzw. auf der Seite des Ladekabels oder auf Seiten der Ladebox erfolgen. Entsprechend können die Modifikationen bei einer Vielzahl von Ladeboxen und Steckern abgestimmt werden, um eine Kompatibilität zu gewähren. Darüber hinaus sollte die Sicherheit der modifizieren Ladeschaltungen bei Belastungen von beispielsweise 1000 V DC und von 500 A sichergestellt werden.

Wenn die richtige Steckvorposition erreicht ist, bei der keine Klemmgefahren mehr besteht, kann sich der Stecker zweckmäßigerweise nur noch in Steckrichtung, das heißt in z-Richtung bewegen, da die dazu orthogonalen Richtungen x und y durch den fahrzeugseitigen Stecker bzw. das Inlay blockiert sind. Diese Bedingung, dass sich der Verbinder, beispielsweise die Ladebuchse am Kabel, in der Steckvorposition nicht mehr wesentlich bewegt, kann bevorzugt als Prüfbedingung verwendet werden, um das Erreichen der Steckvorposition zu bestimmen.

Insbesondere kann der Roboter bei Erreichen der Steckvorposition versuchen, durch kleine Versuchsbewegungen in x- und/oder y-Richtung zu verfahren. Gelingt diese Bewegung nicht, so ist dies ein Indiz, dass die Steckvorpositionierung erreicht wurde. Theoretisch könnte der Roboter an einer anderen Stelle in x- und y-Richtung verklemmt sein, so dass die Bedingung ebenfalls erfüllt wäre. Dies könnte beispielsweise dann geschehen, wenn die Bildverarbeitung irrtümlich ein Steckerprofil (Inlet) an einer falschen Stelle erkennt, diese dann angefahren wird und genau an dieser Stelle eine Blockierung in x- und y-Richtung, nicht aber in z-Richtung stattfindet. Dies ist ein unwahrscheinlicher Fall. Das Risiko des irrtümlich erkannten Steckerprofiles kann gesenkt werden, indem der Roboter unterschiedliche Perspektiven anfährt, aus denen die Kamera Bilder erfasst und somit eine räumliche Information des fahrzeugseitigen Ladesteckers (Inlet) erhält.

Vorzugsweise wird in der Steckvorposition eine elektrische Verbindung zwischen dem Ladekabel und dem Fahrzeug über den vorauseilenden Kontakt hergestellt, so dass Ströme zwischen Fahrzeug und Ladebox fließen können. Bevorzugt werden diese Ströme von einer Messeinrichtung erfasst, insbesondere ohne einen galvanischen Kontakt zwischen der Messeinrichtung und dem vorauseilenden Kontakt auszubilden. Besonders bevorzugt kann die Messeinrichtung induktiv oder kapazitiv mit dem vorauseilenden Kontakt oder einer damit elektrisch verbundenen Leitung gekoppelt sein. Vorteilhafterweise kann die elektrische Verbindung in der Steckvorposition erfasst bzw. detektiert werden ohne dass zu Anschluss der die dazu notwendigen Messeinrichtung die Stromführung bzw. Ladeschaltung zu verändern.

Vorzugsweise wird eine Vorrichtung zum automatischen Laden oder Betanken eines Fahrzeugs bereitgestellt, aufweisend einen Roboter, der eine Robotersteuervorrichtung und einen von der Robotersteuervorrichtung automatisch ansteuerbaren Roboterarm umfasst, wobei der Roboterarm mehrere über Gelenke miteinander verstellbar verbundene Glieder aufweist und den Gelenken Motoren des Roboterarms zugeordnet sind, derart, dass durch eine Ansteuern der Motoren mittels der Robotersteuervorrichtung die Gelenke automatisch verstellbar sind, um die Glieder des Roboterarms gegeneinander zu verstellen, so dass ein an einem Flansch des Roboterarms angeordneter Verbinder der Vorrichtung im Raum bewegt wird, um den Verbinder automatisch in eine zu dem Verbinder korrespondierende Aufnahme am Fahrzeug anzustecken, so dass in einem an die Aufnahme des Fahrzeugs angesteckten Zustand des Verbinders elektrische Energie und/oder Treibstoff dem Fahrzeug zuführbar ist, wobei die Glieder, die Gelenke und die Motoren zum Antreiben der Gelenke konstruktiv ausgelegt sind, in allen Bewegungsmöglichkeiten des Roboterarms im Falle einer Kollision stets weniger als 120 N und besonders bevorzugt weniger als etwa 60 N Kraft auf den Kollisionskörper zu übertragen, und die Vorrichtung einen weiteren Antrieb umfasst, der ausgebildet ist, den Verbinder aus einer durch Bewegen des Roboterarms angefahrenen Steckvorposition des Verbinders, in der sich der Verbinder eingriffsgeschützt vor der Aufnahme des Fahrzeugs befindet, in eine Steckendposition zu bewegen, in welcher Steckendposition der Verbinder in der Aufnahme des Fahrzeugs ordnungsgemäße angesteckt ist, so dass elektrische Energie und/oder Treibstoff dem Fahrzeug in der Steckendposition des Verbinders zuführbar ist, und wobei die Vorrichtung eine Höhenausgleichsvorrichtung aufweist, die ausgebildet ist, eine Veränderung der Höhenlage des Fahrzeugs während eines automatischen Ladevorgangs oder Tankvorgangs, während dem der Verbinder an die Aufnahme des Fahrzeugs zur Übertragung von elektrischer Energie oder eines Treibstoffes angeschlossen ist, dadurch auszugleichen, dass der Verbinder und/oder der Roboterarm in seiner Höhenlage automatisch verstellt wird.

Die Höhenausgleichsvorrichtung kann in einer ersten Ausführung durch eine Hubsäule gebildet werden, die einen Schlitten aufweist, der linear in der Höhe automatisch verstellbar ist. An dem Schlitten kann der Roboterarm somit höhenverstellbar gelagert sein.

In einer die Hubsäule weiterbildenden zweiten Ausführung kann der Schlitten gewichtskraftkompensiert ausgebildet sein. Dies bedeutet, dass die Hubsäule in antagonistischer Bauweise zum Schlitten ein Gegengewicht aufweisen kann, dass das Eigengewicht des Schlittens und gegebenenfalls auch das Eigengewicht des am Schlitten befestigten Roboterarms, insbesondere inklusive dem Verbinder kompensiert. Im Ergebnis muss der Antrieb für das Heben des Schlittens in vertikaler Richtung entgegen der Schwerkraftrichtung nicht die Gewichtskräfte von Schlitten und Roboterarm anheben, sondern der Antrieb für das Anheben lediglich die Stellkräfte zum Bewegen des Schlittens aufbringen.

Die Höhenausgleichsvorrichtung kann in einer dritten Ausführung durch die erste Grundachse des Roboterarms gebildet werden.

Vorzugsweise weist der Laderoboter eine vertikale Führung mit einem Antrieb auf, wodurch der Roboterarm vertikal verlagerbar ist. Mit anderen Worten kann die erste Achse des Laderoboters als Linearachse ausgebildet sein. Manche Fahrzeuge beispielsweise mit Luftfederung verändern während des Ladevorgangs ihre Höhe, weswegen herkömmlicherweise diese Höhe durch die Linearachse nachzuregeln ist. Bei Stromausfall und gleichzeitigem Absinken des Fahrzeuges besteht die Gefahr, dass das Fahrzeug, der Roboterarm und/oder die Ladebuchse d.h. der Verbinder beschädigt werden. Zudem sollte die Antriebseinheit der Linearachse derart ausgelegt werden, dass sie die Last des Roboterarmes sowie der Ladebuchse samt Kabel trägt, womit eine intrinsisch sichere Auslegung in der Regel nicht mehr möglich ist und erhöhte Aufwendungen in der Ansteuerung bezüglich der Sicherheit der (Linear-)Achse notwendig sind. Zudem sollte das Absinken des Fahrzeuges erfasst werden und die erste Achse dementsprechend ständig in Regelung bleiben. Dies führt zu höherem Verschleiß und Stromverbrauch.

Bevorzugt weist der Laderoboter einen Gewichtsausgleich für die Linearachse d.h. die Hubsäule auf. Der Roboterarm, der Schlitten der Linearachse und der Motor des Schlittens haben eine Masse. Besonders bevorzugt wird das Gewicht der Masse über eine Umlenkrolle geführtes Verbindungsglied, wie ein Seil oder Kette, mit dem Gegengewicht gekoppelt und dadurch die Kräfte weitgehend ausgeglichen. Insbesondere ist die Masse des Gegengewichts so gewählt, dass im Wesentlichen keine resultierende Kraft entsteht, insbesondere, dass die Haftreibung der Umlenkrolle größer als die resultierende Kraft, so dass ohne elektrischen Antrieb keine Verlagerung des Laderoboters erfolgt. Die Antriebseinheit muss vorteilhafterweise nur Reibungskräfte und Beschleunigungskräfte überwinden. Beim Absinken des Fahrzeuges während des Tankens oder Ladens wird der Laderoboter fast kraftlos und passiv, d.h. ohne jegliche Motorkraft mitbewegt. Falls die Vertikalkomponente der Steckkraft der sechsten Achse, welche die erste Achse während des Steckvorganges abstützen muss, die Kraft von 60 bis 120N (biomechanischer Grenzwerte minus jeweilige Sicherheiten) überschreitet, sollte bevorzugt eine Bremse vorgesehen sein, damit der intrinsisch sichere Charakter der ersten Achse nicht verletzt wird. Im stromlosen Zustand ist die Bremse geöffnet und die Antriebseinheit der ersten Achse ist bevorzugt rücktreibbar ausgebildet. Auf diese Weise ist in jedem Fall eine Selbstbefreiung durch Menschen in einer Klemmsituation möglich. Alternativ kann die Gewichtskompensation auch durch eine Federkraft erfolgen, wobei dann eine genaue konstante Kompensation auf dem gesamten Hubweg aufgrund der Nichtlinearität der Feder nicht ganz gelingt. Bei Verwendung einer anderen Ladebuchse mit einem anderen Gewicht ist eine Veränderung des Gegengewichts oder der Federvorspannung sinnvoll.

Die Höhenausgleichsvorrichtung bzw. die Hubsäule kann in einer vierten Ausführung zwischen dem Flansch des Roboterarms und dem Verbinder angeordnet sein. Durch eine solche eigene Zustelleinrichtung des Endeffektors d.h. des Verbinders kann die Zustellfunktion und Zustellbewegung d.h. das Heben und Senken des Verbinders vereinfacht und flexibilisiert werden. Eine Anpassung an unterschiedliche Arten von Fahrzeugen und an variierende Parkpositionen und sich verändernde Fahrzeughöhenlagen während dem Tanken bzw. Laden ist somit besser möglich.

Die Zustelleinrichtung kann mit einer Halterung für einen elektrischen Ladestecker verbunden sein. Dies erleichtert und flexibilisiert ebenfalls die Einsatzmöglichkeiten des Endeffektors. Die Halterung lässt sich für unterschiedliche Arten von Ladesteckern einsetzen und bedarfsweise anpassen. Sie kann auch bei Verfügbarkeit von unterschiedlichen Ladesteckern den benötigten Ladestecker selbsttätig greifen. Die Halterung ermöglicht auch eine wahlweise manuelle Bedienung.

Günstig ist außerdem, dass die Zustellbewegung direkt mit der Halterung erfolgt. Die Halterung bzw. der Ladestecker kann dadurch relativ zu der in Ruhe befindlichen Positioniervorrichtung bewegt werden. Dies kann eine kinematisch vereinfachte, insbesondere translatorische bzw. lineare Zustellbewegung sein. Dank der eigenen Zustelleinrichtung des Endeffektors ist die Zustellung und Kuppelung des Ladesteckers leichter, kräftemäßig effektiver und besser steuerbar.

Die Zustellrichtung kann mit der zum Ankuppeln und evtl. Entkuppeln günstigen Steckrichtung des Ladesteckers fluchtend ausgerichtet werden. Die bevorzugt lineare Steckrichtung ist diejenige Richtung, in welcher der Ladestecker mit seinen Stromkontakten kupplungsgerecht zur Ladebuchse ausgerichtet ist und in welcher er auch bewegt wird.

In einem zweiten Erfindungsgedanken weist der Endeffektor eine ein- und ausfahrbare Ausgleichseinrichtung für den Ladestecker, insbesondere die Halterung für den Ladestecker, auf. Die Ausgleichseinrichtung ist in mindestens einer Achse nachgiebig, insbesondere passiv, verstellbar und kann beim Laden und im gekuppelten Zustand von Ladestecker und Ladebuchse Relativbewegungen zwischen dem Fahrzeug und der Positioniervorrichtung ausgleichen. Dies sind insbesondere Relativbewegungen mit einer vertikalen Richtungskomponente. Sie entstehen z.B. beim Einfedern und Ausfedern des Fahrzeugs durch Laständerung, insbesondere durch Einsteigen oder Aussteigen von Passagieren oder bspw. durch sich absenkende Luftfedern. Die nachgiebige Ausgleichseinrichtung kompensiert solche Relativbewegungen und verhindert Beschädigungen an Ladestecker/Ladebuchse und am Endeffektor und dessen Teilen sowie auch an der Positioniervorrichtung.

Die Ausgleichseinrichtung zeichnet sich durch eine einfache konstruktive Ausführung und einen niedrigen Bauaufwand aus. In der bevorzugten Ausführungsform führt sie beim Ein- und Ausfahren eine passive Bewegung aus und kommt ohne eigene Antriebs- und Steuertechnik aus.

Alternativ kann die Ausgleichseinrichtung mit einer Antriebs- und ggf. Steuertechnik kombiniert werden. Sie kann auch für aktive ein- oder mehrachsige Positionierbewegungen, z.B. in der vertikalen z-Raumachse, eingesetzt werden. Für eine passive Ausgleichs- und Folgebewegung mit dem Fahrzeug kann die Ausgleichseinrichtung von ihrem Antrieb an- und abgekoppelt oder in anderer Weise steuerbar freigeschaltet werden.

Die Ausgleichseinrichtung eignet sich besonders für einen Endeffektor mit der vorgenannten eigenen Zustelleinrichtung und dem Anschluss zur Verbindung mit einer Positioniervorrichtung. Die Ausgleichseinrichtung kann aber auch mit anderen Endeffektoren ohne eine eigene Zustelleinrichtung eingesetzt werden. Sie kann außerdem direkt zwischen einem Ladestecker und einem Abtriebselement einer Positioniervorrichtung, z.B. einem mehrachsigen Roboter mit translatorischen und/oder rotatorischen Roboterachsen bzw. Bewegungsachsen, eingesetzt werden.

In der bevorzugten Ausführungsform eines Endeffektors mit einer eigenen Zustelleinrichtung kann die Ausgleichseinrichtung der Zustelleinrichtung vorgeschaltet sein und kann den Anschluss zur Verbindung mit der Positioniervorrichtung aufweisen. Die im Kuppelzustand mit der Ladebuchse starr verbundene Zustelleinrichtung kann durch die Ausgleichseinrichtung gegenüber der Positioniervorrichtung kinematisch entkoppelt werden. Die Zustelleinrichtung kann den Fahrzeugbewegungen folgen und kann sich dabei dank der Ausgleichseinrichtung relativ zu der Positioniervorrichtung bewegen. Die Positioniervorrichtung kann eine starre Pose einnehmen und braucht den Fahrzeugbewegungen selbst nicht zu folgen. Die Positioniervorrichtung wird dadurch in ihrer Kinematik und Steuerung vereinfacht. Sie wird durch die Ausgleichseinrichtung vor eventuellen Überlastungen und Beschädigungen geschützt.

Die Ausgleichseinrichtung kann in einer oder mehreren Achsen nachgiebig verstellbar sein. In den meisten Fällen genügt eine einachsige Verstellbarkeit, die z.B. translatorisch sein kann. Dies betrifft insbesondere Ausgleichsbewegungen in der vertikalen Raumachse bei eingenommener Betriebs- oder Kupplungsstellung. Die Ausgleichseinrichtung kann hierfür ein längenverstellbares Ausgleichselement aufweisen. Dies kann z.B. als Teleskopstange ausgebildet sein.

Die Ausgleichseinrichtung kann in mindestens einer vorgegebenen Stellung auf ihrem Bewegungsweg arretiert werden. Dies kann vorzugsweise die eingefahrene Endstellung sein. Die Ausgleichseinrichtung kann eine bevorzugt automatisch steuerbare Arretierung für die zumindest eine vorgegebene Stellung aufweisen. Sie kann alternativ manuell bedienbar sein.

Für die Ausbildung der automatischen Arretierung gibt es verschiedene konstruktive und funktionale Möglichkeiten. Sie kann z.B. ein eigenständig angetriebenes und steuerbares Arretiermittel, z.B. einen angetriebenen Riegel, aufweisen. In einer anderen Ausführungsform kann die Arretierung als Bajonettverschluss, z.B. mit Riegelbolzen und Riegelnut, ausgebildet sein. In dieser Variante kann die Arretierung von der Positioniervorrichtung betätigt werden, z.B. durch deren Drehbewegung.

Die Ausgleichseinrichtung kann sich bei gelöster Arretierung frei bewegen und kann den Fahrzeugbewegungen folgen. Zum Ankuppeln und Entkuppeln des Ladesteckers an bzw. von der Ladebuchse befindet sich die Ausgleichseinrichtung bevorzugt in ihrer eingefahrenen und arretierten Endstellung. Die Positioniervorrichtung bringt dazu die eventuell ausgefahrene Ausgleichseinrichtung in die eingefahrene Endstellung. In dieser wird die Arretierung betätigt.

Die Zustelleinrichtung bzw. die Ausgleichseinrichtung des Effektors d.h. des Verbinders kann einachsig oder mehrachsig beweglich sein. Sie kann ein mit der Halterung verbundenes Zustellelement aufweisen. Dieses wird entsprechend einachsig oder mehrachsig zum Ankuppeln und eventuell auch zum Entkuppeln bewegt. Die Zustelleinrichtung kann für diese Kinematik mindestens eine translatorisch und/oder rotatorische bewegliche Zustelleinheit aufweisen. Mindestens eine Zustelleinheit weist einen steuerbaren Antrieb auf. Diese gesteuert angetriebene Zustelleinheit führt z.B. eine translatorische, insbesondere lineare, Zustellbewegung aus. Das Zustellelement dieser Zustelleinheit kann mit dem Ladestecker, insbesondere mit der Halterung für den Ladestecker, verbunden sein. Eine andere Zustelleinheit kann ebenfalls automatisch oder ggf. auch manuell in eine vorgegebene Position gebracht und dann ggf. fixiert werden. Dies kann z.B. eine Schwenkstellung für einen fahrzeugspezifischen Einbauwinkel, einen sogenannten Nickwinkel, der Ladebuchse sein.

Vorzugsweise wird eine Vorrichtung zum automatischen Laden oder Betanken eines Fahrzeugs bereitgestellt, aufweisend einen Roboter, der eine Robotersteuervorrichtung und einen von der Robotersteuervorrichtung automatisch ansteuerbaren Roboterarm umfasst, wobei der Roboterarm mehrere über Gelenke miteinander verstellbar verbundene Glieder aufweist und den Gelenken Motoren des Roboterarms zugeordnet sind, derart, dass durch eine Ansteuern der Motoren mittels der Robotersteuervorrichtung die Gelenke automatisch verstellbar sind, um die Glieder des Roboterarms gegeneinander zu verstellen, so dass ein an einem Flansch des Roboterarms angeordneter Verbinder der Vorrichtung im Raum bewegt wird, um den Verbinder automatisch in eine zu dem Verbinder korrespondierende Aufnahme am Fahrzeug anzustecken, so dass in einem an die Aufnahme des Fahrzeugs angesteckten Zustand des Verbinders elektrische Energie und/oder Treibstoff dem Fahrzeug zuführbar ist, wobei die Glieder, die Gelenke und die Motoren zum Antreiben der Gelenke konstruktiv ausgelegt sind, in allen Bewegungsmöglichkeiten des Roboterarms im Falle einer Kollision stets weniger als 120 N und besonders bevorzugt weniger als etwa 60 N Kraft auf den Kollisionskörper zu übertragen, und die Vorrichtung einen weiteren Antrieb umfasst, der ausgebildet ist, den Verbinder aus einer durch Bewegen des Roboterarms angefahrenen Steckvorposition des Verbinders, in der sich der Verbinder eingriffsgeschützt vor der Aufnahme des Fahrzeugs befindet, in eine Steckendposition zu bewegen, in welcher Steckendposition der Verbinder in der Aufnahme des Fahrzeugs ordnungsgemäß angesteckt ist, so dass elektrische Energie und/oder Treibstoff dem Fahrzeug in der Steckendposition des Verbinders zuführbar ist, und wobei die den Gelenken des Roboterarms zugeordneten Motoren mittels der Robotersteuervorrichtung kraft- und/oder momentgeregelt angesteuert sind.

Vorzugsweise weist der Laderoboter, welcher zweckmäßigerweise zum Stecken der Ladebuchse des Ladekabels in den Stecker des Fahrzeugs verwendet werden kann, eine Robotersteuerung auf, die statt einer Kraftregelung (closed loop control) des Laderoboters eine Kraftsteuerung (open loop control) durchführt. Mit anderen Worten weist die Robotersteuerung bevorzugt keinen geschlossenen Regelkreis bzw. weist der Laderoboter keine von Kraftsensoren auf. Es kann zweckmäßigerweise davon ausgegangen werden, dass die Motorströme der Antriebe des Laderoboters proportional zum abgegebenen Motormoment sind. Dabei können Effekte wie beispielsweise die Reibung und Hysterese vernachlässigt oder in einem Modell abgeschätzt werden. Beim Stecken der roboterseitigen bzw. ladekabelseitigen Buchse in den fahrzeugseitigen Stecker ist die Position des Steckers als auch die Steckrichtung vorzugsweise bekannt. Ebenso sind die Steckkräfte in der Regel bekannt. Die Dynamik des Roboters ist vorteilhafterweise nicht vorhanden, so dass es im Wesentlichen keine dynamischen Kräfte gibt. Das heißt, abgesehen von der Schwerkraft werden an allen Gelenken des Laderoboters (also der Kombination aus Motor plus Lager) die gleichen Kräfte und Momente in gleicher Richtung übertragen (also actio = reactio bzw. Impulserhaltung). Werden nun noch die Gravitationskräfte, die berechenbar sind, berücksichtigt, können für alle betroffenen Achsen die zu übertragenden Momente (Kräfte) berechnet werden, die zum Halten des Laderoboters während des Steckens notwendig sind, und können hieraus die einzustellenden (= zu steuernden) Motorströme berechnet werden. Dies hat den Vorteil, dass unvorteilhafte Querkräfte beim Steckvorgang vermieden werden. Auch die Kräfte in Steckrichtung sind richtig dimensioniert. Hierdurch resultiert vorteilhafterweise eine Begrenzung sowohl der Steckkraft als auch der Steckrichtung, was auch in Bezug auf Sicherheit Vorteile ergibt. Kann der Steckvorgang unter den Begrenzungen nicht abgeschlossen werden, so liegt vermutlich eine erkannte Störung vor und Beschädigungen am Roboter, Fahrzeug, Menschen oder Umgebung können ggf. vermieden werden und somit die Sicherheit des Laderoboters in Bezug auf in der Nähe befindliche Menschen gesteigert werden. Eine reine Positionsregelung bietet diese Vorteile nicht.

### VIII. Kommunikationseinrichtungen:

Eine weitere Teilaufgabe wird erfindungsgemäß gelöst durch eine Vorrichtung zum automatischen Laden oder Betanken eines Fahrzeugs, aufweisend einen Roboter, der eine Robotersteuervorrichtung und einen von der Robotersteuervorrichtung automatisch ansteuerbaren Roboterarm umfasst, wobei der Roboterarm mehrere über Gelenke miteinander verstellbar verbundene Glieder aufweist und den Gelenken Motoren des Roboterarms zugeordnet sind, derart, dass durch eine Ansteuern der Motoren mittels der Robotersteuervorrichtung die Gelenke automatisch verstellbar sind, um die Glieder des Roboterarms gegeneinander zu verstellen, so dass ein an einem Flansch des Roboterarms angeordneter Verbinder der Vorrichtung im Raum bewegt wird, um den Verbinder automatisch in eine zu dem Verbinder korrespondierende Aufnahme am Fahrzeug anzustecken, so dass in einem an die Aufnahme des Fahrzeugs angesteckten Zustand des Verbinders elektrische Energie und/oder Treibstoff dem Fahrzeug zuführbar ist, wobei die Glieder, die Gelenke und die Motoren zum Antreiben der Gelenke konstruktiv ausgelegt sind, in allen Bewegungsmöglichkeiten des Roboterarms im Falle einer Kollision stets weniger als 120 N und besonders bevorzugt weniger als etwa 60 N Kraft auf den Kollisionskörper zu übertragen, und die Vorrichtung einen weiteren Antrieb umfasst, der ausgebildet ist, den Verbinder aus einer durch Bewegen des Roboterarms angefahrenen Steckvorposition des Verbinders, in der sich der Verbinder eingriffsgeschützt vor der Aufnahme des Fahrzeugs befindet, in eine Steckendposition zu bewegen, in welcher Steckendposition der Verbinder in der Aufnahme des Fahrzeugs ordnungsgemäß angesteckt ist, so dass elektrische Energie und/oder Treibstoff dem Fahrzeug in der Steckendposition des Verbinders zuführbar ist, und wobei die Vorrichtung eine Kommunikationseinrichtung aufweist, die ausgebildet ist, einen Datenaustausch zwischen einer Fahrzeugsteuervorrichtung und einer Systemsteuervorrichtung der Vorrichtung zum automatischen Laden des Fahrzeugs zu realisieren.

In einer ersten Ausführung kann die Kommunikationseinrichtung drahtlos (mittels Funk) oder kabelgebunden übermitteln. Bei einer kabelgebundenen Übermittlung von Daten kann die Kommunikationseinrichtung Daten über wenigstens einen ersten elektrischen Kontakt zwischen dem Verbinder und der Aufnahme am Fahrzeug übermitteln.

Die durch die Kommunikationseinrichtung übermittelten Daten können in einer zweiten Ausführung auch an die Robotersteuerung weitergegeben werden. Alternativ können die Daten in der Fahrzeugsteuervorrichtung und/oder in der Systemsteuervorrichtung ausgewertet werden und ausgewertete Ergebnisse an die Robotersteuerung weitergegeben werden.

Die Auswertung kann in einer dritten Ausführung bevorzugt über eine Widerstandsmessung bei der Schließung des Stromkreises erfolgen oder aber auch durch Messen einer Kapazitätsveränderung, wenn das Fahrzeug an den Stecker d.h. den Verbinder angeschlossen ist. Hier wird besonders bevorzugt lediglich nur die erste Kontaktierung, das heißt die Verbindung des Schutzleiters (PE) ausreichend sein. Der Abgriff der konnektorseitigen Kontakte könnte am Stecker erfolgen oder über entsprechende Kommunikation mit der Ladestation.

Ergänzend oder alternativ kann ein RF-Chip (auch als RFID-Chip oder Near-Field-Communication Device) im oder am Ladestecker des Fahrzeugs angeordnet sein. Die Reichweite des Chips ist sehr gering, bevorzugt kleiner als 1 Meter, besonders bevorzugt kleiner als 50 Zentimeter und insbesondere kleiner als 10 Zentimeter, so dass das Signal nur bei erfolgreicher Näherung des Ladesteckers der Ladestation an das Fahrzeug bzw. dessen Ladestecker messbar bzw. auswertbar ist. Der Inhalt des RF-Chips könnte auch vom Ladesystem dazu verwendet werden, Abrechnungsvorgänge zu unterstützen. Dies ist insbesondere interessant, wenn das Fahrzeug autonom an die Ladestation vorfährt und der Fahrzeugbesitzer sich nicht durch eine Karte identifizieren kann. Eine Antenne ist am Endeffektor des Laderoboters vorzusehen, um den Inhalt des Chips auslesen zu können. Die Antenne kann mit der Ladestation bzw. der Steuerung des Laderoboters verbunden sein, um die vom RF-Chip gelesenen Daten in die Ladestation bzw. die Steuerung zu übertragen.

Vorzugsweise wird eine Vorrichtung zum automatischen Laden oder Betanken eines Fahrzeugs bereitgestellt, aufweisend einen Roboter, der eine Robotersteuervorrichtung und einen von der Robotersteuervorrichtung automatisch ansteuerbaren Roboterarm umfasst, wobei der Roboterarm mehrere über Gelenke miteinander verstellbar verbundene Glieder aufweist und den Gelenken Motoren des Roboterarms zugeordnet sind, derart, dass durch eine Ansteuern der Motoren mittels der Robotersteuervorrichtung die Gelenke automatisch verstellbar sind, um die Glieder des Roboterarms gegeneinander zu verstellen, so dass ein an einem Flansch des Roboterarms angeordneter Verbinder der Vorrichtung im Raum bewegt wird, um den Verbinder automatisch in eine zu dem Verbinder korrespondierende Aufnahme am Fahrzeug anzustecken, so dass in einem an die Aufnahme des Fahrzeugs angesteckten Zustand des Verbinders elektrische Energie und/oder Treibstoff dem Fahrzeug zuführbar ist, wobei die Glieder, die Gelenke und die Motoren zum Antreiben der Gelenke konstruktiv ausgelegt sind, in allen Bewegungsmöglichkeiten des Roboterarms im Falle einer Kollision stets weniger als 120 N und besonders bevorzugt weniger als etwa 60 N Kraft auf den Kollisionskörper zu übertragen, und die Vorrichtung einen weiteren Antrieb umfasst, der ausgebildet ist, den Verbinder aus einer durch Bewegen des Roboterarms angefahrenen Steckvorposition des Verbinders, in der sich der Verbinder eingriffsgeschützt vor der Aufnahme des Fahrzeugs befindet, in eine Steckendposition zu bewegen, in welcher Steckendposition der Verbinder in der Aufnahme des Fahrzeugs ordnungsgemäß angesteckt ist, so dass elektrische Energie und/oder Treibstoff dem Fahrzeug in der Steckendposition des Verbinders zuführbar ist, und wobei die Vorrichtung wenigstens ein Sicherheitsrelais aufweist, das ausgebildet ist, auf Grundlage eines elektrischen Signals eine Versorgung des wenigstens einen Motors des Roboterarms und/oder der wenigstens einen Bremse zumindest eines der Gelenke des Roboterarms mit elektrischer Energie zu unterbrechen.

Das Sicherheitsrelais kann auch als Sicherheitsschaltgerät bezeichnet werden. Ein Sicherheitsschaltgerät realisiert Sicherheitsfunktionen bei Maschinen und Anlagen, insbesondere bei solchen mit elektrischen Antrieben. Sie überwachen gefahrbringende Funktionen und sollen das Gefährdungsrisiko für das Bedienpersonal durch geeignete Maßnahmen auf ein akzeptables Maß reduzieren. Ein herkömmliches Schaltrelais verwendet eine Drahtspule und die damit hervorgerufene mechanische Bewegung der Metallkontakte zum Ein- und Ausschalten der Last. Nach wiederholten Schaltzyklen oder bei Fehlern können die Metallkontakte verschweißen. Wenn das passiert ist und der Bediener den Notausschalter betätigt, würde die Maschine weiterlaufen. Dadurch entstünde ein gefahrbringender Zustand für den Bediener. Die Sicherheitsstandards sehen daher, statt einfacher Relais bzw. Schützen, die Anwendung von Relais und Schützen mit zwangsgeführten Kontakten vor. Statt einer solchen kontaktbehafteten Relaistechnik (Sicherheitsrelais) können in analoger Weise aber auch mit elektronischer Auswertung und kontaktbehafteten potentialfreien Ausgängen arbeiten oder es können vollelektronische Geräten mit Halbleiterausgängen zur Anwendung kommen.

Das elektrische Signal, welches das Sicherheitsrelais steuert d.h. betätigt kann durch die Robotersteuerung erzeugt und/oder abgesandt d.h. dem Sicherheitsrelais übermittelt werden.

Das Sicherheitsrelais, das ausgebildet ist, auf Grundlage eines elektrischen Signals eine Versorgung des wenigstens einen Motors des Roboterarms und/oder der wenigstens einen Bremse zumindest eines der Gelenke des Roboterarms mit elektrischer Energie zu unterbrechen, kann in einer ersten Ausführung

Es besteht insbesondere nur eine Gefährdung von Personen durch den Betrieb des Laderoboters d.h. des Roboterarms, der den Verbinder trägt, wenn eine der Steckachsen d.h. der Antrieb oder die Antriebe, welche den Verbinder von der Steckvorposition in die Steckposition bewegen, betrieben werden. Deshalb sollten dabei die Bremsen der Positionierachsen aktiviert bzw. geschlossen sein. Da alle anderen Achsen so schwach bzw. nachgiebig ausgelegt sind, dass keine Gefährdung besteht, können diese ohne besondere Sicherheitstechnik auskommen. Bevorzugt kann deshalb eine Sicherheitssteuerung wie folgt vereinfacht werden.

Die Stromversorgung für den Antrieb der wenigstens einen Steckachse d.h. des Antriebs welcher den Verbinder von der Steckvorposition in die Steckposition bewegt, insbesondere auch der zugeordneten Bremsen, wird über ein Sicherheitsrelais unterbrochen. Dieses Sicherheitsrelais kann eingangsseitig mit einem Signal der voreilenden Kontakte oder/und der Antennenauswertung (RF-Chip) des Verbinders verbunden sein. Bevorzugt wird ein Sicherheitsbus vermieden und der Antrieb der Steckachse(n) und bevorzugt auch die zugeordneten Bremsen, über separate Leitungen über das Sicherheitsrelais versorgt. Im geschalteten Zustand versorgt das Sicherheitsrelais also den Antrieb bzw. die Motortreiber und ggf. auch die Bremsen mit einer Versorgungsspannung und ist in der Lage diese auch sicher zu trennen. Dazu kann eine zusätzliche elektrische Leitung am Verbinder und/oder am Roboterarm vorgesehen sein.

Vorzugsweise wird eine Vorrichtung zum automatischen Laden oder Betanken eines Fahrzeugs bereitgestellt, aufweisend einen Roboter, der eine Robotersteuervorrichtung und einen von der Robotersteuervorrichtung automatisch ansteuerbaren Roboterarm umfasst, wobei der Roboterarm mehrere über Gelenke miteinander verstellbar verbundene Glieder aufweist und den Gelenken Motoren des Roboterarms zugeordnet sind, derart, dass durch eine Ansteuern der Motoren mittels der Robotersteuervorrichtung die Gelenke automatisch verstellbar sind, um die Glieder des Roboterarms gegeneinander zu verstellen, so dass ein an einem Flansch des Roboterarms angeordneter Verbinder der Vorrichtung im Raum bewegt wird, um den Verbinder automatisch in eine zu dem Verbinder korrespondierende Aufnahme am Fahrzeug anzustecken, so dass in einem an die Aufnahme des Fahrzeugs angesteckten Zustand des Verbinders elektrische Energie und/oder Treibstoff dem Fahrzeug zuführbar ist, wobei die Glieder, die Gelenke und die Motoren zum Antreiben der Gelenke konstruktiv ausgelegt sind, in allen Bewegungsmöglichkeiten des Roboterarms im Falle einer Kollision stets weniger als 120 N und besonders bevorzugt weniger als etwa 60 N Kraft auf den Kollisionskörper zu übertragen, und die Vorrichtung einen weiteren Antrieb umfasst, der ausgebildet ist, den Verbinder aus einer durch Bewegen des Roboterarms angefahrenen Steckvorposition des Verbinders, in der sich der Verbinder eingriffsgeschützt vor der Aufnahme des Fahrzeugs befindet, in eine Steckendposition zu bewegen, in welcher Steckendposition der Verbinder in der Aufnahme des Fahrzeugs ordnungsgemäß angesteckt ist, so dass elektrische Energie und/oder Treibstoff dem Fahrzeug in der Steckendposition des Verbinders zuführbar ist, und wobei die Vorrichtung eine Einrichtung zur Vermeidung von Singularitätsstellungen des Roboterarms aufweist.

Der Roboterarm kann im Falle des vorliegenden Ausführungsbeispiels mehrere, nacheinander angeordnete und mittels Gelenke verbundene Glieder umfassen. Bei den Gliedern handelt es sich insbesondere um ein Grundgestell und ein relativ zum Grundgestell um eine erste Drehachse drehbar gelagertes Karussell. Eine Schwinge ist am einen Ende z.B. an einem nicht näher dargestellten Schwingenlagerkopf auf dem Karussell um eine zweite Drehachse schwenkbar gelagert. Am anderen Ende der Schwinge ist um eine dritte Drehachse ein Armausleger schwenkbar gelagert. Dieser Armausleger trägt endseitig eine Roboterhand mit ihren vorzugsweise weiteren drei Drehachsen. Der Armausleger kann im Falle eines Ausführungsbeispiels einen schwenkbar an der Schwinge gelagerten Grundarm aufweisen. An dem Grundarm kann ein Vorderarm des Armauslegers um eine vierte Drehachse drehbar gelagert sein. Weitere Glieder des Roboterarms können im Falle dieses Ausführungsbeispiels neben dem Grundgestell, dem Karussell, der Schwinge und dem Grundarm, außerdem weitere Glieder der vorzugsweise mehrachsigen Roboterhand mit einer als Flansch ausgeführten Befestigungsvorrichtung zum Befestigen des Verbinders sein. Der Roboterarm kann demgemäß beispielsweise als eine serielle Kinematik ausgebildet sein, insbesondere in Art eines Knickarmroboters oder in Art eines sogenannten SCARA-Roboters.

Bei einigen Roboterkinematiken, wie beispielsweise auch bei Kickarmrobotern oder SCARA-Robotern gibt es Roboterachskonfigurationen, die Singularitäten darstellen. Eine Singularität ist dadurch gekennzeichnet, dass zwei Gelenke d.h. Achsen des Roboters miteinander in derselben Flucht stehen d.h. die Drehachsen dieser zwei Gelenke liegen auf derselben Geraden. Eine typische Konfiguration mit Singularität ist beispielsweise im Falle eines 6-Achs-Kickarmroboters eine ganz gestreckte Stellung des Roboterarms. Hier fluchten die erste Achse und die letzte d.h. die sechste Achse. Die Robotersteuerung kann in einer solchen getreckten Armstellung eine auszuführende Rotation um diese Achsen nicht eindeutig der ersten Achse oder der sechsten Achse zuordnen. Eine weitere Konstellation ist bei der Nullstellung der fünften Achse gegeben, in der die vierte Achse und die sechste Achse miteinander fluchten. Auch dabei gibt es unendlich viele Achsstellungen, so dass die Robotersteuerung keine eindeutigen Achsgelenkstellungen berechnen kann.

Bewegungen des Roboterarms in der Nähe von Singularitätsstellungen können für Benutzer eines Roboters zu unvorhergesehenen Reaktionen d.h. Bewegungen des Roboterarms führen. Theoretisch könnten rein rechnerisch dabei unendlich große Geschwindigkeiten der Gelenkbewegungen auftreten. In der Realität ist dies natürlich nicht möglich, aber es können plötzlich sehr hohe Beschleunigungen auftreten, die im Ergebnis auch zu sehr hohen Geschwindigkeiten in den Gelenkbewegungen führen können. Im Hinblick auf die Sicherheitstechnik werden solche Singularitätsstellungen als kritisch erachtet und sollten, soweit möglich, vermieden werden.

Die Einrichtung zur Vermeidung von Singularitätsstellungen des Roboterarms kann in einer ersten Ausführung eine steuerungstechnische Einrichtung sein, die beispielsweise in der Robotersteuerung eingerichtet sein kann und durch eine redundante und/oder diversitäre Ausbildung der Steuerungskomponenten, eine sichere Robotersteuerung bildet, derart dass die Robotersteuerung steuerungstechnisch die Singularitätsstellungen des Roboterarms vermeidet.

Die Einrichtung zur Vermeidung von Singularitätsstellungen des Roboterarms kann in einer zweiten Ausführung eine mechanische Einrichtung sein, derart, dass der Roboterarm an mindestens einem seiner Gelenke, an mehreren Gelenken oder sogar allen Gelenken in eine Drehrichtung oder in beide Drehrichtungen des jeweiligen Gelenks durch mechanische Anschläge in seiner Bewegungsfreiheit begrenzt ist, wobei die mechanische Einrichtung derart ausgebildet und angeordnet ist, dass der Roboterarm bzw. die jeweiligen betreffenden Gelenke nicht in eine Gelenkstellung gebracht werden können, in denen eine Singularitätsstellung gegeben wäre. Die Anschläge können beispielsweise von starren Vorsprüngen an den benachbarten Gliedern oder Gliedergehäuseteilen, die durch das Gelenk verbunden sind, gebildet werden.

Die Einrichtung zur Vermeidung von Singularitätsstellungen des Roboterarms kann in einer dritten Ausführung eine von den Gelenken und/oder dem Roboterarm separate mechanische Sicherheitseinrichtung sein, die von außen auf den Roboterarm bewegungsbegrenzend mit vom Roboterarm externen mechanischen Begrenzungsmitteln einwirkt.

Die Einrichtung zur Vermeidung von Singularitätsstellungen des Roboterarms kann in einer die dritte Ausführung weiterbildenden vierten Ausführung ein Begrenzungsseil sein, das an seinem ersten Seilende statisch festgelegt ist, beispielsweise an einer Wand, einem Fundament oder einem Boden befestigt ist, oder mit dem Grundgestell des Roboterarms verbunden ist. Das andere, zweite Seilende kann mit dem Flansch des Roboterarms oder mit einem in der kinematischen Kette der Glieder des Roboterarms dem Flansch unmittelbar vorgelagerten Glied verbunden sein. Das Begrenzungsseil kann eine feste Länge oder eine zwar ausfahrbare, einfahrbare und insoweit veränderliche Länge aufweisen, wobei jedoch eine maximale Auszugslänge des Begrenzungsseils vorgegeben bzw. mechanisch begrenzt ist. Aufgrund der festen Länge oder aufgrund der maximalen Auszugslänge kann der Roboterarm mittels des Begrenzungsseils zurückgehalten werden, derart, dass der Roboterarm seine Streckstellung nicht einnehmen kann.

Die Einrichtung zur Vermeidung von Singularitätsstellungen des Roboterarms kann demgemäß in einer die dritte Ausführung weiterbildenden fünften Ausführung ein Begrenzungsseil sein, das eine feste Länge aufweist. Alternativ kann das Begrenzungsseil eine ausfahrbare und einfahrbare und insoweit veränderliche Länge aufweisen, wobei jedoch eine maximale Auszugslänge des Begrenzungsseils vorgegeben bzw. mechanisch begrenzt ist.

Die Einrichtung zur Vermeidung von Singularitätsstellungen des Roboterarms kann demgemäß in einer weiterbildenden sechsten Ausführung ein Begrenzungsseil aufweisen, das auf einer Seilrolle oder Kabeltrommel aufgewickelt ist und je nach momentaner Gelenkkonfiguration des Roboterarms d.h. je nach Stellung seiner Gelenke mehr oder weniger lang von der Seilrolle oder Kabeltrommel abgewickelt ist. Bei Erreichen einer maximalen Auszugslänge d.h. Abwickellänge von der Seilrolle oder Kabeltrommel kann das Begrenzungsseil nicht weiter herausgezogen werden und der Roboterarm ist demgemäß in seinem Arbeitsraum durch das Begrenzungsseil limitiert, insbesondere gegen Erreichen einer Singularitätsstellung d.h. seiner Streckstellung begrenzt. Indem das Begrenzungsseil ausziehbar und wieder einziehbar bzw. ausfahrbare und wieder einfahrbare ausgebildet ist, wird verhindert, dass das Begrenzungsseil durchhängt und es ist sichergestellt, dass das Begrenzungsseil stets gespannt ist.

Die Einrichtung zur Vermeidung von Singularitätsstellungen des Roboterarms kann demgemäß in einer weiterbildenden siebten Ausführung ein Begrenzungsseil aufweisen, dem eine Schaltvorrichtung, insbesondere eine elektrische oder elektro-mechanische Schaltvorrichtung zugeordnet ist. Die Schaltvorrichtung kann steuerungstechnisch mit der Robotersteuerung verbunden sein. Die Schaltvorrichtung und die Robotersteuerung können in Verbindung miteinander ausgebildet sein, das Begrenzungsseil zu überwachen, derart, dass bei Erreichen der maximalen Länge des Begrenzungsseils oder bei Erreichen der maximalen Auszugslänge die Schaltvorrichtung insoweit ein Signal an die Robotersteuerung sendet, dass das Erreichen oder zumindest eine Annäherung des Roboterarms an ein seiner Singularitätsstellungen kennzeichnet.

Vorzugsweise wird die Sicherheit des Laderoboters d.h. des Roboterarms durch eine Vermeidung von Singularitäten in der Stellung bzw. Pose des Laderoboters erhöht, wobei die Vermeidung bevorzugt durch eine hardwaremäßige Sicherheitseinrichtung wie oben beschrieben erfolgt. Weiter bevorzugt ist die Sicherheitseinrichtung demgemäß als Begrenzungsseil ausgebildet, dass verhindert, dass der Roboterarm in eine Singularitätsstellung, insbesondere in eine gestreckte Stellung des Roboterarms fährt.

Mit anderer Worten betrifft ein Aspekt eine Vorrichtung zum Laden eines Elektrofahrzeugs mit elektrischer Energie, wobei die Vorrichtung eines oder mehrere der folgenden Merkmale umfasst:
- einen Laderoboter mit mehreren Gliedern, die miteinander über drehbare bzw. rotierbare bzw. verschiebbare Achsen verbunden sind;
- einen Ladestecker, der entweder an einem Endeffektor des Laderoboters angeordnet ist oder den Endeffektor ausbildet;
- zumindest zwei Ladekontakte, die am Ladestecker ausgebildet sind und ausgelegt sind den Ladestrom für das Elektrofahrzeug zu leiten;
- zumindest einen Schutzkontakt, der mit einem Schutzleiter elektrisch verbunden ist, und der ausgelegt und angeordnet ist, einen komplementären Schutzkontakt am zu ladenden Fahrzeug elektrisch zu kontaktieren, bevor die zwei Ladekontakte elektrisch kontaktiert werden;
- zumindest einen Kommunikationskontakt, der mit einem Kommunikationsleiter elektrisch verbunden ist, und der bevorzugt ausgelegt und angeordnet ist, einen komplementären Kommunikationskontakt am zu ladenden Fahrzeug elektrisch zu kontaktieren, bevor die zwei Ladekontakte elektrisch kontaktiert werden und insbesondere ausgelegt und angeordnet ist zu kontaktieren nachdem der Schutzkontakt kontaktiert ist;
- zumindest einen Aktor, welche im bzw. am Ladestecker des Laderoboters angeordnet sein kann, und welcher angeordnet und ausgelegt ist, den mit dem komplementären Ladestecker des Fahrzeugs in Eingriff bzw. Reibschluss zu gelangen, um eine Steckkraft aufzubringen, um die beiden Ladestecker in eine Steckposition zu bewegen, in der beide Ladestecker miteinander verriegelt sein können, bevorzugt mittels des Aktors;
- eine oder mehrere Steckachsen, die überwiegend aktuiert werden, um einen Steckvorgang des Ladesteckers durchzuführen;
- eine oder mehrere Positionierachsen, die überwiegend aktuiert werden, um einen Positioniervorgang des Ladesteckers durchzuführen, wobei die Antriebe der Positionierachse(n) bevorzugt schwächer ausgebildet sind als die Antriebe der Steckachse(n).

Vorteilhafterweise kann der Laderoboter mit schwächeren Antrieben und einer weniger steifen und damit leichteren Mechanik ausgebildet sein, was Material und Herstellungskosten reduziert. Weiter vorteilhafterweise kann eine Gefährdung von Personen durch den Laderoboter durch seinen Aufbau ausgeschlossen werden und zwar vorteilhafterweise ohne weitere Sicherheitseinrichtungen.

Die heutigen Elektrofahrzeuge weisen Ladestecker ("Inlays") auf, die mit Ladebuchsen ("Konnektoren") entweder manuell oder robotisch bzw. automatisch verbunden werden können. Insbesondere soll hier der Fall betrachtet werden, dass ein Laderoboter den Ladestecker der Ladestation mit dem komplementären Ladestecker des Fahrzeugs automatisch elektrisch und mechanisch verbindet. Dazu können insbesondere 6-Achs- oder 7-Achs-Mechaniken eingesetzt werden, wobei eine oder mehrere Achsen (Positionierachsen) überwiegend die Positionierung des Ladesteckers bewirken und eine oder mehrere Achsen (Steckachsen) überwiegend den Steckvorgang, d.h. die Linearbewegung zum Stecken, bewirken. Das der Steckvorgang eine vorbestimmte Steckkraft benötigt, sind die Steckachsen in der Regel stärker ausgelegt, insbesondere mit stärkeren Antrieben, als die Positionierachsen. Es versteht sich, das eine oder mehrere Achsen sowohl die Aufgabe als Steckachse und Positionierachse übernehmen kann.

Beim Verbinden des Elektrofahrzeugs mit einer Ladestation werden neben den Stromversorgungsleitern auch Kommunikationsleiter (CC1, CC2) und Schutzleiter (PE) beim Steckvorgang über zugeordnete Steckkontakte mit dem Fahrzeug über zugeordnete komplementäre Steckkontakte des Fahrzeugs verbunden. Die mit dem Kommunikationsleiter bzw. Schutzleiter verbundenen Kontakte sind voreilend. Sie kontaktieren insbesondere in der Reihenfolge Schutzleiter, erster Kommunikationsleiter, zweiter Kommunikationsleiter (PE->CC2->CC1). Fahrzeugseitig können die komplementären Steckkontakte jeweils über einen Widerstand mit einer Spannungsquelle verbunden sein. Auf diese Weise werden beim Steckvorgang sukzessive Stromkreise bestromt, so dass die Ladestation den Steckerfolg messtechnisch ermitteln kann. Das Schließen der Stromkreise durch die voreilenden Kontakte kann der Robotersteuerung als zusätzliches Signal bereitgestellt werden, um die Robotersteuerung zu einer Aktion zu veranlassen, beispielsweise um den/die Antrieb(e) einer oder mehrerer Achsen zu starten und/oder zu stoppen.

Die Auswertung kann bevorzugt über eine Widerstandsmessung bei der Schließung des Stromkreises erfolgen oder aber auch durch Messen einer Kapazitätsveränderung, wenn das Fahrzeug an den Stecker angedockt wird. Hier wird besonders bevorzugt lediglich sogar die erste Kontaktierung, das heißt die Verbindung des Schutzleiters (PE) ausreichend sein. Der Abgriff der konnektorseitigen Kontakte könnte am Stecker erfolgen oder über entsprechende Kommunikation mit der Ladestation.

Ergänzend oder alternativ kann ein RF-Chip (auch als RFID-Chip oder Near-Field-Communication Device) im oder am Ladestecker des Fahrzeugs angeordnet sein. Die Reichweite des Chips ist sehr gering, bevorzugt kleiner als 1m, besonders bevorzugt kleiner als 50cm und insbesondere kleiner als 10 cm, so dass das Signal nur bei erfolgreicher Näherung des Ladesteckers der Ladestation an das Fahrzeug bzw. dessen Ladestecker messbar bzw. auswertbar ist. Der Inhalt des RF-Chips könnte auch vom Ladesystem dazu verwendet werden, Abrechnungsvorgänge zu unterstützen. Dies ist insbesondere interessant, wenn das Fahrzeug autonom an die Ladestation vorfährt und der Fahrzeugbesitzer sich nicht durch eine Karte identifizieren kann. Eine Antenne ist am Endeffektor des Laderoboters vorzusehen, um den Inhalt des Chips auslesen zu können. Die Antenne kann mit der Ladestation bzw. der Steuerung des Laderoboters verbunden sein, um die vom RF-Chip gelesenen Daten in die Ladestation bzw. die Steuerung zu übertragen.

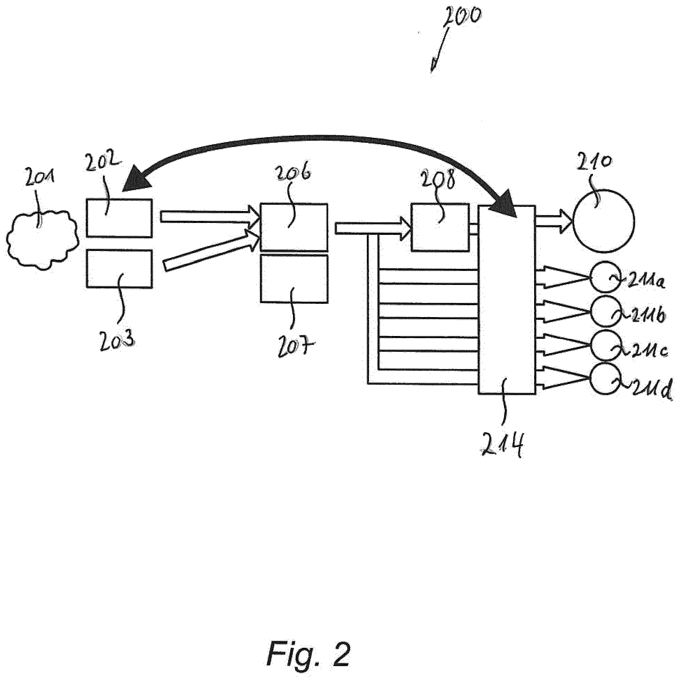

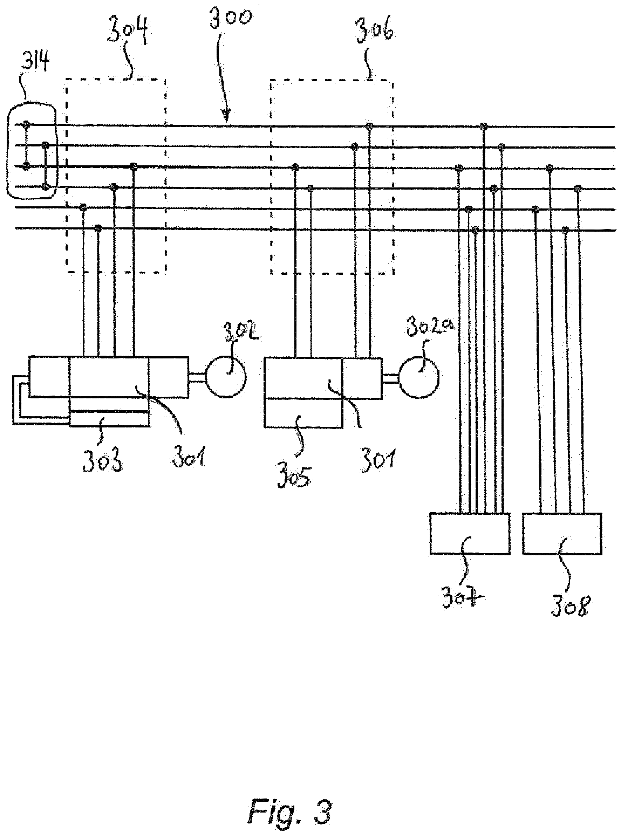

Es besteht insbesondere nur eine Gefährdung von Personen durch den Betrieb des Laderoboters, wenn eine der Steckachsen betrieben wird und die Bremsen der Positionierachsen aktiviert bzw. geschlossen sind. Alle anderen Achsen können so schwach bzw. nachgiebig ausgelegt werden, dass keine Gefährdung besteht. Bevorzugt kann eine Sicherheitssteuerung wie folgt vereinfacht werden: Die Stromversorgung für den Antrieb der Steckachse(n), insbesondere auch der zugeordneten Bremsen, wird über ein Sicherheitsrelais unterbrochen (siehe auch Figur 2). Dieses Sicherheitsrelais wird eingangsseitig mit dem Signal der voreilenden Kontakte oder/und der Antennenauswertung (RF-Chip) verbunden. Bevorzugt wird ein Sicherheitsbus vermieden und der Antrieb der Steckachse(n) und bevorzugt auch die zugeordneten Bremsen, über separate Leitungen über das Sicherheitsrelais versorgt. Im geschalteten Zustand versorgt das Sicherheitsrelais also den Antrieb bzw. Motortreiber (ggf. auch die Bremsen) mit der Versorgungsspannung und ist in der Lage diese auch sicher zu trennen. In Figur 3 ist diese zusätzliche Leitung in rot dargestellt.

Ein weitere Aspekt der Erfindung betrifft einen Ladestecker eines Elektrofahrzeugs zum Betanken mit elektrischer Energie, wobei der Ladestecker eines oder mehrere der folgenden Merkmale umfasst:
- zumindest einen Aktor, welche im bzw. am Ladestecker des Fahrzeugs angeordnet sein kann, und welcher angeordnet und ausgelegt ist, mit einem Ladestecker einer Ladevorrichtung (robotisch oder manuell) in Eingriff bzw. Reibschluss zu gelangen, um eine Steckkraft aufzubringen, um die beiden Ladestecker in eine Steckposition zu bewegen, in der beide Ladestecker miteinander verriegelt sein können, bevorzugt mittels des Aktors.

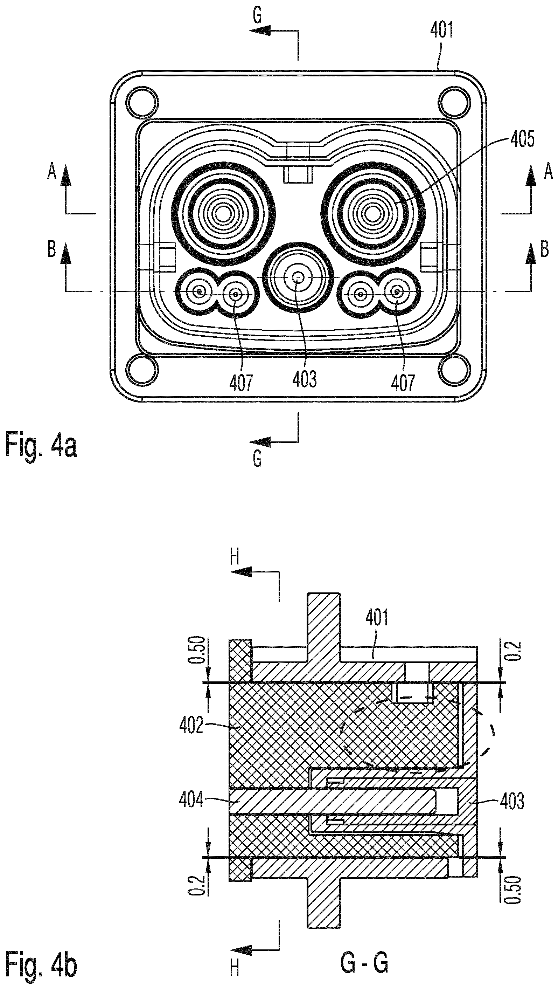

Am Fahrzeug gibt es in der Regel eine Verriegelungsvorrichtung (siehe Figur 4), welche, sobald der Steckvorgang erfolgreich war, den eingesteckten Ladestecker verriegelt und so ein Herausziehen bzw. einen Diebstahl verhindert. Hierzu gibt es fahrzeugseitig einen Aktuator, der über eine Bohrung den Ladestecker blockiert. Alternativ zu der Verriegelungsvorrichtung könnten nun einen Aktor vorgesehen sein, der den Ladestecker, sobald die voreilenden Kontakte kontaktiert haben, in das Fahrzeug einzieht und verriegelt. Diese Lösung erfordert zwar etwas mehr Aufwand im Fahrzeug, würde aber auch das manuelle Handling der doch schweren Ladekabel (bis 95mm² Querschnitt für jedes der beiden Kupferkabel, die den Ladestrom leiten) erleichtern. Insbesondere könnte der Laderoboter beim Steckvorgang durch den Aktor unterstützt werden, wobei vorteilhafterweise die bislang stärker ausgelegten Steckachsen schwächer ausgebildet werden können. Zweckmäßigerweise können die Steckachsen analog zu den Positionierachsen ausgebildet sein, wodurch eine inhärente Sicherheit erzeugt würde, da von den schwach ausgebildeten Positionierachse keine Gefährdung für Personen ausgeht. Dieses Konzept wäre eine Alternative zu dem oben beschriebenen Konzept mit einem Sicherheitsrelais.

Analog könnte Aktor auch Laderoboterseitig am Ladestecker der Ladestation angeordnet sein. Der Kraftschluss des Steckvorganges würde nicht über den Laderoboter aufgebracht, sondern auf ganz kurzem Wege über das Fahrzeug bzw. den Ladestecker der Ladestation. Der Laderoboter bedürfte vorteilhafterweise keinerlei Sicherheitsfunktionen, die dann ganz auf Seiten des Fahrzeug wären. Die Sicherheitsnormen beim Fahrzeug sind jedoch einfacher zu realisieren als die beim Roboter (beispielsweise bereits angewandt beim Schließen der Heckklappe oder dem motorischen Zuziehen der Türen).

Weiter oben ist ausgeführt wie die Absicherung des Steckerfolges bei einem Tankroboter erfolgen könnte und zwar durch die Auswertung voreilender Kontakte beim Stecken des Ladekabels in das Fahrzeug. Hierdurch kann vorteilhafterweise sichergestellt werden, dass das kräftige Eindrücken nur bei Erreichen der Steckvorposition erfolgt und nicht, wenn eine gefährliche Klemmsituation vorliegt, beispielsweise im dem Fall dass eine Hand zwischen den Steckverbindern positioniert ist. Dazu kann die Ladeschaltung derart modifiziert werden, um das Schließen von Kontakten detektieren zu können. Die Modifikation könnte entweder buchsenseitig bzw. auf der Seite des Ladekabels oder auf Seiten der Ladebox erfolgen. Entsprechend könnten die Modifikationen bei einer Vielzahl von Ladeboxen und Steckern abgestimmt werden, um eine Kompatibilität zu gewähren. Darüber hinaus sollte die Sicherheit der modifizieren Ladeschaltungen bei Belastungen von 1000 V DC und von 500 A sichergestellt werden.

Wenn die richtige Steckvorposition erreicht ist, bei der keine Klemmgefahren mehr bestehen, kann sich der Stecker zweckmäßigerweise nur noch in Steckrichtung, das heißt in z-Richtung, bewegen, da die dazu orthogonalen Richtungen x und y durch den fahrzeugseitigen Stecker bzw. das Inlay blockiert sind. Diese Bedingung, dass sich der Verbinder, beispielsweise die Ladebuchse am Kabel, in der Steckvorposition nicht mehr wesentlich bewegt werden kann, kann bevorzugt als Prüfbedingung verwendet werden, um das Erreichen der Steckvorposition zu bestimmen. Insbesondere kann der Roboter bei Erreichen der Steckvorposition versuchen, durch kleine Versuchsbewegungen in x- und/oder y-Richtung zu verfahren. Gelingt diese Bewegung nicht, so ist dies ein Indiz, dass die Steckvorpositionierung erreicht wurde. Theoretisch könnte der Roboter an einer anderen Stelle in x- und y-Richtung verklemmt sein, so dass die Bedingung ebenfalls erfüllt wäre. Dies könnte beispielsweise dann geschehen, wenn die Bildverarbeitung irrtümlich ein Steckerprofil (Inlay) an einer falschen Stelle erkennt, diese dann angefahren wird und genau an dieser Stelle eine Blockierung in x- und y-Richtung, nicht aber in z-Richtung stattfindet. Dies ist ein unwahrscheinlicher Fall. Das Risiko des irrtümlich erkannten Steckerprofiles kann gesenkt werden, indem der Roboter unterschiedliche Perspektiven anfährt, aus denen die Kamera Bilder erfasst und somit eine räumliche Information des fahrzeugseitigen Ladesteckers (Inlay) erhält.

Vorzugsweise wird in der Steckvorposition eine elektrische Verbindung zwischen dem Ladekabel und dem Fahrzeug über den vorauseilenden Kontakt hergestellt, so dass Ströme zwischen Fahrzeug und Ladebox fließen können. Bevorzugt werden diese Ströme von einer Messeinrichtung erfasst, insbesondere ohne einen galvanischen Kontakt zwischen der Messeinrichtung und dem vorauseilenden Kontakt auszubilden. Besonders bevorzugt kann die Messeinrichtung induktiv oder kapazitiv mit dem vorauseilenden Kontakt oder einer damit elektrisch verbundenen Leitung gekoppelt sein. Vorteilhafterweise kann die elektrische Verbindung in der Steckvorposition erfasst bzw. detektiert werden ohne dass zu Anschluss der die dazu notwendigen Messeinrichtung die Stromführung bzw. Ladeschaltung zu verändern.

Vorzugsweise weist ein Laderoboters, welcher zweckmäßigerweise zum Stecken der Ladebuchse des Ladekabels in den Stecker des Fahrzeugs verwendet werden kann, eine Robotersteuerung auf, die statt einer Kraftregelung (closed loop control) des Laderoboters eine Kraftsteuerung (open loop control) durchführt. Mit anderen Worten weist die Robotersteuerung bevorzugt keinen geschlossenen Regelkreis bzw. weist der Laderoboter keine von Kraftsensoren auf. Es kann zweckmäßigerweise davon ausgegangen werden, dass die Motorströme der Antriebe des Laderoboters proportional zum abgegebenen Motormoment sind. Dabei können Effekte wie beispielsweise die Reibung und Hysterese vernachlässigt oder in einem Modell abgeschätzt werden. Beim Stecken der roboterseitigen bzw. ladekabelseitigen Buchse in den fahrzeugseitigen Stecker ist die Position des Steckers als auch die Steckrichtung vorzugsweise bekannt. Ebenso sind die Steckkräfte in der Regel bekannt. Die Dynamik des Roboters ist vorteilhafterweise nicht vorhanden, so dass es im Wesentlichen keine dynamischen Kräfte gibt. Das heißt, abgesehen von der Schwerkraft werden an allen Gelenken des Laderoboters (also der Kombination aus Motor plus Lager) die gleichen Kräfte und Momente in gleicher Richtung übertragen (also actio = reactio bzw. Impulserhaltung). Werden nun noch die Gravitationskräfte, die berechenbar sind, berücksichtigt, können für alle betroffenen Achsen die zu übertragenden Momente (Kräfte) berechnet werden, die zum Halten des Laderoboters während des Steckens notwendig sind, und können hieraus die einzustellenden (= zu steuernden) Motorströme berechnet werden. Dies hat den Vorteil, dass unvorteilhafte Querkräfte beim Steckvorgang vermieden werden. Auch die Kräfte in Steckrichtung sind richtig dimensioniert. Hierdurch resultiert vorteilhafterweise eine Begrenzung sowohl der Steckkraft als auch der Steckrichtung, was auch in Bezug auf Sicherheit Vorteile ergibt. Kann der Steckvorgang unter den Begrenzungen nicht abgeschlossen werden, so liegt eine vermutlich eine erkannte Störung vor und Beschädigungen am Roboter, Fahrzeug, Menschen oder Umgebung können ggf. vermieden werden und somit die Sicherheit des Laderoboters in Bezug auf in der Nähe befindliche Menschen gesteigert werden. Eine reine Positionsregelung bietet diese Vorteile nicht.

Vorzugsweise kann die Bewegung des Laderoboters kann in zwei Abschnitte unterteilt werden. Erstens in eine Positionierfahrt, welche nur geringer Kräfte bedarf, da nur der Laderoboter und die Ladebuchse einschließlich des Ladekabels bewegt werden müssen. Sie kann mit Antrieben bzw. Getriebe bzw. Gelenken erfolgen, die intrinsisch sicher sind, dass heißt vorzugsweise mit Antrieben und/oder Gelenken, die derart mechanisch schwach ausgebildet sind, dass ein Zusammenstoß mit einem Menschen zu einem mechanischen Nachgeben von Antrieb bzw. Gelenk bzw. Getrieben führt, bevor Verletzungsgefahr besteht. Die Anordnung der Achsen zwei und drei erfolgt dabei bevorzugt derart, dass sie nicht gegen die Schwerkraft arbeiten müssen.

Zweiter Teil der Bewegung ist der Steckvorgang, welcher bevorzugt eine lineare Bewegung umfasst, die höherer Kräfte bedarf, die nicht intrinsisch sicher sind bzw. durch intrinsisch sichere Antriebe bzw. Gelenke bzw. Getriebe realisiert werden kann.

Beim Laderoboter kann die Positionierfahrt bevorzugt mit den Achsen 1-4 (optional ggf. auch mit den Achsen 5+6, insbesondere falls diese vorhanden sind) ohne die Achse 7 (oder 5, falls die Achsen 5+6 nicht existieren) durchführbar sein. Weiter bevorzugt ist der Steckvorgang lediglich mit der Achse 7 (der letzten Achse bzw. der distalen Achse bzw. Achse 5 bei 5-Achsladeroboter) durchzuführen. Bevorzugt wird vermieden, dass die Reaktionskräfte der Achse 7 (distale Achse) durch Antriebe der Achsen eins bis sechs abgestützt werden müssen, da diese dann in der Regel nicht mehr intrinsisch ausbildbar wären. In einer Alternative kann dies durch eine nicht rücktreibbare Schnecke am Motor erreicht werden. Die Schnecke befindet sich im Eingriff mit einem Getriebe. Die Reaktionskräfte von einem Kunststoffgetriebe, welche bevorzugt an der Achse 2 und/oder Achse 4 angeordnet ist, können unter Umständen nicht aufgenommen werden, wodurch diese durchrutschen und die Zähne im Getriebe zerstört werden können. Eine Verbesserung ist möglich, indem der Antriebsmotor über ein Zahnrad in das Kunststoffgetriebe eingreift, dass wiederum seinerseits in eine abgangsseitige angeordnete Schnecke eingreift. Der Selbsthemmmechanismus erfolgt dann nach dem Getriebe und nicht davor, wodurch vorteilhafterweise das Getriebe vor zu hohen Reaktionsmomenten geschützt ist. Alternativ oder zusätzlich können die Achse zwei bis sechs nach der Positionierfahrt durch eine ansteuerbare Feststellbremse feststellbar ausgebildet sein. Dadurch können die Reaktionskräfte dann durch die Feststellbremse abgestützt werden. Die Feststellbremse hält bevorzugt nur in einem bestromten Zustand (also abweichend von eine bei anderen Robotern verwendeten Federspeicherbremse, die im unbestromten Fall zufällt), so dass bei Stromausfall auch eine einfache Selbstbefreiungsmöglichkeit für Menschen gegeben ist. Vorteilhafterweise entfällt weiter die Notwendigkeit eines zusätzlichen Entriegelungsmechanismus, weil der Roboter im Fehlerfall einfach durch Muskelkraft rücktreibbar ist. Hierdurch wird maßgeblich vielen Sicherheitsanforderungen Rechnung getragen. Die Funktionsfähigkeit der Bremse kann dadurch überprüft werden, indem durch die Positionssensoren der festgestellten Achsen auf Veränderung der Gelenkwinkel überwacht werden. Weiterhin kann ein Abgleich über die Bildverarbeitung erfolgen.

Vorteilhafterweise ist ein insbesondere durch eine Kombination der sicheren Erkennung der Steckvorposition mit einer Verwendung inhärent sicherer Komponenten für die Achsen eins bis sechs (also aller Achsen außer der distalen Achse) möglich in materialsparender und kostengünstiger Weise ein für die Kooperation mit Menschen hinreichend sicheren Laderoboter bereitzustellen, der trotzdem über eine ausreichende Steckkraft verfügt, um das Laden eines elektrisch betriebenen Fahrzeugs zuverlässig durchzuführen.

Vorzugsweise wird die Sicherheit des Laderoboters durch eine Vermeidung von Singularitäten in der Stellung bzw. Pose des Laderoboters erhöht, wobei die Vermeidung bevorzugt durch eine hardwaremäßige Sicherheitseinrichtung erfolgt. Weiter bevorzugt ist die Sicherheitseinrichtung als Begrenzungsseil ausgebildet, dass verhindert, dass der Laderoboter in eine Singularität, insbesondere in einer gestreckten Position, fährt.

Vorzugsweise weist der Laderoboter eine vertikale Führung mit einem Antrieb auf, wodurch der Roboterarm vertikal verlagerbar ist. Mit anderen Worten kann die Achse 1 des Laderoboters als Linearachse ausgebildet sein. Manche Fahrzeuge mit Luftfederung verändern während des Ladevorgangs ihre Höhe, weswegen herkömmlicherweise diese Höhe durch die Linearachse nachzuregeln ist. Bei Stromausfall und gleichzeitigem Absinken des Fahrzeuges besteht die Gefahr, dass Fahrzeug, Roboter und/oder Ladebuchse beschädigt werden. Zudem sollte die Antriebseinheit der Linearachse derart ausgelegt werden, dass sie die Last des Roboterarmes sowie der Ladebuchse samt Kabel trägt, womit eine intrinsisch sichere Auslegung in der Regel nicht mehr möglich ist und erhöhte Aufwendungen in der Ansteuerung bezüglich der Sicherheit der (Linear-)Achse 1 notwendig sind. Zudem sollte das Absinken des Fahrzeuges erfasst werden und die Achse 1 dementsprechend ständig in Regelung bleiben. Dies führt zu höherem Verschleiß und Stromverbrauch.

Bevorzugt weist der Laderoboter einen Gewichtsausgleich für die Linearachse 1 auf. Der Roboterarm, Schlitten der Linearachse, und der Motor des Schlittens haben die Masse mᵣ. Besonders bevorzugt wird das Gewicht der Masse mᵣ über eine Umlenkrolle geführtes Verbindungsglied, wie ein Seil oder Kette, mit dem Gegengewicht m_{g} gekoppelt und die Kräfte weitgehend ausgeglichen. Insbesondere ist die Masse des Gegengewichts m_{g} so gewählt, dass im Wesentlichen keine resutierende Kraft entsteht, insbesondere, dass die Haftreibung der Umlenkrolle größer als die resultierende Kraft, so dass ohne elektrischen Antrieb keine Verlagerung des Laderoboters erfolgt. Die Antriebseinheit muss vorteilhafterweise nur Reibungskräfte und Beschleunigungskräfte überwinden. Beim Absinken des Fahrzeuges während des Tankens wird der Tankroboter fast kraftlos und passiv, d.h. ohne jegliche Motorkraft mitbewegt. Falls die Vertikalkomponente der Steckkraft der Achse 6, welche die Achse 1 während des Steckvorganges abstützen muss, die Kraft von 120N (biomechanischer Grenzwert minus Sicherheit) überschreitet, sollte bevorzugt eine Bremse vorgesehen sein, damit der intrinsisch sichere Charakter der Achse 1 nicht verletzt wird. Im stromlosen Zustand ist die Bremse geöffnet und die Antriebsanheit der Achse 1 ist bevorzugt rücktreibbar ausgebildet. Auf diese Weise ist in jedem Fall eine Selbstbefreiung durch Menschen möglich. Alternativ kann die Gewichtskompensation auch durch eine Federkraft erfolgen, wobei dann eine genaue konstante Kompensation auf dem Gesamten Hubweg aufgrund der Nichtlinearität der Feder nicht ganz gelingt. Bei Verwendung einer anderen Ladebuchse mit einem anderen Gewicht, ist eine Veränderung des Gegengewichts oder der Federvorspannung sinnvoll.

Unabhängig davon, ob der Aktor als ein linearer oder rotierender Aktor ausgebildet ist, kann der Aktor bevorzugt auch zur Verriegelung von Verbinder und komplementärem Verbinder in der Steckendposition dienen. Mit anderen Worten kann der Aktor als Verriegelungselement wirken. Des Weiteren kann der Zustand des Verriegelungselements durch einen Verriegelungssensor überprüft werden, wobei der Zustand bzw. die Änderung des Zustands des Verriegelungselements an die Steuerung des Roboters und/oder an die Bordelektronik des Fahrzeugs signalisiert werden kann, beispielsweise über eine der Leitungen des Ladekabels. Beispielsweise kann eine Entriegelung des Verriegelungselements, insbesondere durch eine manuelle Aktion eines Benutzers, zu einem Abbruch des Ladevorgangs bzw. des Betankungsvorgangs führen. Sowohl das Fahrzeug und/oder der Roboter bzw. die Ladeeinrichtung können auf Grundlage des entsprechenden Signals die Strom- bzw. Kraftstoffzufuhr unterbrechen und bevorzugt den Roboter zurück in die Parkposition steuern.

Bevorzugte erfolgte in der Parkposition eine Abdeckung des Verbinders bzw. der elektrischen Kontakte, beispielsweise durch eine Abdeckkappe oder durch das zumindest teilweise Aufnehmen des Verbinders in eine Verbinderaufnahme. Die Verbinderaufnahme kann an der Ladeeinrichtung, dem Roboter oder separat von beidem angeordnet sein. Die Verbinderaufnahme stellt insbesondere keinen elektrischen Kontakt her. Die Verbinderaufnahme umschließt den Verbinder zumindest teilweise, bevorzugt in einer feuchtigkeitsdichten und/oder staubdichten Weise, so dass der Verbinder in der Parkposition vor Umgebungseinflüssen, wie beispielsweise Staub, Feuchtigkeit und ähnliches geschützt ist, wodurch vorteilhafterweise eine Korrosion bzw. Verschmutzung der elektrischen Kontakte vermieden wird.

Bevorzugt indiziert eine elektrische Kontaktierung des ausgezeichneten elektrischen Kontakts mit seinem komplementären elektrischen Kontakt das Erreichen der Steckvorposition und initiiert ein Aktivieren des Aktors, um zur Steckendposition zu gelangen.

Der Aktor kann über ein Schaltelement am Verbinder aktiviert oder deaktiviert werden. Bei der bevorzugten Verwendung des Verbinders mit einem erfindungsgemäßen Roboter, kann die Aktivierung bzw. Deaktivierung des Aktors auch über die Robotersteuerung erfolgen. Alternativ kann der Verbinder auch als komplementärerer Verbinder der oben beschriebenen Anordnung aus Roboter und Fahrzeug verwendet werden, wobei der Aktor dann zweckmäßigerweise durch die Bordelektronik des Fahrzeugs steuerbar ist.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen. Verschiedene Ausführungsformen werden in den Figuren näher gezeigt. Es zeigen:
- Fig. 1: eine schematische Darstellung einer normgerechten Konfiguration einer Sicherheitssteuerung;
- Fig. 2: eine schematische Darstellung einer normgerechten Konfiguration einer Sicherheitssteuerung mit Sicherheitsrelais;
- Fig. 3: eine schematische Darstellung einer festgelegten Anordnung für einen Roboter bzw. Laderoboter, bei dem ein Sicherheitsrelais einen Motortreiber der siebten Achse versorgt;
- Fig. 4a: eine erste Variante eines Verbinders entlang eines Schnittes;
- Fig. 4b: den Verbinder der Fig. 4a entlang eines anderen Schnittes;
- Fig. 5: ein Schaltbild einer beispielhaften Ladeschaltung mit bevorzugten Messpunkten;
- Fig. 6: ein fahrzeugseitiges Inlet bzw. einen elektrischen Stecker als eine Ausführungsform eines komplementären Verbinders;
- Fig. 7: abgewandelte Ausführungsformen eines Steckers am Fahrzeug (Aufnahme, Inlet) und einer Buchse am Ladekabel (Verbinder, Connector);
- Fig. 8: eine schematische Darstellung einer beispielhaften Anordnung zur induktiven Messung im Rahmen einer Kommunikationsvorrichtung;
- Fig. 9: eine schematische Darstellung einer alternativen kapazitiven Erfassung der Steckvorposition;
- Fig. 10: eine beispielhafte Ausführungsform eines Roboters bzw. Laderoboters in Bauart eines SCARA-Roboters mit einer elektrischen Ladeeinrichtung, die einen den Verbinder tragenden Endeffektor aufweist;
- Fig. 11: eine schematische Darstellung einer Person, die in Singularitätsnähe des Laderoboters geklemmt wird;
- Fig. 12: eine schematische Darstellung des Verhinderns des Anfahrens einer Singularität;
- Fig. 13: eine Ausführungsform des Roboters bzw. Laderoboters mit einer Gewichtsausgleichsvorrichtung;
- Fig. 14: eine vergrößerte Darstellung des den Verbinder tragenden Endeffektor gemäß Fig. 10;
- Fig. 15: eine bevorzugte Ausführung einer Stellvorrichtung am Fahrzeug zum elektrischen Ankoppeln;
- Fig. 16a: eine bevorzugte erste Ausführung einer Abstützeinrichtung der Stellvorrichtung gegen die Aufnahme am Fahrzeug bzw. den komplementären Verbinder;
- Fig. 16b: eine bevorzugte zweite Ausführung einer Abstützeinrichtung der Stellvorrichtung gegen die Aufnahme am Fahrzeug bzw. den komplementären Verbinder;
- Fig. 17a-c: eine bevorzugte Ausführung einer Anordnung von Verbinder und komplementären Verbinder;
- Fig. 18a-d: eine bevorzugte Ausführung einer Anordnung von Verbinder und komplementären Verbinder.

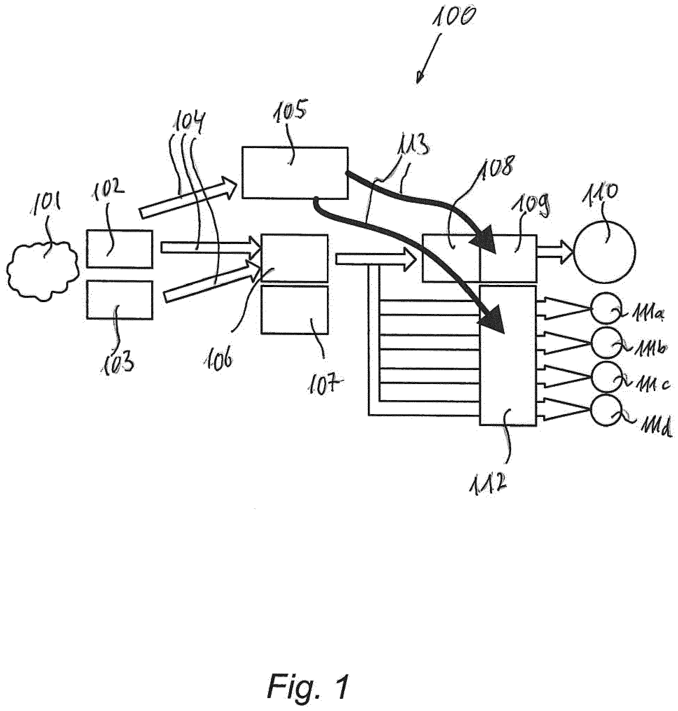

Die Figur 1 zeigt eine schematische Darstellung einer beispielhaften normgerechten Konfiguration einer Sicherheitssteuerung 100. Die Sicherheitssteuerung 100 wird auf Basis physikalischer Größen 101 angesteuert. Die physikalischen Größen 101 können mittels wenigstens eines Sicherheitssensors 102, insbesondere einer Kamera 103 erfasst werden. Alternativ können auch mehrere Sensoren verwendet werden, die über eine Plausibilitätsprüfung ausgewertet werden. Über sichere Kommunikationskanäle 104 werden erfasste Größen an die Sicherheitssteuereinrichtung 105, an eine Robotersteuerung 106 und/oder eine Bildverarbeitung 107 weitergeleitet. Die Robotersteuerung 106 steuert die Motorsteller 108, an die eine sichere Drehmomentenabschaltung 109 (Safe Torque off) angeschlossen ist, wobei die Motorsteller 108 beispielsweise einen siebten Motor 110 ansteuern. Des Weiteren können die den Achsen des Roboters zugeordneten Bremsen 111a, 111b, 111c, 111d von der Robotersteuerung 106 über eine sichere Bremsensteuerung 112 (Safe Brake Control) verfügen. Dazu kommuniziert die Sicherheitssteuereinrichtung 105 mit der sicheren Drehmomentenabschaltung 109 (Safe Torque off) und der sicheren Bremsensteuerung 112 (Safe Brake Control) über sichere Kommunikationskanäle 113.

Die Figur 2 zeigt eine schematische Darstellung einer beispielhaften normgerechten Konfiguration einer Sicherheitssteuerung 200 mit Sicherheitsrelais 214. Die Sicherheitssteuerung 200 wird auf Basis physikalischer Größen 201 angesteuert. Die physikalischen Größen 201 können mittels wenigstens eines Sicherheitssensors 202, insbesondere einer Kamera 203 erfasst werden. Alternativ können auch mehrere Sensoren verwendet werden, die über eine Plausibilitätsprüfung ausgewertet werden. Über sichere Kommunikationskanäle 204 werden erfasste Größen lediglich an eine Robotersteuerung 206 und/oder ggf. eine Bildverarbeitung 207 weitergeleitet. Eine Sicherheitssteuereinrichtung (Fig.1, 105) kann insoweit entfallen. Die Robotersteuerung 206 steuert weiterhin die Motorsteller 208. Allerdings kommen im Gegensatz zur Ausführung der Fig.1 nun Sicherheitsrelais 214 zum Einsatz. Diese ersetzen insoweit eine sicher ausgestaltete Drehmomentenabschaltung 109 (Safe Torque off) und eine sicher ausgestaltete Bremsensteuerung 112 (Safe Brake Control). Im Falle des erfindungsgemäßen Motors kann die Bremsensteuerung 112 derart ausgestaltet sein, dass die Bremsen 211a, 211b, 211c, 211d öffnen, falls das Sicherheitsrelais abfällt, da der Roboter bei geöffneten Bremsen bewegbar bleibt und sich versehentlich eingeklemmte Personen einfach befreien können, während die Bremsen 211a, 211b, 211c, 211d nur geschlossen werden können, wenn ein sicherer Zustand herrscht, also das Sicherheitsrelais 214 geschlossen ist. Die Sicherheitsrelais 214 steuern sowohl den siebten Motor 210 als auch die Bremsen 211a, 211b, 211c, 211d.

Die Figur 3 zeigt eine schematische Darstellung einer festgelegten Anordnung für einen Laderoboter, bei dem ein Sicherheitsrelais 314 einen Motortreiber eines Motors 302a der siebten Achse versorgt. Die beispielsweise 6-poligen Leitungen 300 steuern über Microcontroller 301 die Motoren 302. Im Falle von Motoren 302 der ersten bis vierten Achse des Roboterarms beispielsweise können diesen Bremsen 303 zugeordnet sein (linker Antrieb 304). Im Falle des Motors 302a der siebten Achse des Roboterarms kann diesem beispielsweise entsprechend eine Sensoranordnung 305 zugeordnet sein (rechter Antrieb 306). Des Weiteren können an die 6-poligen Leitungen 300 ein Zusatzcontroller 307 und/oder andere Computermodule 308 angeschlossen sein.

Die Figur 4a zeigt eine Schnittansicht einer ersten Variante eines Ladesteckers 401 als Ausführungsform eines Verbinders 401 einer erfindungsgemäßen Aufnahme und Figur 4b zeigt einen weiteren Schnitt durch die in Figur 4a gezeigte Ebene GG des Verbinders 401. Hier handelt es sich um einen genormten Ladestecker (Inlet) 401. Des Weiteren zeigt die Figur 4 einen zum Verbinder 401 komplementären Verbinder 402, wobei sich Verbinder 401 und komplementärer Verbinder 402 in einer Steckendposition befinden und sich die elektrischen Steckkontakte 403, 405, 407 des Verbinders und die komplementären elektrischen Steckkontakte 404 des komplementären Verbinders 402 gegenseitig elektrisch kontaktieren. Der Steckkontakt 403 des Schutzleiters kontaktiert den komplementären Steckkontakt 404 des Schutzleiters. Die zu den Steckkontakten 405 der Stromversorgungsleiter und zu den Steckkontakten 407 der Kommunikationsleiter komplementären Steckkontakte sind in den Figur 4a und 4b nicht gezeigt.

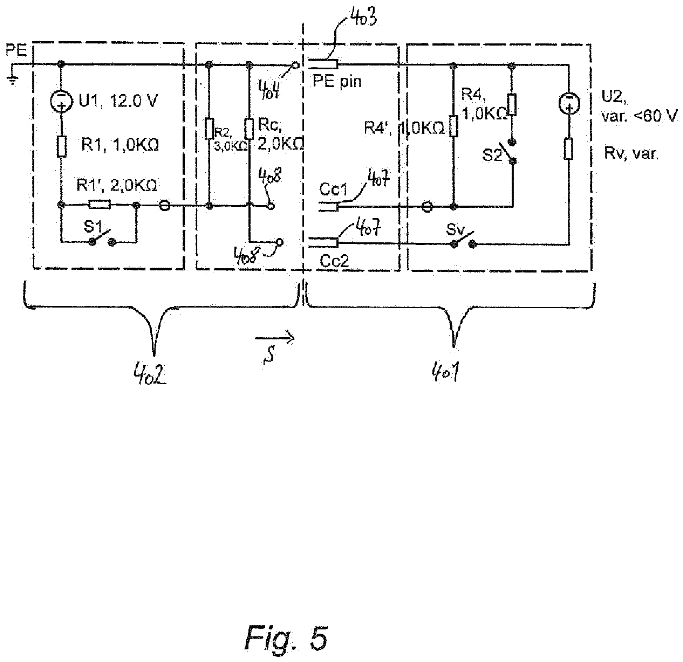

Die Figur 5 zeigt eine bevorzugte Ladeschaltung. Gezeigt ist eine bevorzugte Verschaltung der elektrischen Steckkontakte 403, 407 des Verbinders 401 und der zugeordneten komplementären Steckkontakte 404, 408 des komplementären Verbinders 402. Dabei sind die Steckkontakte 403, 407 (die Leistungskontakte, mit denen der eigentliche Ladestrom übertragen wird, sind nicht dargestellt) derart konfiguriert, dass zumindest ein Kontakt 403 vorauseilt, d.h. insbesondere entlang der Steckrichtung S vorsteht. In der gezeigten bevorzugten Ausführungsform kontaktieren die Steckkontakte in der Reihenfolge 403 (PE pin), dann 407 (CC2), dann 407 (CC1).

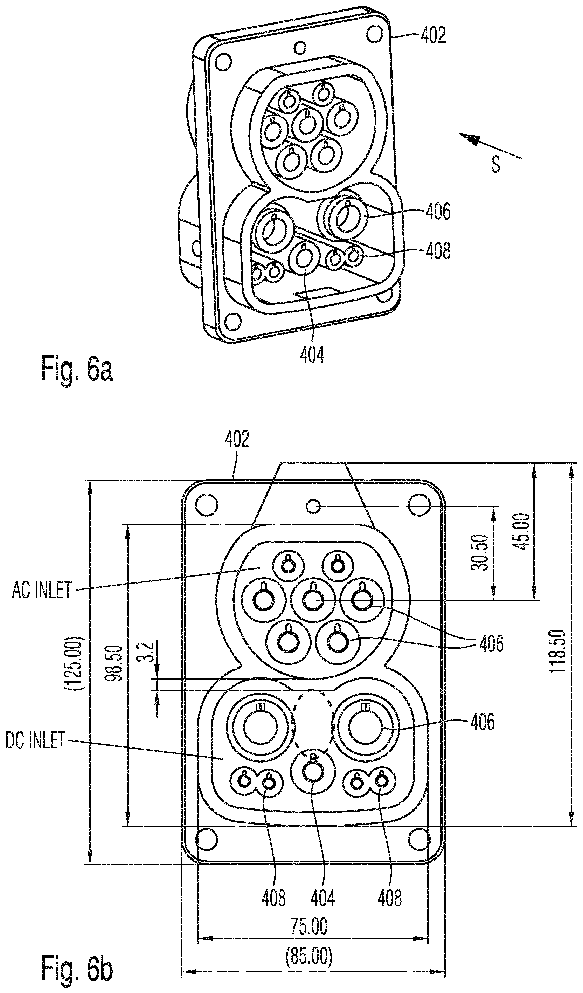

Die Figur 6a zeigt die perspektivische Ansicht eines fahrzeugseitigen Inlets bzw. eines elektrischen Steckers als eine Ausführungsform einer Aufnahme am Fahrzeug bzw. eines komplementären Verbinders 402. Die Figur 6b zeigt diesen komplementären Verbinder 402 in der Draufsicht entlang der Steckrichtung S. Das Fahrzeug, in welchem der komplementäre Verbinder bevorzugt eingebaut ist, ist nicht dargestellt. Der komplementäre Verbinder 402 weist komplementäre Steckkontakte 404 für den Schutzleiter, 406 für den Stromversorgungsleiter und 408 für den Kommunikationsleiter auf.

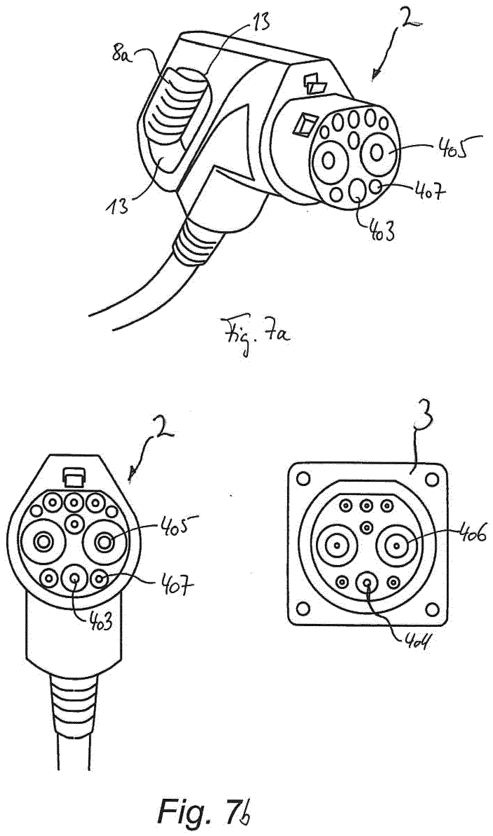

Die Figuren 7a und 7b zeigen eine abgewandelte Ausführungsform eines Ladesteckers 3 (Inlet) am Fahrzeug (Aufnahme bzw. komplementärer Verbinder 3) in einer Draufsicht und eine elektrischen Ladebuchse 2 am Ladekabel (Connector bzw. Verbinder 2) in einer perspektivischen Ansicht und einer Draufsicht. Der Verbinder 2 ist in dieser Ausführungsform besonders einfach manuell zu halten, da ein Handgriff 8a an dem bzw. einstückig mit dem Verbinder 2 ausgebildet ist. Es versteht sich, dass der Handgriff 8a bevorzugt auch derart ausgebildet sein kann, dass er durch einen Greifer (nicht dargestellt) eines Roboters (nicht dargestellt) greifbar ist. Vorteilhafterweise kann die Ladebuchse 3 in diesem Fall sowohl manuell als auch automatisch mit Hilfe eines Roboters gehandhabt werden. Dazu kann der Handgriff 8a zumindest ein komplementäres Positionierungsmittel 13 aufweisen, welches mit einem zugeordneten Positionierungsmittel des Greifers in Eingriff gelangen kann, wenn Greifer und Handgriff 8a relativ zueinander in bekannter Weise bzw. richtig positioniert sind. Das bzw. die Positionierungsmittel 13 können beispielsweise Aussparungen oder geometrischen Formen im Bereich des Handgriff 8a sein, mit welchen sich der Verbinder 2 ausrichten lässt.

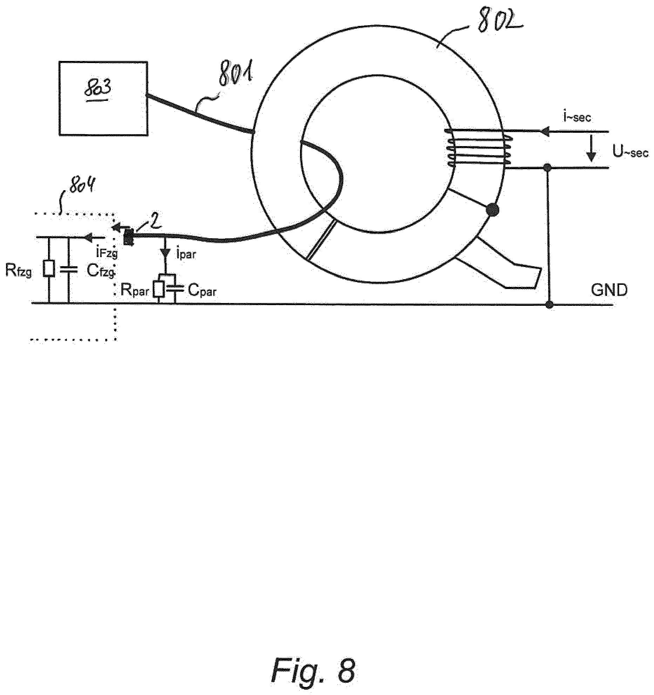

Die Figur 8 zeigt eine bevorzugte Möglichkeit der Messung, dass die Steckvorposition erreicht ist. Das Ladekabel 801 wird durch eine modifizierte Stromzange 802 gelegt. Sie misst den durch das (ungeschirmte) Ladekabel 801 fließenden Summenstrom zwischen Fahrzeug 804 und Stromquelle 803 bzw. Ladebox 803. Ladeströme werden im Folgenden nicht berücksichtigt, da sie beim Steckvorgang null sind und sich über Hin- und Rückstrom zu null addieren sollten. In Figur 8 ist eine modifizierte Messzange (Stromzange 802) abgebildet, die nach dem Transformatorprinzip funktioniert und die Ankopplung über Induktion realisiert.

Dabei sind Ipar die Ströme, die entweder über das ungesteckte Ladekabel 801 direkt abfließen oder über die Ladebox 803. Die Ladebox 803 beinhaltet auch eine interne Schaltung mit Widerständen (vgl. Figur 5). Wird nun das Fahrzeug 804 angesteckt und kontaktiert der erste voreilende Kontakt die Masse (PE, GND), so können zusätzliche Ströme über das Fahrzeug 804 abfließen. Diese sind überwiegend kapazitiv (C_Fzg), da das Fahrzeug 804 über die Reifen gut isoliert ist. Etwaig fließende Wirkströme fließen in dem in Figur 8 skizzierten Modell über RFzg. Die Stromzange 802 besitzt eine Spule mit n Windungen, über die eine fest eingeprägte Wechselspannung U~sec anliegt. Die Stromzange 802 induziert in das Ladekabel eine Spannung von U~sec/n (in Falle eines idealen Transformators). Diese Spannung führt zu den o.g. parasitären Strömen Ipar. Durch die Spule fließt dann der Strom i-sec = i~par/n. Kontaktiert nun der voreilende Kontakt PE mit dem Fahrzeug 804 so erhöht sich der Strom am Ladekabel 801 auf Ipar+IFzg. Der Strom durch die Spule erhöht sich ebenfalls auf i~sec= (Ipar+IFzg)/n. Durch Messung des Stromes i-sec kann die Kontaktierung des voreilenden Kontaktes durch die Stromänderung detektiert werden.

Alternativ kann anstelle der Spannung U~sec den Strom I~sec einprägt werden und dann die durch den Steckvorgang verursachte Änderung der Spulenspannung U~sec beobachtet. Wesentliche Änderungsursache ist die kapazitive Wirkung des angesteckten Fahrzeuges 804, die entweder den Spulenstrom, die Spulenspannung oder durch die Spule übertragene Scheinleistung verändert. Eine weitere Möglichkeit besteht darin, eine weitere Spule anzubringen, deren Strom I~comp oder Spannung U-comp derart eingeregelt wird, dass die Spannung U~sec oder der Strom I~sec der anderen Spule gerade null ergibt. Eine Änderung der Kompensationsspannung oder des Kompensationsstromes der weiteren Spule ließe dann auf die Kontaktierung des voreilenden Kontaktes schließen. Frequenz von U~sec, und I~sec sowie deren Amplitude können so gewählt werden, dass
- die Bordelektronik des Fahrzeuges nicht gestört wird;
- die Elektronik der Ladebox nicht gestört wird;
- die Kapazität des Fahrzeuges CFzg erkennbar ist;
- durch den Wellenwiderstand des Ladekabels ein Signal erkennbar bleibt, obwohl die Ladebox die Leitung auf PE kurzschließt;
- ein auswertbares Signal trotz der durch die offenen bzw. kurzgeschlossenen Leitungsenden (Reflektion und Brechung) erhalten bleibt; und/oder
- mögliche Netzeinkopplungen unterhalb der zulässigen Grenzwerte bleiben.

Das Ladekabel sollte bei der Anbringung an den Tankroboter zweckmäßigerweise zugentlastet werden. Diese Aufgabe kann durch eine entsprechend ausgebildete Stromzange mitübernommen werden. Weitere Absicherungsmöglichkeiten bestehen darin, die Information des voreilenden Kontaktes über eine Schnittstelle von der Ladebox oder per WLAN (bevorzugt über eine sichere Busschnittstelle) vom Fahrzeug zu erhalten.

Die hier erwähnten Maßnahmen
- taktiles Fühlen in x-y-Richtung
- Messung per Stromzange
- Kommunikation mit der Ladebox
- Kommunikation mit dem Fahrzeug
lassen sich beliebig kombinieren oder ggf. auch ersetzen.

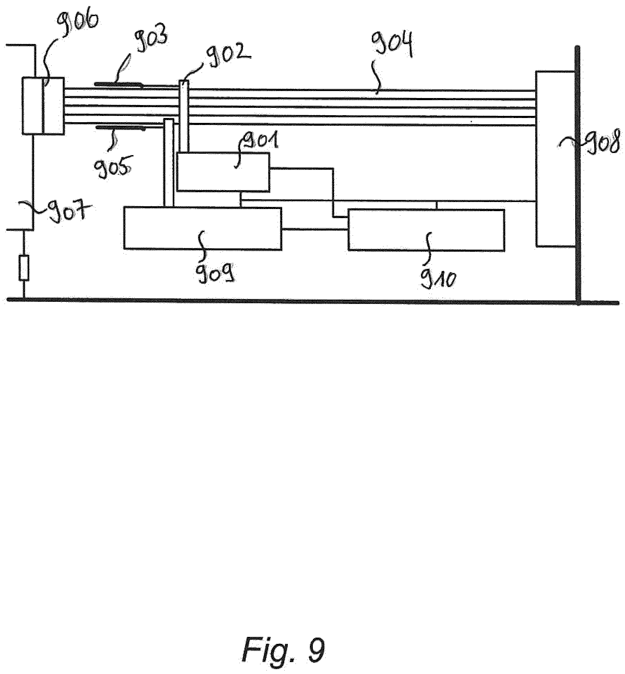

Figur 9 zeigt eine alternative kapazitive Erfassung der Steckvorposition durch eine in der Frequenz abgestimmte Signaleinleitung. In dieser bevorzugten Ausführungsform kann der Kontakt der Autokarosserie zum Schutzleiter durch eine in der Frequenz abgestimmte kapazitive Koppelung erkannt werden. Hierzu wird das Signal eines Frequenzgenerators 901 mit einer geschirmten Koaxialleitung 902 zu einer Sendeelektrode 903 geführt. Diese kann beispielsweise ein Drahtstück einer gewissen Länge umfassen, das längs zum Ladekabel 904 oder um das Ladekabel 904 gewickelt ist. Eine einseitig offene Spule längs zum Ladekabel 904 ist ebenfalls vorstellbar.

Eine Empfangselektrode 905, die wie die Sendelektrode 903 als Draht oder als Spule um das Ladekabel 904 oder längs dazu ausgeführt sein kann, kann dann in der Nähe der Sendeelektrode 903 (davor, dahinter, insbesondere gegenüber zur Sendeelektrode) am Ladekabel 904 fest angebracht sein. Durch die Wahl einer geeigneten Frequenz kann im Sinne einer Resonanz eine gute Übertragung vom Sender auf den Empfänger abgestimmt werden, wenn das Ladekabel 904 nicht über den Ladestecker 906 in das Auto 907 eingesteckt ist, sondern lediglich mit dem Stromnetz 908 verbunden ist. Dazu ist eine Frequenz im unteren Megaherzbereich (etwa 1-10 MHz, insbesondere etwa 8 MHz je nach Kabel) vorteilhaft. Der genaue Wert hängt von der Beschaffenheit der Elektroden und des Ladekabels 904 ab. Für die Auswertung kann das Empfangssignal mit einem Hochpassfilter 909 von Netzbrummen befreit werden. Ein Verstärker und eine Pegelmessung vervollständigen die Messeinrichtung, die ggf. auch mit der Robotersteuerung 910 kommuniziert.

Wird das Ladekabel 904 mit dem Fahrzeug 907 verbunden, ändern sich die Eigenschaften des Kabels im Hinblick auf die Signalübertragung zur Empfängerelektrode 905. Durch eine Abstimmung auf das Ladekabel 904 ohne angestecktes Fahrzeug 907 bricht das Empfangssignal zusammen, wenn das Ladekabel 904 am Fahrzeug 907 angesteckt wird, insbesondere wenn die Steckvorposition erreicht und der elektrische Kontakt hergestellt ist. Dieser Einbruch im Empfangssignal kann vorteilhafterweise zur Erkennung des Schutzleiteranschlusses und damit zum Erreichen der Steckvorposition ausgewertet werden.

Bevorzugt kann eine Abstimmung der optimalen Sendefrequenz unmittelbar vor dem Steckvorgang erfolgen, insbesondere in automatisierter Form. So können vorteilhafterweise Schwankungen der Signalübertragung durch Temperatur und Feuchtigkeit ausgeglichen werden.

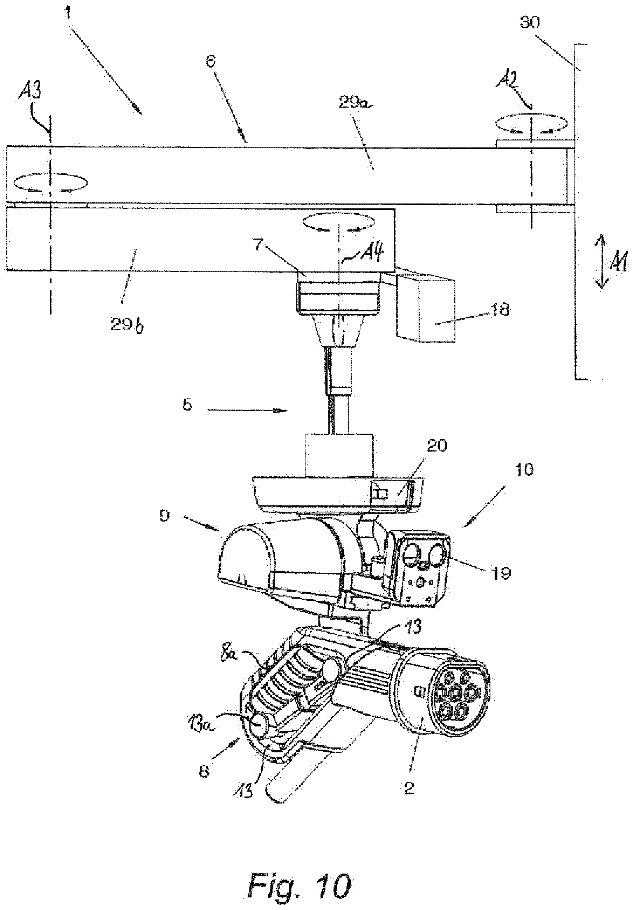

Die Figur 10 zeigt eine bevorzugte Ausführungsform eines Roboters 1 bzw. Laderoboters 1, welcher zweckmäßigerweise zum Stecken der Ladebuchse 2 als Ausführungsform des Verbinders 2 des Ladekabels 801 in den Ladestecker 3 als Ausführungsform des komplementären Verbinders 3 des Fahrzeugs (nicht gezeigt), welcher die Aufnahme am Fahrzeug bildet, verwendet werden kann. Der Laderoboter 1 weist eine Positioniervorrichtung 6 bzw. einen Roboterarm 6 auf. Die Positioniervorrichtung 6 weist zwei oder mehr, z.B. liegend bzw. horizontal angeordnete Glieder 29a, 29b auf, die gelenkig bzw. rotierbar um die Achse A3 miteinander verbunden sind. Das eine obere Glied 29a ist gelenkig bzw. rotierbar um die Achse A2 mit einer Basis 30 bzw. einem proximalen Glied 30 verbunden, wobei die Basis 30 z.B. an einer aufrechten Wand angeordnet bzw. befestigt sein kann. Bevorzugt ist das Glied 29a vertikal entlang der Schubachse A1 verschiebbar an der Basis 30 gelagert. Das zweite, untere Glied 29b weist ein drehbar bzw. rotierbar um die Achse A4 angetriebenes Abtriebselement 7 auf. Die gezeigte Positioniervorrichtung 6 weist durch die Gelenke drei rotatorische Achsen A2, A3, A4 mit jeweils einem steuerbaren Achsantrieb und z.B. vertikaler Achsausrichtung auf.

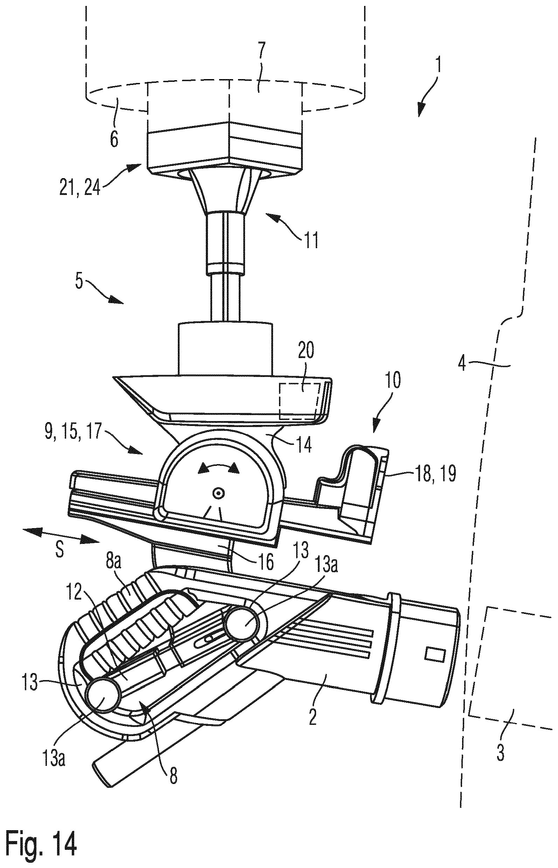

Zusätzlich kann eine Höhenverstellung 11 (siehe Figur 14) des Endeffektors 5 zumindest eine weitere und bevorzugt steuerbar angetriebene Bewegungsachse A1 bilden. Dies kann z.B. eine Linearachse an der Verbindungsstelle zur Basis 30 sein. Bei einer anderen Ausführung der Positioniereinrichtung 6 kann die Zahl und Anordnung der Glieder 29a, 29b variieren. Beispielsweise sind linear bewegliche Glieder 29a, 29b in der Art einer mehrstufigen Schlittenführung möglich. Es sind auch Kombinationen von rotatorischen und translatorischen Gliedern 29a, 29b und deren Bewegungsachsen möglich. Im vorliegenden Fall sind die in Figur 10 und 14 dargestellten Glieder 29a, 29b des Roboterarms als ein SCARA-Roboter konfiguriert.

Die elektrische Ladeeinrichtung 1 kann eine Steuerung aufweisen, die in Fig. 10 der Übersicht halber nicht dargestellt ist. Die Steuerung kann programmierbar sein und kann eine entsprechende Recheneinheit mit Daten- und Programmspeichern sowie Schnittstellen für Input und Output aufweisen. Die Steuerung kann mit den Antrieben der Positioniervorrichtung 6 und einer Zustelleinrichtung 9 sowie einer Halterung 8 verbunden sein.

Sie kann auch mit einer Detektionseinrichtung 10 und einer Arretierung 24 sowie mit eventuellen weiteren steuerbaren Komponenten, Sensoren etc. der elektrischen Ladeeinrichtung 1 verbunden sein, wie im Folgenden noch beschrieben wird. Die elektrische Ladeeinrichtung 1 kann ferner eine bevorzugt drahtlose und ebenfalls nicht dargestellte Kommunikationseinrichtung aufweisen, die einen Empfänger und ggf. einen Sender aufweist. Die Kommunikationseinrichtung kann z.B. auf Funkbasis arbeiten und mit einem Fahrzeug 4, einem Mobilfunkgerät bzw. Smartphone, einer übergeordneten Steuerung zur Energieverwaltung etc. unidirektional oder bidirektional kommunizieren.

Die elektrische Ladeeinrichtung 1 kann außerdem eine z.B. optische und/oder akustische Anzeige für die Meldung von Betriebszuständen, Störungen, Bedienanweisungen etc. aufweisen. Die Kommunikationseinrichtung und die Anzeige können mit der Steuerung verbunden sein.

Die Ladeeinrichtung 1 dient zum automatischen Zustellen und Ankuppeln der elektrischen Ladebuchse 2 des Verbinders 2a an den Ladestecker 3 des Fahrzeugs. Hierdurch kann der elektrische Energiespeicher des Fahrzeugs, z.B. eines Elektrofahrzeugs, automatisch aufgeladen werden. Die Ladeeinrichtung 1 befindet sich z.B. an einem Parkplatz für das Fahrzeug.

Die Ladeeinrichtung 1 weist die Positioniervorrichtung 6 auf, die den Endeffektor 5 trägt, der seinerseits die elektrische Ladebuchse 2 des Ladekabels d.h. den Verbinder hält. Die Ladebuchse 2 und der Ladestecker 3 d.h. die Aufnahme am Fahrzeug können in beliebig geeigneter Weise ausgebildet sein und können miteinander gekuppelt und ggf. entkuppelt werden. Die Ladebuchse 2 ist mittels eines Elektrokabels beweglich und ist mit einer Stromversorgung verbunden, die z.B. stationär angeordnet ist. Sie kann als flurgebundene Ladesäule, als Ladegerät an einer Wand oder in anderer geeigneter Weise ausgebildet sein.

Die Ladebuchse 2 bzw. der Verbinder 2 kann an Positionierungsmitteln 13, die im Bereich des Handgriffs 8a des Verbinders 2 angeordnet sind, durch komplementäre Positionierungsmittel 13 gegriffen bzw. gehalten bzw. positioniert bzw. ausgerichtet werden.

Die Fig. 10 und Fig. 14 zeigt den Endeffektor 5, wobei die Positioniervorrichtung 6 und das Fahrzeug 4 mit dem Ladestecker 3 bzw. dem komplementären Verbinder 3 schematisch angedeutet sind. In Fig. 10 ist die Ladeeinrichtung mit dem Endeffektor 5 und einer beispielhaften Positioniervorrichtung 6 dargestellt. Die Fig. 14 zeigt Details des Endeffektors 5.

Der Endeffektor 5 weist eine Halterung 8 mit einem Handgriff 8a, eine Zustelleinrichtung 9 und eine Höhenausgleichsvorrichtung 11 auf. Der Endeffektor 5 kann außerdem eine Detektionseinrichtung 10 aufweisen. Der Endeffektor 5 hat ferner einen Anschluss 21 zur Verbindung mit der Positioniervorrichtung 6. Der Anschluss 21 ist z.B. flanschartig ausgebildet und kann mit dem z.B. ebenfalls flanschartigen und um eine Abtriebsachse drehenden Abtriebselement 7 der Positioniervorrichtung 6 in geeigneter Weise verbunden werden, z.B. durch Schrauben. Es versteht sich, dass der Endeffektor 5 alternativ als distales Glied der Positioniervorrichtung 6 ausgebildet sein kann, ohne dass ein Anschluss 21 und ein dazu komplementärer Flansch vorgesehen sind.

Die Halterung 8 dient zur dauerhaften oder wechselweisen Aufnahme der elektrischen Ladebuchse 2. Die Ladebuchse 2 kann in beliebig geeigneter Weise ausgebildet sein. Er kann z.B. einen Handgriff 8a für eine wahlweise Handbedienung aufweisen. Der Handgriff 8a kann die im Zusammenhang mit Figur 7 beschriebenen Eigenschaften aufweisen. Die Halterung 8 weist im Falle des Ausführungsbeispiels einen Steckerhalter 12 auf, der die Ladebuchse 2 in geeigneter Weise und mit einer definierten Lage und Ausrichtung aufnimmt. Der Steckerhalter 12 kann z.B. in der Öffnung am Handgriff 8a der Ladebuchse 2 angreifen. Der Steckerhalter 12 kann passiv oder mittels eines gesteuerten Antriebs aktiv verstellbar sein und kann an unterschiedliche Ladebuchsen 2 angepasst werden. Der Steckerhalter 12 kann eine Ladebuchse 2 dauerhaft oder temporär aufnehmen, insbesondere greifen. Die Halterung 8, insbesondere der Steckerhalter 12, kann in einer nicht dargestellten Variante verschiedene, bereitgehaltene Ladebuchsen 2 aus einem Magazin wahlweise greifen. Die Auswahl kann mittels einer nachfolgend erläuterten Detektionseinrichtung 10 erfolgen, welche den fahrzeugseitigen Ladestecker 3 erkennt und die Steckerauswahl trifft.

Die Ladeeinrichtung 1 kann eine Oszillation oder Vibration erzeugen. Diese wirkt auf die gehaltene Ladebuchse 2 ein und bewirkt Rüttelbewegungen der Ladebuchse 2, die quer oder schräg zur Zustellrichtung bzw. zur Steckrichtung beim Ankuppeln und Entkuppeln gerichtet sind. Die Oszillation kann z.B. durch eine Bewegung der Positioniervorrichtung 6 erzeugt werden.

Die Halterung 8 ist im Falle des Ausführungsbeispiels an der Zustelleinrichtung 9 angeordnet. Die Zustelleinrichtung 9 stellt die Halterung 8 und die Ladebuchse 2 in einer bevorzugt translatorisch, insbesondere linearen, Zustellbewegung an den Ladestecker 3 zum Ankuppeln zu. Sie kann die Ladebuchse 2 zum Entkuppeln auch wieder in gleicher Richtung abziehen. Dabei kann ggf. eine Verriegelung an der Ladebuchse 2 mit einer geeigneten Löseeinrichtung (nicht dargestellt) gelöst werden.

Die Zustelleinrichtung 9 weist im Falle des Ausführungsbeispiels mindestens eine Zustelleinheit 15, 17 auf. Im gezeigten Ausführungsbeispiel beinhaltet sie zwei Zustelleinheiten 15,17. Diese sind an einem Gestell 14 angeordnet. Die eine Zustelleinrichtung 15 weist ein bewegliches Zustellelement 16 auf, an dem die Halterung 8 in einer definierten Lage und Ausrichtung angeordnet ist. Die eine Zustelleinheit 15 ist z.B. als translatorische Zustelleinheit ausgebildet und bewirkt die Zustellbewegung in Steckrichtung der Ladebuchse 2 und des Ladesteckers 3, die dazu z.B. fluchtend ausgerichtet sind. Das Zustellelement 16 gehört zu dieser Zustelleinheit 15 und ist z.B. als Schlitten ausgebildet. Die Zustelleinheit 15 weist einen steuerbaren Antrieb auf. Dieser kann z.B. einen Elektromotor mit einem Zahnstangenantrieb in Verbindung mit der Schlittenführung für das Zustellelement 16 aufweisen.

Die zweite Zustelleinheit 17 kann z.B. eine rotatorische Zustelleinheit sein. Sie ist am Gestell 14 angeordnet. Die rotatorische Zustelleinheit 17 ist z.B. der translatorischen Zustelleinheit 15 vorgeschaltet und trägt diese. Die Zustellachse der rotatorischen Zustelleinheit 17 kann quer zur linearen Zustellbewegung der translatorischen Zustelleinheit 15 ausgerichtet sein.

Mit der rotatorischen Zustelleinheit 17 können die translatorische bzw. lineare Zustellbewegung und die Ladebuchse 2 auf eine gegebene Schräglage, den sog. Nickwinkel, dem Ladestecker 3 am Fahrzeug 4 fluchtend fahrzeugindividuell eingestellt werden. Die Ladebuchse 2 ist mit einer vorgegebenen Ausrichtung am Zustellelement 16 angeordnet. Seine Stromkontakte und ggf. seine Steckerfassung sind dabei parallel zur Zustellrichtung bzw. Zustellbewegung ausgerichtet.

Die rotatorische Zustelleinheit 17 kann z.B. als Schwenklagerung zwischen dem Gestell 14 und der anderen Zustelleinheit 15 ausgebildet sein. Die Einstellung der Schwenklage bzw. Schräglage der anderen Zustelleinheit 15 und ihres Zustellelements 16 kann manuell erfolgen und wird in geeigneter Weise fixiert, z.B. durch eine Klemmschraube. Alternativ kann auch die rotatorische Zustelleinheit 17 einen steuerbaren Antrieb aufweisen.

Das Gestell 14 kann frontseitig einen Ansatz aufweisen, an dem die Detektionseinrichtung 10 oder zumindest eine ihrer Komponenten angeordnet ist. Der Ansatz und die Frontseite sind zum vorderen Ende der Ladebuchse 2 und zum Fahrzeug 4 bzw. zum Ladestecker 3 ausgerichtet. Der frontseitige Ansatz und/oder die Detektionseinrichtung 10 können alternativ am Zustellelement 16 angeordnet sein und bei der Zustellbewegung mitgeführt werden.

Der Endeffektor 5 ist im Falle des Ausführungsbeispiels zumindest in der Betriebsstellung zum Ankuppeln bzw. Entkuppeln von Ladebuchse 2 und Ladestecker 3 vertikal ausgerichtet und wird in dieser Lage von der Positioniervorrichtung 6 gehalten. Der Endeffektor 5 kann auch eine leichte Schrägausrichtung haben. Die Ausrichtung ist derart gewählt, dass sie zumindest eine deutlich überwiegende vertikale Richtungskomponente hat. Der Endeffektor 5 ist in der Betriebsstellung vorzugsweise hängend an der Positioniervorrichtung 6 angeordnet und gehalten.

Die Höhenausgleichsvorrichtung 11 ist der Zustelleinrichtung 9 zugeordnet, vorzugsweise vorgeschaltet. Sie ist beispielsweise oberhalb und auf der Zustelleinrichtung 9 angeordnet. Sie ist z.B. auf deren Gestell 14 montiert. Die gezeigte Höhenausgleichsvorrichtung 11 trägt am einen, oberen Ende den Anschluss 21 für die Positioniervorrichtung 6. Sie weist am anderen, gegenüberliegenden Ende einen weiteren Anschluss 22 für die Aufnahme und Befestigung der Zustelleinrichtung 9 auf.

Die Höhenausgleichsvorrichtung 11 kann ein- und ausgefahren werden und zwar in vertikaler Richtung, um eine Höhenverstellung zu realisieren. Sie ist für die Ladebuchse 2, insbesondere den Halter 8, vorgesehen und ist in mindestens einer Achse verstellbar. Durch diese nachgiebige und wahlweise aktive oder passive Verstellbarkeit können Relativbewegungen zwischen dem Fahrzeug 4 und der Positioniervorrichtung 6 beim Laden und in Ankuppelstellung von Ladebuchse 2 und Ladestecker 3 ausgeglichen werden.

In der gezeigten Ausführungsform hat die Höhenausgleichsvorrichtung 11 nur eine Bewegungsachse, die z.B. als translatorische Bewegungsachse ausgebildet ist. Die Bewegungsachse ist in der besagten Betriebsstellung vertikal ausgerichtet oder hat zumindest eine überwiegende vertikale Richtungskomponente. Sie erstreckt sich z.B. entlang der vorgenannten Ausrichtung des Endeffektors 5. Die Höhenausgleichsvorrichtung 11 weist im Ausführungsbeispiel ein längenverstellbares Ausgleichselement 23 auf, welches z.B. als Teleskopstange ausgebildet ist. Das Ausgleichselement 23 kann eine Geradführung aufweisen, die in ihrer Bewegungsrichtung wirkt und Verdrehungen der Teleskopteile vermeidet. Das Ausgleichselement 23 ist am einen, oberen Ende mit dem Anschluss 21 fest oder drehbar verbunden und ist am anderen, unteren Ende mit dem anderen Anschluss 22 verbunden. An den Anschlüssen 21, 22 können ein Sockel 25 und eine Hülse 26 angeordnet sein, die beim Einfahren in axialer Richtung miteinander in Eingriff gebracht werden können. Sie versteifen dabei die Höhenausgleichsvorrichtung 11 in der eingefahrenen Stellung und können bei der Zustellung der Ladebuchse 2 auftretende Kräfte und ggf. Momente aufnehmen.

Die Höhenausgleichsvorrichtung 11 weist im Falle des vorliegenden Ausführungsbeispiels eine Arretierung 24 für zumindest eine vorgegebene Stellung auf, die sie auf ihrem Bewegungsweg beim Ein- und Ausfahren einnehmen kann. Vorzugsweise ist dies die eingefahrene Stellung. Diese kann durch eine geeignete Sensorik, insbesondere Endlagenschalter, detektiert werden. Die Detektionseinrichtung 10 kann alternativ oder zusätzlich einen Abstandssensor 19 aufweisen, der frontseitig am besagten Ansatz des Gestells 14 angeordnet ist. Eine Bilderfassungseinrichtung 18 und der Abstandssensor 19 können eine zum vorderen Ende der Ladebuchse 2 weisende Blickrichtung haben. Die Detektionseinrichtung 10 kann zusätzlich eine Beleuchtung 20 aufweisen.

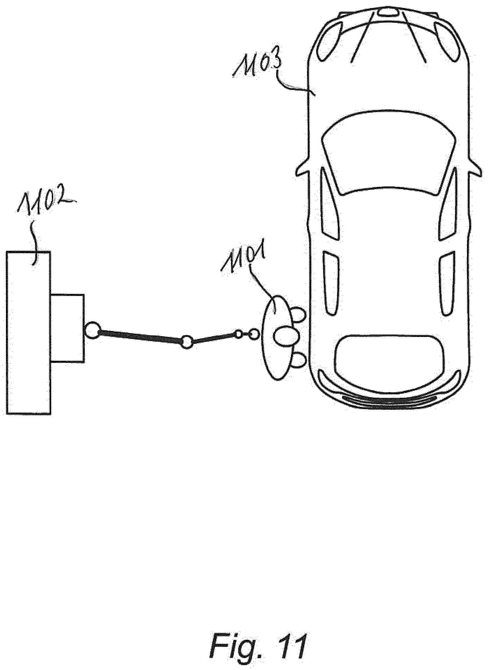

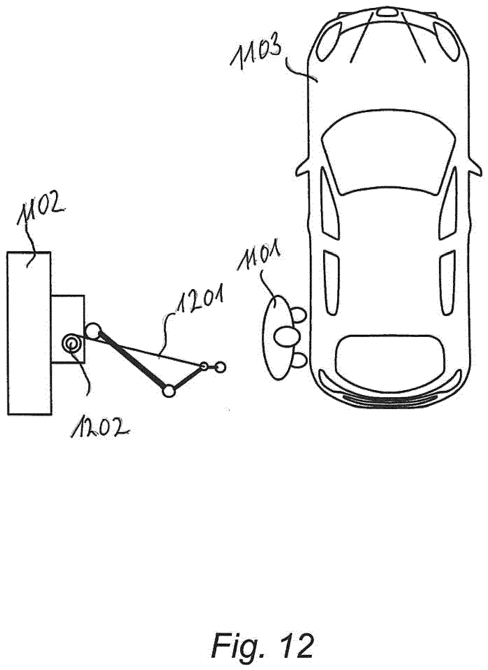

Die Figur 11 zeigt eine Person 1101, die in der Nähe einer Singularität des Laderoboters 1102 gequetscht wird. Da der Laderoboter 1102 in dieser speziellen Pose aufgrund der Singularität mit geringem Motormoment erhebliche Kräfte aufbringen kann, obwohl die maximale Positionierkraft in anderen Posen nicht überschritten wird, ist auch diese Situation aus Sicherheitsaspekten zu vermeiden, um die zugrundeliegende Aufgabe in aller Posen des Laderoboters 1102 zu lösen. Die Situation kann entstehen, wenn das Fahrzeug 1103 vom Laderoboter 1102 zu weit entfernt ist, aber die Steckposition durch das Anfahren der Singularität dennoch erreicht werden könnte. Dies kann durch ein Begrenzungsseil 1201 (Fig. 12) als bevorzugter Sicherheitseinrichtung vermieden werden, wobei das Begrenzungsseil 1201 zwischen der zweiten Achse und vierten Achse angebracht sein kann (siehe Figur 12). Die Länge des Begrenzungsseils 1201 ist zweckmäßigerweise derart bemessen, dass der Laderoboter 1102 nicht in die Nähe der Singularitäten kommen kann. Das Begrenzungsseil 1201 ist insbesondere derart dimensioniert, dass die Motorkräfte es nicht reißen lassen können. Damit in Ruhestellung das Begrenzungsseil 1201 nicht durchhängt, kann es mit einer (selbstaufwickelnden) Aufwickelrolle 1202 immer leicht gespannt sein. Durch die Sicherheitseinrichtung 1201 werden die Singularitäten vermieden und die maximale Positionierkraft kann in allen für den Laderoboter 1102 erreichbaren Pose eingehalten werden.

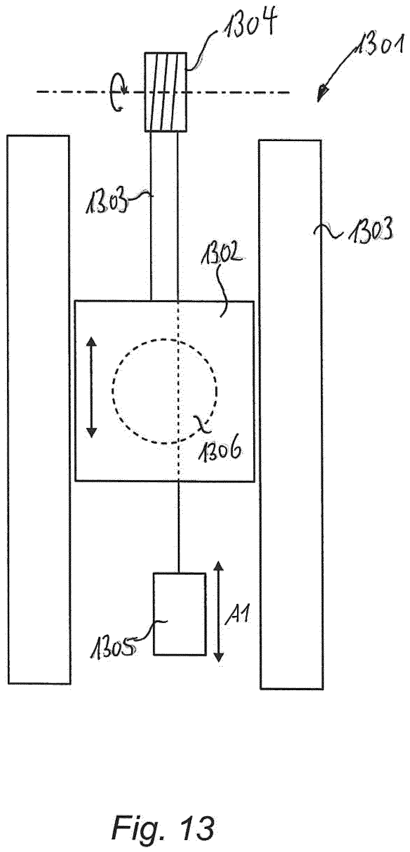

Die Figur 13 zeigt ein Beispiel einer Gewichtsausgleichsvorrichtung 1301. Ein Schlitten 1302 ist an einer Hubsäule 1303 höhenverstellbar gelagert. Zur Kompensation der Gewichtskraft des Schlitten und daran montierter Bauteile hängt der Schlitten 1302 mittels eines Seils 1303 und einer Umlenkrolle 1304 an einem Gegengewicht 1305. Dies bedeutet, dass die Hubsäule 1303 in diesem Fall in antagonistischer Bauweise zum Schlitten 1302 ein Gegengewicht 1305 aufweist, dass das Eigengewicht des Schlittens 1302 und gegebenenfalls auch das Eigengewicht des am Schlitten 1302 befestigten Roboterarms 1306 bzw. der Positioniervorrichtung 1306, insbesondere inklusive dem Verbinder kompensiert. Im Ergebnis muss der Antrieb für das Heben des Schlittens 1302 in vertikaler Richtung entgegen der Schwerkraftrichtung nicht die Gewichtskräfte von Schlitten 1302 und Roboterarm 1306 anheben, sondern der Antrieb für das Anheben lediglich die Stellkräfte zum Bewegen des Schlittens 1302 aufbringen, so dass vorteilhafterweise lediglich schwache Antriebe verwendet werden können, um so zur Lösung der Aufgabe einen sicheren Laderoboter bereitzustellen beigetragen wird.

Die Figur 14 zeigt eine vergrößerte Darstellung des in Figur 10 gezeigten Endeffektors, welcher den Verbinder 2 trägt. Die identischen Elemente sind in Figur 14 mit zu Figur 10 identischen Bezugszeichen versehen. Es ist gezeigt, dass die letzte Achse des Roboters, welches insbesondere die siebte Achse sein kann, als Schubachse ausgebildet ist, wodurch der Verbinder 2 linear entlang der Richtung S verlagerbar ist. Durch das Verlagern entlang der Richtung S kann der Verbinder 2 relativ zum komplementären Verbinder 3 verlagert werden, um beide zusammenzustecken und zu verbinden bzw. auseinander zu bewegen und zu trennen.

In der Anmeldung wird unter anderem hauptsächlich beschrieben, dass beispielsweise die ersten sechs Achsen des Roboterarms ungefährlich und nur die letzte bzw. siebte Achse des Roboterarms kräftig sein soll und nur von ihr Gefahren ausgehen können. Durch Logik und sicherheitsgerichtete Schaltungen kann diese siebte Achse abgesichert werden. Das bedeutet einen gewissen konstruktiven Aufwand. Die ersten vier Achsen können entweder durch entsprechende Getriebe oder Bremsen zur Aufnahme der Reaktionskräfte des Steckvorganges dimensioniert sein. Beides verursacht zusätzlichen Aufwand und Kosten. Es wurde bereits beschrieben, dass am Fahrzeug ein Verriegelungsmechanismus 1507 vorgesehen sein kann, welcher, sobald der Steckvorgang erfolgreich war, den eingesteckten Konnektor 2 bzw. Verbinder 2 im komplementären Verbinder 3 verriegelt und so z.B. Diebstahl verhindert. Hierzu gibt es fahrzeugseitig einen Aktor der über eine Bohrung den Konnektor blockiert. Anstelle eines einfachen Verriegelungsmechanismus könnte nun im Sinne einer weiterführenden Ausgestaltung der Erfindung ein angetriebener Aktor 1508 eingreifen, der den Konnektor 2 in das Fahrzeug einzieht und verriegelt, sobald die voreilenden Kontakte 1501b gegriffen haben. Diese Lösung erfordert zwar etwas mehr Aufwand im Fahrzeug, würde aber auch das manuelle Handling der doch schweren Ladekabel massiv erleichtern.

Der Roboter bräuchte dann die starke 7. Achse nicht und es könnte auf den ganzen Sicherheitsaufwand verzichtet werden und in Summe der Roboter kleiner dimensioniert werden. Denkbar wäre dieser Mechanismus konnektorseitig. Der Kraftschluss des Steckvorganges liefe nicht über den Roboter sondern auf ganz kurzem Wege über das Fahrzeug. Der Roboter bedürfte keinerlei Sicherheitsfunktionen, die dann ganz beim Fahrzeug wären. Die Sicherheitsnormen beim Fahrzeug sind einfacher als die beim Roboter zu erreichen, insbesondere da beispielsweise bereits vorhanden Sicherheitseinrichtungen, wie beispielsweise zum Schließen der Heckklappe oder zum motorisches Zuziehen der Türen mit genutzt werden könnten.

Die beschriebene, vom Stecker abgesetzte Kamera hat Aufwand in der Hand-Auge-Kalibrierung und eine Blindfahrt zur Folge, in der die Kamera das Inlet nicht mehr erkennen kann. Auf Störereignisse während der Blindfahrt, kann nicht immer reagiert werden. Durch den Aktor 1502 an der Aufnahme des Fahrzeugs, um den Verbinder automatisch von seiner Steckvorposition in die Steckendposition zu bewegen, wird eine Möglichkeit erzielt, die aufwändige siebte Achse, den Sicherheitsaufwand und die höhere Dimensionierung der übrigen Roboterachsen ganz zu vermeiden. Wesentlich ist, dass durch einen solchen Aktor 1502 die Steckkraft am Fahrzeug abgestützt wird und nicht über den Roboter. Auf diese Weise können Motor, Getriebe deutlich kleiner ausgelegt werden und auf die Bremse zur Aufnahme der Reaktionskräfte ganz verzichtet werden. Die Aufgabe der bisherigen kräftigen siebten Achse würde über den im Konnektor 1500 integrierten Aktor 1502 übernommen werden.

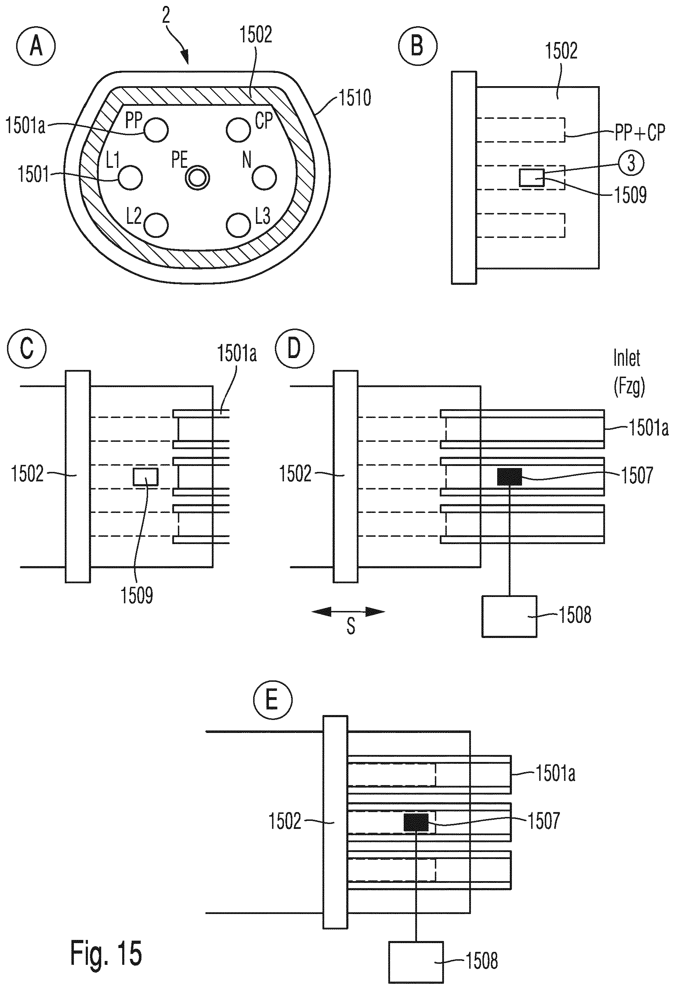

In den Figuren 15 a)-e) ist eine mögliche Lösung skizziert. Hierbei wird der Konnektor 2 in mindestens zwei bewegliche Teile aufgeteilt, zum einen in die Konnektorführung 1502 mit den Steckkontakten 1501 PP, CP, L1, L2, L3, PE und N. Die Steckkontakte 1501a (PE, PP und CP) sind dabei voreilende Kontakte und zum anderen in das Inlet 1510, das insoweit einen Sitz bildet, in dem die Konnektorführung 1502 in Steckrichtung S verstellbar gelagert ist. Diese beiden Teile können über einen Antrieb (Aktor 1508) parallel zu einander verschoben werden. Die komplette Konnektorführung 1502 wird in das Inlet 1510 des Fahrzeuges eingeschoben, solange bis eine Vorkontaktierung (PE oder PP) erreicht wird. Diese Vorkontaktierung wird ausgewertet und veranlasst, dass ein im Konnektor 2 befindlicher Antrieb (Aktor 1508) die Konnektorführung 1502 bis zum Anschlag vortreibt. Dort greift der Verriegelungsmechanismus bzw. das Verriegleungselement 1507 ein. Hierzu ist konnektorseitig eine Verriegelungsöffnung 1509 als komplementäres Verriegleungselement 1509 vorgesehen. Derselbe Motor (Aktor 1508) im Konnektor 2 zieht nun in entgegengesetzter Richtung die Konnektorführung 1502 wieder in dieselbe relative Lage zu den Konnektorkontakten. Da die Konnektorführung 1502 jedoch im mit dem Fahrzeug über den Verriegelungsmechanismus 1507, 1509 verriegelt ist und der Roboter nachgiebig ist, gleiten die Buchsen des Konnektors 2 über die Pins des Inlets 1502 am Fahrzeug, so dass alle Kontakte geschlossen werden und der Ladevorgang beginnen kann. Das Abziehen des Steckers läuft genau umgekehrt ab. Der Motor (Aktor 1508) schiebt die Kontakte auseinander bis zur knapp geöffneten Vorkontaktierung, die Verriegelung wird vom Fahrzeug gelöst, der Motor (Aktor 1508) bringt die Konnektorführung 1502 wieder in die Ausgangslage, der Roboter fährt in eine Grundposition. Dies ist eine mögliche Anordnung. Wichtig ist, dass eine gute Verbindung zwischen Konnektor und dem Inlet 1502 vor dem Schließen der Kontakte erreicht wird.

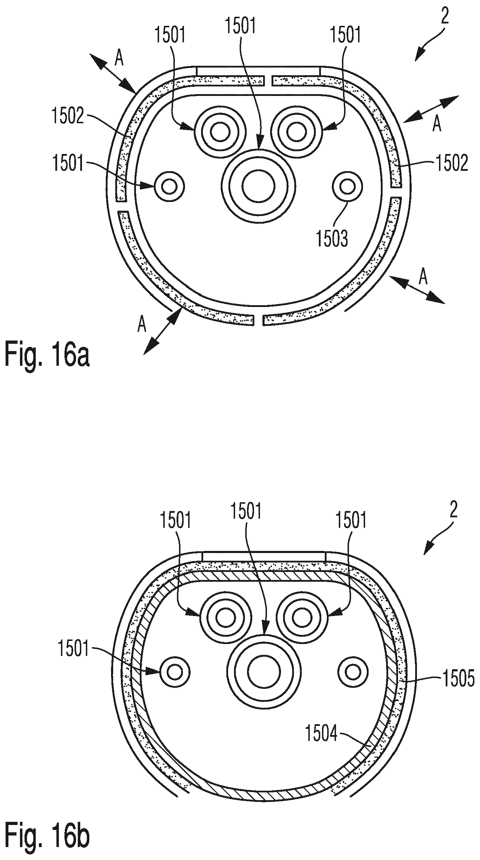

Wie in Figur 16a dargestellt kann alternativ die Konnektorführung 1502 des Verbinders 2 in zwei oder mehr Segmente geteilt werden, die jeweils entlang einer Abspreizrichtung A verlagerbar bzw. abspreizbar sind. Derart könnte sich die Konnektorführung 1502 im Inlet bzw. komplementären Verbinder einspreizen, so dass die mechanische Kontaktierung erfolgen könnte. In allen Alternativen sollte die Konnektorführung 1502 derart ausgebildet werden, dass sie sehr leichtgängig in das Inlet bzw. den komplementären Verbinder einführbar ist. Dies kann z.B. durch eine konische Form erfolgen. Der Einfügevorgang ist deutlich toleranter als die bisher vorliegenden engen Toleranzen beim manuellen Stecken. Das Einspreizen ins Inlet hätte weiter den Vorteil, dass durch den Einspreizvorgang die Konnektorführung 1502 im Inlet gut, insbesondere im Wesentlichen zentrisch, ausgerichtet wird. Dieser Mechanismus könnte unabhängig vom Ladeassistenten auch das manuelle Stecken deutlich erleichtern. Zudem würde eine Unabhängigkeit von fahrzeugseitigen Verriegelungsmechanismus bestehen.

Um die elektrischen Kontakte während des Steckvorganges besser zu führen, könnte, wie in Figur 16b aufgezeigt, in Abwandlung zur der Ausführung gemäß Figur 16a die Konnektorführung@@1502 in eine innere Konnektorführung 1504 und eine äußere Konnektorführung 1505 aufgeteilt werden, die über einen im Konnektor befindlichen Antrieb parallel zu einander verschoben werden können. Die elektrischen Kontakte bewegen sich dann zusammen mit der inneren Konnektorführung 1504. Soweit das Inlet annähernd luftdicht ist, kann der Konnektor den Innenraum des Inlet evakuieren, so dass der Konnektor über den Unterdruck in das Inlet gleitet.

Eine Kamera1503, die in den Konnektor 2 integriert ist, würde eine Blindfahrt vermeiden. Falls die Baugröße von kleinen Kameras 1503 eine Integration in den Konnektor 1500 nicht zulassen, könnte das Bild über Lichtleiter auf eine Kamera (analog einer Endoskopie) übertragen werden, die an einer platzunkritischen Stelle am Roboter angebracht ist. Eine Beleuchtung wäre entweder ergänzend oder ersetzend ebenfalls über Lichtleiter möglich. Die Verwendung bzw. das Anordnen der Kamera 1503 ist von den weiteren Merkmalen des Verbinders unabhängig und kann in jeder Ausführungsform eines erfindungsgemäßen Verbinder als optionales Merkmal vorgesehen sein.

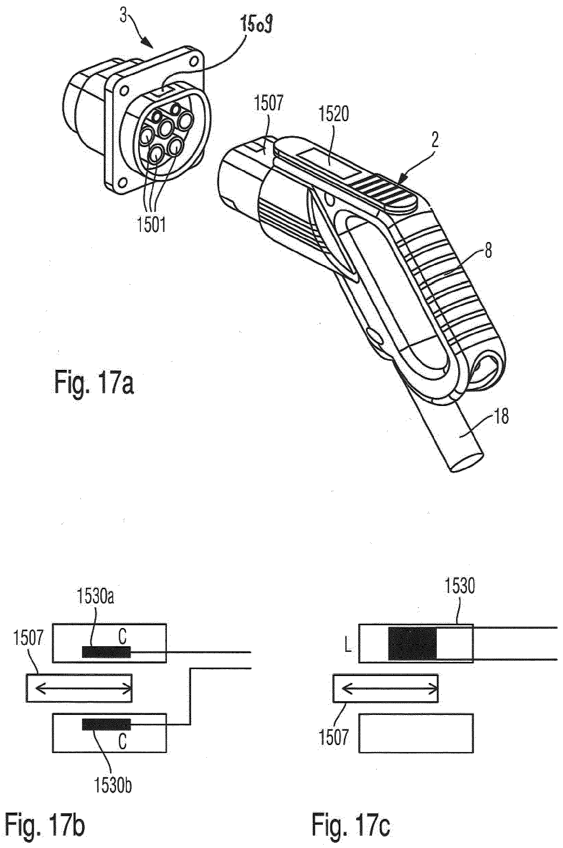

Die Figur 17a zeigt einen Verbinder 2 mit einem Handgriff 8, der ausgelegt ist manuell oder mittels eines Roboters mit einem komplementären Verbinder 3 elektrisch verbunden zu werden. Der komplementäre Verbinder 3 kann an einem Fahrzeug angeordnet sein, um dieses mit elektrischer Energie zu versorgen, welche über das Ladekabel 18 an dem Verbinder 2 bereitgestellt wird. Der Verbinder 2 weist ein Verriegelungselement 1507 (z.B. einen Bolzen 1507) auf, welches ausgelegt ist, in ein komplementäres Verriegelungselement 1509 (z.B. eine Öffnung 1509) einzugreifen. Beim Abbrechen der Ladevorgangs des Fahrzeugs muss die Verriegelung der Elemente 1507 und 1509 aufgehoben sein, um den Verbinder 2 vom Fahrzeug zu lösen und das Fahrzeug wegfahren zu können. Das Initiieren der Entriegelung über die Robotersteuerung und/oder die Bordelektronik des Fahrzeugs und die Überprüfung des Entriegelungszustandes kann zeitaufwendig sein. Das Entriegeln kann bevorzugt auch über einen Schalter 1520 manuell initiiert werden. Bevorzugt kann am Verbinder 2 und/oder am komplementären Verbinder 3 ein Sensor 1530 angeordnet sein, der das Öffnen der Verriegelung messtechnisch erfasst. Im europäischen Raum muss das Fehlen des Verriegelungsbolzens 1507 in der Bohrung 1509 am Verbinder 2 erfasst werden, in den USA oder China muss die Betätigung des äußeren Arretierungshebels erfasst werden. Die Erfassung kann dabei z.B. optisch, konduktiv, kapazitiv oder induktiv erfolgen.

Figur 17b zeigt eine bevorzugte Anordnung zum kapazitiven Erfassen des Verriegelungszustands. Dort ist der Bolzen 1507 zwischen den zwei Teilen 1530a, 1530b eines kapazitiven Sensors hin und her verlagerbar.

Figur 17c zeigt eine bevorzugte Anordnung zum induktiven Erfassen des Verriegelungszustands. Dort ist der Bolzen 1507 entlang eines induktiven Sensors 1530 hin und her verlagerbar.

Die nachfolgend beschriebene Ausführungsform des Verbinders ist nicht Teil der vorliegenden Erfindung:

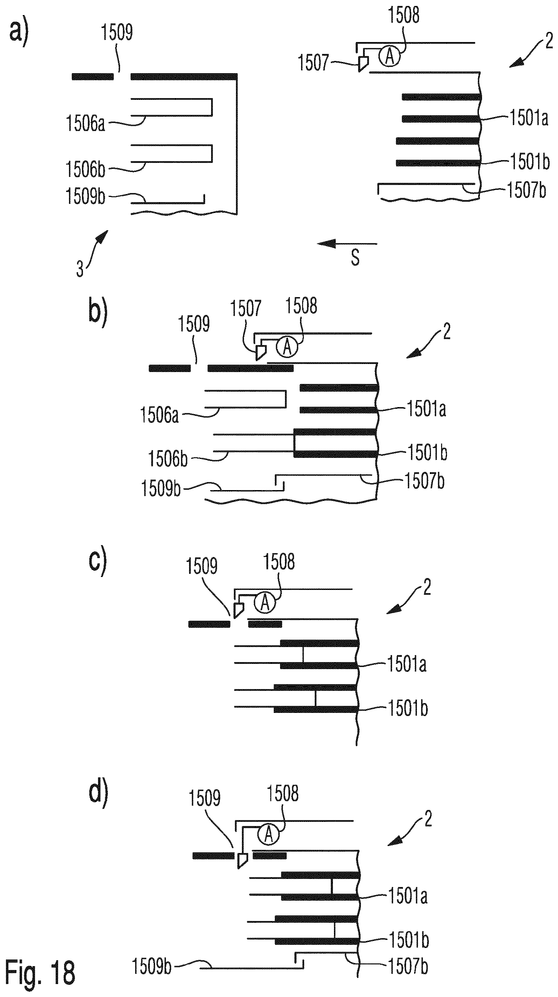

In den Figuren 18 a)-d) ist bevorzugte Ausführung Anordnung eines Verbinders 2 und eines komplementären Verbinders 3 gezeigt. Figur 18a zeigt beide Verbinder voneinander getrennt. Verbinder 2 weist zumindest zwei elektrische Kontakte 1501, 1501a auf, wobei der Kontakt 1501a entlang der Steckrichtung S dem anderen Kontakt 1501 voreilt bzw. vorsteht. Des Weiteren weist der Verbinder 2 ein Verriegelungselement 1507 auf, welches von einem Aktor betätigbar ist, wobei der Aktor motorisch getrieben sein kann oder manuell betätigbar bzw. getrieben ist. Der Verbinder 2 auch einen weiteren Aktor 1507b aufweisen, welcher ausgelegt ist mit einem komplementären Aktor 1509b des komplementären Verbinders 3 in Eingriff zu gelangen, um beim aktuieren den Verbinder 2 relativ zum komplementären Verbinder 3 entlang der Steckrichtung zu verlagern. Der komplementäre Verbinder 3 weist elektrische Kontakte 1506a, 1506b auf, welche durch das zusammenstecken beider Verbinder mit den zugeordneten Kontakten des Verbinders 2 elektrisch kontaktieren. Des Weiteren weist der komplementäre Verbinder 3 ein komplementäres Verriegelungselement 1509 auf, welches ausgelegt ist mit dem Verriegelungselement 1507 zu verriegeln.

Figur 18b zeigt beide Verbinder 2, 3 in der Steckvorposition, wobei der voreilende Kontakt 1501a mit dem zugeordneten Kontakt 1506b elektrisch kontaktiert, so dass eine Auswertung durch die Robotersteuerung, die Ladeeinrichtungssteuerung und/oder die Bordelektronik erfolgen kann, ob die Steckvorposition erreicht wurde. In der Steckvorposition sind auch der weitere Aktor 1507b des Verbinders 2 und der komplementäre Aktor 1509b des komplementären Verbinders 3 in Eingriff gelangt, so dass durch aktuieren eine Kraft entlang der Steckrichtung S aufgebracht werden kann. Das Aktuieren kann insbesondere motorisch durch einen nicht dargestellten Motor erfolgen, der entweder in Verbinder 2 oder im komplementären Verbinder 3 angeordnet sein kann.

Figur 18c zeigt die Anordnung der Verbinder 2, 3 währen des Aktuierens, wobei beide Verbinder 2, 3 motorisch zueinander bewegt werden ,um zur Steckendposition zu gelangen, die in Figur 18d gezeigt ist. In der Steckendposition sind die elektrischen Kontakte des Verbinders 2 und des komplementären Verbinders 3 vollständig miteinander kontaktiert und des Verriegelungselement 1507 des Verbinders 2 ist mit dem komplementären Verriegelungselement 1509 des komplementären Verbinders 3 verriegelt, so dass der Ladevorgang durchgeführt werden kann.

### Bezugszeichenliste

- 1: Laderoboter / Ladeeinrichtung
- 2: Ladebuchse / Verbinder
- 3: Ladestecker / komplementärer Verbinder
- 4: Fahrzeug
- 5: Endeffektor
- 6: Positioniervorrichtung
- 7: Abtriebselement
- 8: Halterung / Halter
- 8a: Handgriff
- 9: Zustelleinrichtung
- 10: Detektionseinrichtung
- 11: Höhenverstellung
- 12: Steckerhalter
- 13: Positionierungsmittel
- 13a: komplementäres Positionierungsmittel
- 14: Gestell
- 15: Zustelleinheit
- 16: Zustellelement
- 17: Zustelleinheit
- 18: Ladekabel
- 19: Abstandssensor
- 20: Beleuchtung
- 21: Anschluss
- 22: Anschluss
- 23: Ausgleichselement
- 24: Arretierung
- 25: Sockel
- 26: Hülse
- 29a: Glied
- 29b: Glied
- 30: Basis
- 100: Sicherheitssteuerung
- 101: physikalische Größe
- 102: Sicherheitssensor
- 103: Kamera
- 104: Kommunikationskanal
- 105: Sicherheitssteuereinrichtung
- 106: Robotersteuerung
- 107: Bildverarbeitung
- 108: Motorsteller
- 109: Drehmomentenabschaltung
- 110: siebter Motor
- 111a: Bremse
- 111b: Bremse
- 111c: Bremse
- 111d: Bremse
- 112: Bremsensteuerung
- 113: Kommunikationskanal

- 200: Sicherheitssteuerung
- 201: physikalische Größe
- 202: Sicherheitssensor
- 203: Kamera
- 204: Kommunikationskanal
- 206: Robotersteuerung
- 207: Bildverarbeitung
- 208: Motorsteller
- 210: siebter Motor
- 211a: Bremse
- 211b: Bremse
- 211c: Bremse
- 211d: Bremse
- 214: Sicherheitsrelais
- 300: Leitung
- 301: Microcontroller
- 302: Motor
- 303: Bremse
- 304: Antrieb
- 305: Sensoranordnung
- 306: Antrieb
- 307: Zusatzcontroller
- 308: Computermodule
- 314: Sicherheitsrelais

- 401: Ladestecker, Verbinder
- 402: komplementärer Verbinder
- 403: Steckkontakt für den Schutzleiter
- 404: komplementärer Steckkontakt für den Schutzleiter
- 405: Steckkontakt für den Stromversorgungsleiter
- 406: komplementärer Steckkontakt für den Stromversorgungsleiter
- 407: Steckkontakt für den Kommunikationsleiter
- 408: komplementärer Steckkontakt für den Kommunikationsleiter

- 801: Ladekabel
- 802: Stromzange

- 901: Frequenzgenerators
- 902: Koaxialleitung
- 903: Sendeelektrode
- 904: Ladekabel
- 905: Empfangselektrode
- 906: Ladestecker
- 907: Auto
- 908: Stromnetz
- 909: Hochpassfilter
- 910: Robotersteuerung

- 1101: Person
- 1102: Laderoboters
- 1103: Fahrzeug

- 1201: Begrenzungsseil
- 1202: Aufwickelrolle

- 1301: Gewichtsausgleichsvorrichtung
- 1302: Schlitten
- 1303: Hubsäule / Seil
- 1304: Umlenkrolle
- 1305: Gegengewicht
- 1306: Roboterarm

- 1500: Konnektor
- 1501: Steckkontakt
- 1501a: vorauseilender Steckkontakt
- 1502: Konnektorführung
- 1503: Kamera
- 1504: innere Konnektorführung
- 1505: äußere Konnektorführung
- 1506a: Steckkontakt
- 1506b: Steckkontakt
- 1507: Verriegelungselement
- 1507b: weiterer Aktor
- 1508: Aktor / Antrieb
- 1509: komplementäres Verriegelungselement
- 1509: weiterer komplementärer Aktor
- 1510: Inlet
- 1520: Schalter
- 1530: Sensor
- 1530a: Teil des Sensors 1530

## Patentansprüche

1. Roboter (1) zum automatischen Laden oder Betanken eines Fahrzeugs (4), aufweisend:
- einen Roboterarm (1306);
- einen an dem Roboterarm (1306) angeordneten Endeffektor (5) und
- einen am Endeffektor (5) angeordneten Verbinder (2),
wobei der Roboterarm mehrere Glieder (29) aufweist, um den Endeffektor (5) unter Aufbringung einer maximalen Positionierkraft im Raum zu positionieren,
wobei der Roboterarm ein oder mehrere Schubgelenke aufweist, wobei zumindest ein Schubgelenk einen zugeordneten Schubantrieb aufweist,
wobei der Verbinder (2) zumindest bereichsweise in einen komplementären Verbinder (3) eines Fahrzeugs (4) unter Aufbringung einer maximalen Steckkraft steckbar ist,
wobei die maximale Steckkraft größer ist als die maximale Positionierkraft,
wobei die Glieder (29) miteinander über ein oder mehrere Positioniergelenke (A1-A4) und zugeordnete Positionierantriebe relativ zueinander verstellbar sind, wobei der Schubantrieb von demjenigen Motor des Roboterarms (1306) gebildet wird, der das am distalen Ende des Roboterarms (1306) letzte Gelenk bewegt,
wobei der Roboter ausgelegt und konfiguriert ist, den Roboterarm mittels der Positionierantriebe von einer Parkposition in eine Steckvorposition zu verfahren und den Roboterarm mittels des Schubantriebs von der Steckvorposition in eine Steckendposition zu verfahren,
wobei ein den Verbinder (2) verstellbar tragender Halter (8) mit dem am distalen Ende vorletzten Glied des Roboterarms (1306) verbunden ist und mittels des Schubantriebs der am Halter (8) angeordnete Verbinder (2) aus der Steckvorposition in die Steckendposition bewegbar ist.

2. Roboter (1) gemäß Anspruch 1, wobei die maximale Positionierkraft kleiner als 210 N, bevorzugt kleiner als 160 N, weiter bevorzugt kleiner als 110 N und insbesondere kleiner als 65 N ist.

3. Roboter (1) gemäß Anspruch 1 oder 2, wobei die maximale Steckkraft größer ist als die maximale Positionierkraft mal einem Faktor 1,5, bevorzugt 2,0, weiterbevorzugt 4,0 und insbesondere 8,0.

4. Roboter nach Anspruch 1, wobei der Schubantrieb als Aktor im oder am Verbinder (2) des Roboters ausgebildet ist.

5. Roboter (1) gemäß einem der Ansprüche 1 bis 3, wobei zumindest ein Schubgelenk einen zugeordneten komplementären Aktor im oder am Verbinder (2) des Roboters aufweist, der ausgebildet ist durch einen Aktor des komplementären Verbinders betätigt zu werden.

6. Roboter (1) gemäß einem der vorherigen Ansprüche, wobei der Verbinder und der komplementäre Verbinder elektrische Verbinder sind.

7. Roboter (1) gemäß einem der vorherigen Ansprüche, weiter aufweisend:
- eine Robotersteuervorrichtung (106), welche ausgelegt ist den oder die Positionierantrieb(e) und/oder den Schubantrieb automatisch zu steuern bzw. regeln, dass der Verbinder mit dem komplementären Verbinder automatisch kontaktierbar ist.

8. Roboter (1) gemäß einem der vorherigen Ansprüche, wobei der Schubantrieb in einer Kopplungsvorrichtung angeordnet oder integriert ist, die Verbinder (2) trägt und die am distalen Ende des Roboterarms angeordnet ist.

9. Roboter (1) gemäß einem der Ansprüche 7 bis 8, wobei die Robotersteuervorrichtung (106) ausgebildet und eingerichtet ist, während einer durch den Schubantrieb ausgeführten Verlagerung des Verbinders (2) aus der Steckvorposition in die Steckendposition die Positioniergelenke (A1-A6) gegen Verstellen zu sperren.

10. Roboter (1) gemäß Anspruch 9, wobei zumindest eines der Positioniergelenke (A1-A6) des Roboterarms (1306) eine zugeordnete Bremse (211a-d) aufweist, die in einer geschlossenen Stellung ein Verstellen des zugeordneten Positioniergelenks bremst, wobei jede Bremse (211a-d) mittels der Robotersteuervorrichtung (106) ansteuerbar ist, um einer geöffneten Stellung in die geschlossene Stellung zu schalten oder aus der geschlossenen Stellung in die geöffnete Stellung zu schalten.

11. Roboter (1) gemäß Anspruch 9 oder 10, wobei zumindest eines der Positioniergelenke (A1-A6) des Roboterarms (1306) eine zugeordnete Sperre aufweist, die in einer geschlossenen Stellung ein Verstellen des zugeordneten Positioniergelenks sperrt, wobei jede Sperre mittels der Robotersteuervorrichtung (106) ansteuerbar ist, um einer geöffneten Stellung in die geschlossene Stellung zu schalten oder aus der geschlossenen Stellung in die geöffnete Stellung zu schalten.

12. Roboter (1) gemäß einem der Ansprüche 9 bis 11, wobei das Bremsen oder das Sperren gegen Verstellen an einem Abtriebsglied eines das jeweilige Positioniergelenk (A1-A6) bewegende Gelenkgetriebes erfolgt.

13. Roboter (1) gemäß einem der Ansprüche 9 bis 12, wobei zumindest einer der von der Robotersteuerung (106) angesteuerten Bremse (211a-d) oder Sperre ein Sicherheitsrelais zugeordnet ist, das eingerichtet ist, die Bremse (211a-d) oder Sperre in ihrem in die geschlossene Stellung angesteuerten Zustand in sicherer Technik in ihrer geschlossenen Stellung zu halten.

## Claims

1. Robot (1) for automatically charging or refuelling a vehicle (4), comprising:
- a robot arm (1306);
- an end effector (5) arranged on the robot arm (1306) and
- a connector (2) arranged on the end effector (5),
wherein the robot arm has several links (29) in order to position the end effector (5) in space with application of a maximum positioning force,
wherein the robot arm has one or more prismatic joints, wherein at least one prismatic joint has an associated linear actuator,
wherein the connector (2) can be inserted at least in regions into a complementary connector (3) of a vehicle (4) with application of a maximum insertion force, wherein the maximum insertion force is greater than the maximum positioning force,
wherein the links (29) can be adjusted together relative to each other via one or more positioning joints (A1-A4) and associated positioning drives,
wherein the linear actuator is formed by the motor of the robot arm (1306) that moves the last joint at the distal end of the robot arm (1306),
wherein the robot is designed and configured to move the robot arm by means of the positioning drives from a park position to a preliminary insertion position and to move the robot arm by means of the linear actuator from the preliminary insertion position to an end insertion position,
wherein a holder (8) adjustably supporting the connector (2) is connected to the penultimate link of the robot arm (1306) at the distal end and the connector (2) arranged on the holder (8) can be moved from the preliminary insertion position to the end insertion position by means of the linear actuator.

2. Robot (1) according to Claim 1, wherein the maximum positioning force is less than 210 N, preferably less than 160 N, further preferably less than 110 N and in particular less than 65 N.

3. Robot (1) according to Claim 1 or 2, wherein the maximum insertion force is greater than the maximum positioning force by a factor of 1.5, preferably 2.0, further preferably 4.0 and in particular 8.0.

4. Robot according to Claim 1, wherein the linear actuator is in the form of an actuator in or on the connector (2) of the robot.

5. Robot (1) according to any of Claims 1 to 3, wherein at least one prismatic joint has an associated complementary actuator in or on the connector (2) of the robot, this actuator being designed to be operated by an actuator of the complementary connector.

6. Robot (1) according to any of the preceding claims, wherein the connector and the complementary connector are electrical connectors.

7. Robot (1) according to any of the preceding claims, further comprising:
- a robot control device (106), which is designed for automatic open-loop or closed-loop control of the positioning drive(s) and/or the linear actuator such that the connector can be automatically contact-connected to the complementary connector.

8. Robot (1) according to any of the preceding claims, wherein the linear actuator is arranged or integrated in a coupling device which supports the connector (2) and is arranged at the distal end of the robot arm.

9. Robot (1) according to either of Claims 7 and 8, wherein the robot control device (106) is designed and configured to lock the positioning joints (A1-A6) against adjustment during movement of the connector (2) from the preliminary insertion position to the end insertion position performed by the linear actuator.

10. Robot (1) according to Claim 9, wherein at least one of the positioning joints (A1-A6) of the robot arm (1306) has an associated brake (211a-d), which brakes adjustment of the associated positioning joint in a closed position, wherein each brake (211a-d) can be actuated by means of the robot control device (106) in order to switch from an open position to the closed position or to switch from the closed position to the open position.

11. Robot (1) according to Claim 9 or 10, wherein at least one of the positioning joints (A1-A6) of the robot arm (1306) has an associated lock, which blocks adjustment of the associated positioning joint in a closed position, wherein each lock can be actuated by means of the robot control device (106) in order to switch from an open position to the closed position or to switch from the closed position to the open position.

12. Robot (1) according to any of Claims 9 to 11, wherein braking or blocking against adjustment takes place at an output link of a joint transmission moving the respective positioning joint (A1-A6).

13. Robot (1) according to any of Claims 9 to 12, wherein at least one of the brake (211a-d) or lock actuated by the robot controller (106) has an associated safety relay, which is configured to keep the brake (211a-d) or lock, in the state in which it is actuated to the closed position, in its closed position using dependable technology.

## Revendications

1. Robot (1) destiné au chargement ou à l'avitaillement automatique d'un véhicule (4), comprenant :
- un bras de robot (1306) ;
- un effecteur terminal (5) disposé sur le bras de robot (1306) et
- un connecteur (2) disposé sur l'effecteur terminal (5),
le bras de robot comprenant une pluralité d'éléments (29) pour positionner l'effecteur terminal (5) dans l'espace tout en appliquant une force de positionnement maximale, le bras de robot possédant une ou plusieurs articulations de poussée, au moins une articulation de poussée comportant un mécanisme d'entraînement de poussée associé,
le connecteur (2) pouvant être enfiché au moins dans certaines zones dans un connecteur complémentaire (3) d'un véhicule (4) tout en appliquant une force d'enfichage maximale,
la force d'enfichage maximale étant supérieure à la force de positionnement maximale,
les éléments (29) pouvant être positionnés les uns par rapport aux autres par le biais d'une ou plusieurs articulations de positionnement (A1-A4) et de mécanismes d'entraînement de positionnement associés,
le mécanisme d'entraînement de poussée étant formé par le moteur du bras de robot (1306) qui déplace la dernière articulation à l'extrémité distale du bras de robot (1306),
le robot étant conçu et configuré pour déplacer le bras de robot au moyen des mécanismes d'entraînement de positionnement d'une position de stationnement à une position de pré-enfichage et pour déplacer le bras de robot au moyen du mécanisme d'entraînement de poussée de la position de pré-enfichage à une position finale d'enfichage,
un support (8) portant le connecteur (2) de manière réglable étant relié à l'avant-dernier élément du bras de robot (1306) à l'extrémité distale, et le connecteur (2) disposé sur le support (8) pouvant être déplacé de la position de pré-enfichage à la position finale d'enfichage au moyen du mécanisme d'entraînement de poussée.

2. Robot (1) selon la revendication 1, dans lequel la force de positionnement maximale est inférieure à 210 N, de préférence inférieure à 160 N, plus préférentiellement inférieure à 110 N et en particulier inférieure à 65 N.

3. Robot (1) selon la revendication 1 ou 2, dans lequel la force d'enfichage maximale est supérieure à la force de positionnement maximale multipliée par un facteur de 1,5, de préférence 2,0, plus préférentiellement 4,0 et en particulier 8,0.

4. Robot selon la revendication 1, dans lequel le mécanisme d'entraînement de poussée est conçu sous forme d'actionneur dans ou sur le connecteur (2) du robot.

5. Robot (1) selon l'une des revendications 1 à 3, dans lequel au moins une articulation de poussée comporte, dans ou sur le connecteur (2) du robot, un actionneur complémentaire associé qui est conçu pour être actionné par un actionneur du connecteur complémentaire.

6. Robot (1) selon l'une des revendications précédentes, dans lequel le connecteur et le connecteur complémentaire sont des connecteurs électriques.

7. Robot (1) selon l'une des revendications précédentes, comprenant en outre :
- un dispositif de commande de robot (106), qui est conçu pour commander ou réguler automatiquement le ou les mécanismes d'entraînement de positionnement et/ou le mécanisme d'entraînement de poussée, de telle sorte que le connecteur puisse être automatiquement mis en contact avec le connecteur complémentaire.

8. Robot (1) selon l'une des revendications précédentes, dans lequel le mécanisme d'entraînement de poussée est disposé ou intégré dans un dispositif d'accouplement qui porte le connecteur (2) et qui est disposé à l'extrémité distale du bras de robot.

9. Robot (1) selon l'une des revendications 7 à 8, dans lequel le dispositif de commande de robot (106) est conçu et configuré pour bloquer les articulations de positionnement (A1-A6) contre tout réglage pendant un déplacement du connecteur (2) effectué par le mécanisme d'entraînement de poussée de la position de pré-enfichage à la position finale d'enfichage.

10. Robot (1) selon la revendication 9, dans lequel au moins l'une des articulations de positionnement (A1-A6) du bras de robot (1306) comporte un frein (211a-d) associé qui, dans une position fermée, freine le réglage de l'articulation de positionnement associée, chaque frein (211a-d) pouvant être commandé par le dispositif de commande de robot (106) pour passer d'une position ouverte à la position fermée ou de la position fermée à la position ouverte.

11. Robot (1) selon la revendication 9 ou 10, dans lequel au moins l'une des articulations de positionnement (A1-A6) du bras de robot (1306) comporte un verrou associé qui, dans une position fermée, bloque le réglage de l'articulation de positionnement associée, chaque verrou pouvant être commandé par le dispositif de commande de robot (106) pour passer d'une position ouverte à la position fermée ou de la position fermée à la position ouverte.

12. Robot (1) selon l'une des revendications 9 à 11, dans lequel le freinage ou le blocage contre le réglage s'effectue sur un élément d'entraînement d'un engrenage d'articulation qui déplace l'articulation de positionnement (A1-A6) respective.

13. Robot (1) selon l'une des revendications 9 à 12, dans lequel au moins l'un des freins (211a-d) ou verrous commandés par le dispositif de commande de robot (106) est associé à un relais de sécurité qui est configuré pour maintenir le frein (211a-d) ou le verrou à sa position fermée, dans un état commandé en position fermée, au moyen d'une technique sécurisée.
